Europäisches Patentamt

European Patent Office

Office européen des brevets

(11) Publication number:
**0 357 038**
**A2**

## EUROPEAN PATENT APPLICATION

(21) Application number: 89116011.1

(22) Date of filing: 30.08.89

(51) Int. Cl.5: **H04L 12/40 , H04L 5/14**

(30) Priority: 31.08.88 JP 218031/88
31.08.88 JP 218032/88
30.09.88 JP 247799/88
28.12.88 JP 328815/88

(43) Date of publication of application:
**07.03.90 Bulletin 90/10**

(84) Designated Contracting States:
**DE FR GB**

(71) Applicant: **TOSHIBA LIGHTING & TECHNOLOGY CORPORATION**
**4-28, Mita 1-chome**
**Minato-ku Tokyo(JP)**

(72) Inventor: **Yamazaki, Kyoji**
**1502-2-509, Shinyoshida-cho**
**Kohoku-ku Yokohama-shi(JP)**
Inventor: **Morita, Masayuki**
**1-3-3-1108, Namiki**
**Kanazawa-ku Yokohama-shi(JP)**
Inventor: **Watanabe, Yuichi**
**3-23, Yasuura-cho**
**Yokosuka-shi Kanagawa-ken(JP)**
Inventor: **Sasai, Toshihiko**
**8-3, Yanagi-cho**
**Kanazawa-ku Yokohama-shi(JP)**

(74) Representative: **Henkel, Feiler, Hänzel & Partner**
**Möhlstrasse 37**
**D-8000 München 80(DE)**

(54) Signal transmission system and method, in which operation response time can be shortened.

(57) A signal transmission system of this invention is constituted by a central processing apparatus (10) for transmitting a transmission signal of predetermined bipolar pulses including an address signal, a start signal, and a control signal, a plurality of terminals (14₁, 14₂, ...) for receiving the transmission signal from the central processing apparatus (10), and a pair of transmission lines (12) for coupling the plurality of terminals and the central processing apparatus (10). In this signal transmission system, the central processing apparatus (10) sends a return request signal to the terminals (14₁, 14₂, ...) in a voltage mode. The central processing apparatus (10) detects a change in current mode signal transmitted from the terminals (14₁, 14₂, ...). The central processing apparatus (10) inverts, in accordance with the detected current mode signal, the return request signal in the voltage mode every time the current mode signal changes.

FIG. 1

## Signal transmission system and method in which operation response time can be shortened

The present invention relates to a signal transmission system and method, in which a central processing apparatus and a plurality of terminals are connected through a pair of transmission lines, a transmission signal from the central processing apparatus to each terminal is sent in a voltage mode, and data from each terminal to the central processing apparatus is sent in a current mode and, more particularly, to a signal transmission system and method, in which the central processing apparatus monitors and controls a load connected to each terminal, and an operation response time can be shortened.

As a conventional remote control signal transmission system, techniques described in, e.g., Published Examined Japanese Patent Application No. 61-3155, Published Unexamined Japanese Patent Application No. 59-148452, Published Examined Japanese Patent Application No. 61-4239, Published Unexamined Japanese Patent Application No. 59-80044, and "Full Two-wire Type Remote Control Wiring Equipment by New Multiple Transmission", Technical Reports No. 34 (Feb. 1987) of Matsushita Electric Works, Ltd., Toshiyuki MASUDA, Osamu YAMADA, and Akihiko HAMADA have been adopted. In these transmission system, for example, a central processing apparatus and a plurality of terminals are connected through a pair of transmission lines. The central processing apparatus transmits short pulses for address signals and control signals, and long pulses for monitor signals to the terminals. In each of the plurality of terminals, a series circuit of a current limiting resistor and a switch element is connected in parallel with the transmission line. During a transmission period of the long pulses for the monitor signals, the switch element is opened/closed in accordance with the monitor content, and a change in current caused by the opening/closing operation is detected by the central processing apparatus.

· Like in the conventional signal transmission system, when signal transmission from each terminal to the central processing apparatus is performed in a current mode in which each terminal changes a sink current, the central processing apparatus can detect the change in current by converting the current into a voltage using a detection resistor, or the like. However, this signal current flows only between a source terminal and the central processing apparatus. Thus, this monitor signal or the like cannot be detected at a position other than that between the source terminal and the central processing apparatus.

Therefore, in the conventional signal transmission system, when a monitor display panel for detecting a monitor signal sent from each terminal and monitoring and displaying a state of a load is connected, it must be connected at the input side of all the terminals (near the central processing apparatus) in order to detect monitor signals from all the terminals. For this reason, the installation position of the monitor display panel is limited, resulting in poor utility.

Alternatively, the central processing apparatus detects monitor data or the like in the current mode from each terminal, converts it into a signal for controlling a display of the monitor display panel, and transmits the signal, so that the monitor display panel can be connected at an arbitrary position on the transmission line. In this case, however, a transmission speed is decreased by a control time of the monitor display panel, and the load of the central processing apparatus is increased.

In the conventional signal transmission system, since each terminal can only detect a signal from its downstream-side terminal, each terminal cannot detect signals from all other terminals. In the conventional signal transmission system, when the central processing apparatus is activated by a given terminal by random transmission (slave activation), the activation terminal cannot discriminate the presence/absence of output signals from its upstream-side terminals, i.e., an occupied state of the transmission line or collision of the activation operations. Therefore, the conventional system is not suitable for random transmission.

In the case of master activation (central activation), when a terminal (slave station) which returned data confirms whether or not the central processing apparatus (master station) correctly received the return data, it must receive an answer signal from the central processing apparatus, and the transmission speed is decreased accordingly.

A plurality of terminals are connected in parallel with a central processing apparatus. When one of these terminals performs a current return operation, since a state approximate to short-circuiting occurs, a voltage drop occurs. Thus, the remaining terminals connected to transmission lines immediately suffer from the voltage drop since they are connected in parallel with the transmission lines. In practice, however, the voltage drop must be suppressed as much as possible (since the central processing apparatus must always perform sufficient power supply to terminals). For example, a voltage drop must be suppressed to -1 V if a fundamental voltage = +24 V. An actual transmission voltage is not a perfectly stable voltage, and is often influenced by external noise or the like. Therefore, it is difficult for each terminal to discriminate the voltage drop in terms of a circuit configuration, resulting low reliability.

In conventional random transmission, CSMA/CD is normally performed. In this method, when activation terminals simultaneously send data to the central processing apparatus, the data collide against each other. After data collision, each terminal stands by for a time according to the self address, and then performs a reactivation operation. Due to this standby time, especially upon data collision, a response time is undesirably prolonged.

After the central processing apparatus (master station) detects data collision, it may perform polling of all the terminals. However, this operation also takes much time.

The signal transmission system with the above arrangement can always perform stable power supply to sections to be controlled even in a return operation of a monitor signal, and always stably charges the sections to be controlled.

In the conventional signal transmission system, however, a control section requires a sync signal generator for synchronizing transmission signals, and each section to be controlled also requires a sync signal generator for synchronizing reception signals. Such a sync signal generator is expensive. If the number of sections to be controlled is increased, the total cost of the system is increased accordingly. If the sync signal generators are not arranged, transmission signals from the control section cannot be accurately and quickly confirmed at each section to be controlled, thus disturbing desired control.

It is an object of the present invention to provide a signal transmission system and method, in which a monitor display panel can be connected at an arbitrary position of a transmission line, a central processing apparatus can efficiently read addresses and data of activation terminals in a random signal transmission system, especially when signal collision occurs, so that an operation response time can be shortened, and a control section can accurately and quickly control sections to be controlled while decreasing the number of sync signal generators.

According to an object of the present invention, there is provided a signal transmission system comprising a main processing apparatus for transmitting a transmission signal of predetermined bipolar pulses, which includes an address signal, a start signal, and a control signal, a pair of transmission lines connected to the main processing apparatus, and a plurality of terminals, connected to the transmission lines, for receiving the transmission signal from the main processing apparatus and returning a current mode signal to the main processing apparatus, wherein the main processing apparatus includes voltage inverting means for detecting a change in current mode signal output from the terminals and inverting the return request signal in the voltage mode every time the current mode signal changes.

According to another object of the present invention, there is provided a signal transmission system comprising a main processing apparatus for transmitting a transmission signal of predetermined bipolar pulses, which includes an address signal, a start signal, and a control signal, a pair of transmission lines connected to the main processing apparatus, and a plurality of terminals, connected to the transmission lines, for receiving the transmission signal from the main processing apparatus and returning a current mode signal to the main processing apparatus, wherein the main processing apparatus sends a return request signal to the terminals in a voltage mode, sends at least one sync signal indicating a return timing during a signal return period from the terminals, detects a current mode signal which is returned in response to the return request signal and in synchronism with the sync signal, and inverts the return request signal in the voltage mode every time the current mode signal changes.

According to still another object of the present invention, there is provided a signal transmission method for a signal transmission system constituted by connecting a main processing apparatus and a plurality of terminals to a pair of transmission lines, comprising the steps of transmitting, in a voltage mode, at least one sync signal representing a return timing during a return period of a return signal corresponding to a predetermined voltage mode transmission signal transmitted from the main processing apparatus and including an address signal, a start signal, and a control signal, detecting a current mode signal returned from the terminals in synchronism with the sync signal, and inverting a voltage mode output from the main processing apparatus every time the current mode signal returned from the terminals changes.

The aforementioned aspects and other features of the present invention are explained in the following description, taken in connection with the accompanying drawings, wherein:

Fig. 1 is a functional block diagram showing the overall arrangement of a signal transmission system according to a first embodiment of the present invention;

Fig. 2 is a functional block diagram of a central processing apparatus in the system shown in Fig. 1;

Figs. 3A and 3B show transmission signal formats in the system shown in Fig. 1;

Fig. 4 is a functional block diagram of a terminal in the system shown in Fig. 1;

Fig. 5 is a functional block diagram of a monitor display panel in the system shown in Fig. 1;

Fig. 6 is a circuit diagram showing in detail the central processing apparatus shown in Fig. 2;

Fig. 7 is a circuit diagram showing in detail the terminal shown in Fig. 4;

Fig. 8 is a circuit diagram showing in detail the monitor display panel shown in Fig. 5;

Fig. 9 is a flow chart showing an operation of the central processing apparatus shown in Fig. 6;

Fig. 10 is a flow chart showing an operation of the terminal shown in Fig. 7;

Fig. 11 is a flow chart showing an operation of the monitor display panel shown in Fig. 8;

Figs. 12A and 12B show a signal transmission format according to a modification of the first embodiment;

Fig. 13 is a functional block diagram of a central processing apparatus according to a second embodiment of the present invention;

Fig. 14 is a functional block diagram of a terminal according to the second embodiment of the present invention;

Figs. 15A and 15B show transmission signal formats according to the second embodiment of the present invention;

Fig. 16 is a flow chart showing an operation of the central processing apparatus shown in Fig. 13;

Fig. 17 is a flow chart for explaining an operation of a central processing apparatus according to the second embodiment of the present invention;

Fig. 18 is a flow chart showing an operation of the terminal shown in Fig. 14;

Fig. 19 is a flow chart for explaining an operation of a terminal according to the second embodiment of the present invention;

Fig. 20 is a flow chart for explaining an operation of a central processing apparatus according to a third embodiment of the present invention;

Fig. 21 is a flow chart for explaining an operation of a terminal according to the third embodiment of the present invention;

Fig. 22 and Figs. 23A and 23B show transmission signal formats for explaining an activation terminal detection operation upon signal collision in the third embodiment of the present invention;

Fig. 24 is a functional block diagram of a central processing apparatus according to a fourth embodiment of the present invention;

Figs. 25A and 25B show transmission signal formats according to the fourth embodiment of the present invention;

Fig. 26 is a flow chart for explaining an operation of the central processing apparatus according to the fourth embodiment of the present invention;

Fig. 27 is a flow chart for explaining an operation of a terminal according to the fourth embodiment of the present invention;

Figs. 28A through 28E show detailed formats of transmission signals in units of operation modes according to the fourth embodiment of the present invention;

Figs. 29A through 29E are timing charts for explaining a signal transmission delay in the fourth embodiment of the present invention;

Fig. 30 is a functional block diagram of a central processing apparatus according to a fifth embodiment of the present invention;

Figs. 31A and 31B show transmission signal formats according to the fifth embodiment of the present invention;

Fig. 32 is a flow chart showing an operation of the central processing apparatus according to the fifth embodiment of the present invention;

Fig. 33 is a flow chart showing an operation of a terminal according to the fifth embodiment of the present invention;

Fig. 34 is a functional block diagram of a central processing apparatus according to a sixth embodiment of the present invention;

Figs. 35A through 35C show transmission signal formats according to the sixth embodiment of the present invention;

Fig. 36 is a flow chart for explaining an operation of the central processing apparatus according to the sixth embodiment of the present invention;

Fig. 37 is a flow chart showing an operation of the central processing apparatus shown in Fig. 6 according to a seventh embodiment of the present invention;

Figs. 38-I through 38-III are flow charts showing an operation of the terminal shown in Fig. 7 according to the seventh embodiment of the present invention;

Figs. 39A and 39B are timing charts of transmission signals in collision processing in the seventh embodiment of the present invention;

Fig. 40 is a functional block diagram showing a central processing apparatus according to an eighth embodiment of the present invention;

Figs. 41-I and 41-II are flow charts for explaining an operation of the central processing apparatus according to the eighth embodiment of the present invention;

Figs. 42-I through 42-III are flow charts for explaining an operation of a terminal according to the eighth embodiment of the present invention;

Figs. 43A through 43C are timing charts of transmission signals for explaining an activation terminal detection operation upon collision in the eighth embodiment;

Figs. 44-I and 44-II are flow charts for explaining an operation of a terminal according to a ninth embodiment of the present invention;

Fig. 45 is a flow chart for explaining an operation of a central processing apparatus according to a tenth embodiment of the present invention;

Fig. 46 is a flow chart for explaining an operation of a terminal according to the tenth embodiment of the present invention;

Fig. 47 is a flow chart for explaining an operation of a terminal according to an eleventh embodiment of the present invention;

Fig. 48 is a flow chart for explaining an operation of the central processing apparatus according to a twelfth embodiment of the present invention;

Fig. 49 is a flow chart for explaining an operation of the terminal according to the twelfth embodiment of the present invention;

Fig. 50 is a flow chart showing an operation of the central processing apparatus according to a thirteenth embodiment of the present invention; and

Fig. 51 is a flow chart showing an operation of the terminal according to the thirteenth embodiment of the present invention.

Embodiments of the present invention will be described hereinafter with reference to the accompanying drawings.

(First Embodiment)

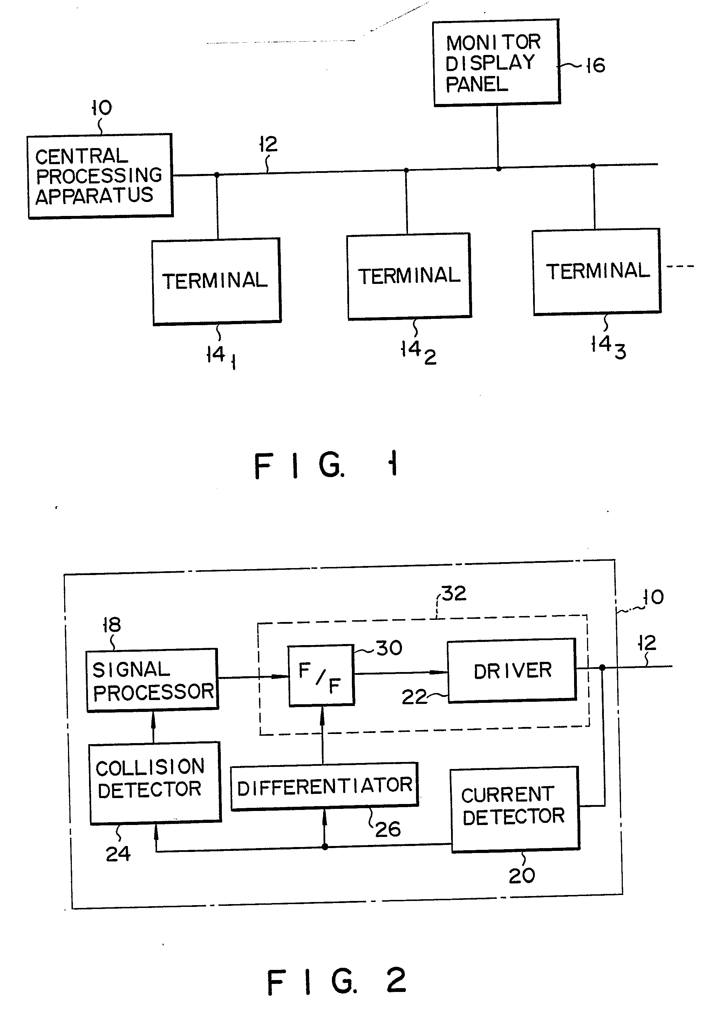

Fig. 1 shows a schematic arrangement of a signal transmission system according to a first embodiment of the present invention. The system shown in Fig. 1 comprises a central processing apparatus 10 as a master station, a plurality of terminals 14 ($14_1$, $14_2$, $14_3$, ...) connected to the central processing apparatus 10 through a pair of transmission lines 12, and a monitor display panel 16. A load (not shown), e.g., luminaire, a wall switch, an illuminance sensor, or the like is connected to each of the terminals $14_1$, $14_2$, $14_3$, ....

Fig. 2 is a functional block diagram of the central processing apparatus 10. In the central processing apparatus 10, a collision detector 24, a differentiator 26, and a flip-flop (F/F) 30 are added to a central processing apparatus of a conventional system which is constituted by a signal processor 18, a current detector 20, and a driver 22, as shown in Fig. 2. Note that the central processing apparatus 10 may be provided with a keyboard, switches, or sensors for inputting data, and a display unit, e.g., a CRT, for displaying various data, and the like as needed (neither are shown).

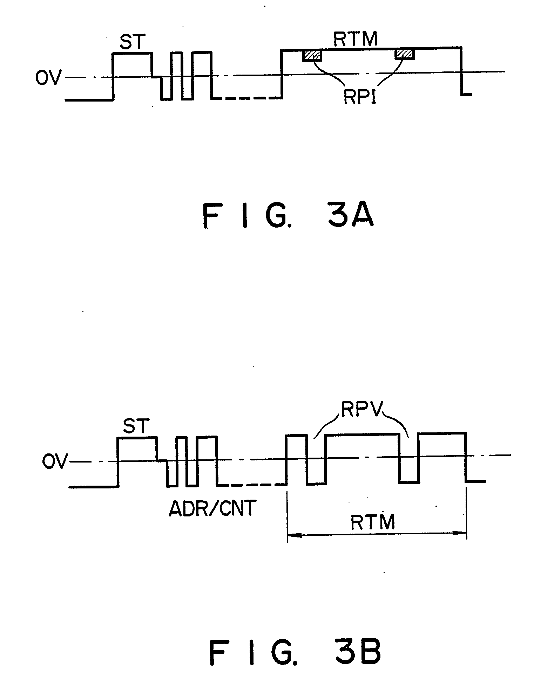

The signal processor 18 fetches data from the keyboard, switches, sensors, or the like in accordance with a predetermined sequence, acquires monitor data of the terminals, generates a control signal on the basis of these data, and causes the monitor display panel 16 to display data. The signal processor 18 also generates a transmission voltage signal including the control signal. In a central processing apparatus of the conventional system, the voltage signal is directly input to the driver 22, and is transmitted onto the transmission lines 12 as a transmission signal. For this reason, the format of the transmission voltage signal is the same as that shown in Fig. 3A as a basic transmission signal format from the central processing apparatus.

Referring to Fig. 3A, the transmission voltage signal, i.e., a transmission signal in a conventional system includes a start signal ST consisting of a "1"-level long pulse signal, a transmission signal ADR/CNT consisting of "1"-level short pulses corresponding in number to 1/2 a predetermined bit count and indicating transmission data such as an address ADR of a destination terminal, a control signal CNT, and the like, a return period signal RTM consisting of a "1"-level long pulse signal and indicating a return standby period (or terminal transmission period) such as monitor data from a destination terminal, and the like. In the transmission signal ADR/CNT, successive "1"- and "0"-level portions express 1-bit data, respectively. When "1"- or "0"-level portions continue short, they express data "0"; when long, they express data "1". In Fig. 3A, the signal ADR/CNT represents data "001...".

Referring back to Fig. 2, the current detector 20 converts a current (current mode signal such as monitor data indicated by hatched lines in Fig. 3A) flowing across the central processing apparatus 10 and the terminal 14 through the transmission lines 12 into a voltage.

The driver 22 drives the transmission lines 12 in accordance with a bipolar signal according to an input signal. For example, if an input signal is at "1" level, the driver 22 pulls up the transmission lines to +24 V; if it is "0" level, it pulls down the transmission lines to -24 V. In the conventional central processing apparatus, a signal voltage output of the signal processor is directly input to the driver. In this embodiment, as shown in Fig. 3B, the start signal ST and the transmission signal ADR/CNT are directly output. However, the return period signal RTM output from the signal processor 18 during the return period is output after it is appropriately processed by the F/F 30. The F/F 30 together with the driver 22 constitutes a transmitter 32 of the central processing apparatus of this embodiment.

The collision detector 24 detects the presence/absence of terminal collision based on a current value and a current waveform detected by the current detector 20.

The differentiator 26 differentiates the output voltage from the current detector 20 to detect a change in current mode signal sent from each terminal 14.

The voltage output of the F/F 30 goes to high level in response to the leading edges of the voltage signal output from the signal processor 18, and goes to low level in response to the trailing edges. The F/F 30 inverts its output in response to a differential output from the differentiator 26 as a trigger signal. More specifically, the F/F 30 supplies to the driver 22 a voltage which changes according to changes in output of the signal processor 18. When the output from the signal processor 18 is kept constant, the F/F 30 supplies to the driver 22 a voltage which is inverted every time the current mode signal detected by the current detector 20 changes.

The driver 22 drives in accordance with the output voltage from the F/F 30, so that the signals shown in Figs. 3A and 3B are output. More specifically, the start signal ST and the transmission signal ADR/CNT are sent onto the transmission lines 12 as voltage mode signals having the same output waveform as that from the signal processor 18. During the terminal transmission period RTM. When a current mode signal RPI is sent from each terminal, a voltage mode signal RPV according to the signal RPI is sent onto the transmission lines 12.

In the transmission system shown in Fig. 1, during the terminal transmission period (return period) RTM, the current mode signal from each terminal 14 is converted to a voltage mode signal by the central processing apparatus 10, and is sent onto the transmission lines 12. For this reason, all the terminals $14_1$, $14_2$, ... and the monitor display panel 16 can discriminate the contents of current mode signals from their downstream-side terminals (in Fig. 1, downstreamside terminals from the terminal $14_3$) and from their upstream-side terminals ($14_1$ and $14_2$).

Therefore, in this system, the monitor display panel 16 can be connected at an arbitrary position of the transmission lines 12. Since any terminal can discriminate signal transmission states of all the terminals in accordance with the voltage mode signals, the terminal itself can determine a ready state of the transmission lines 12 or the presence/absence of signal collision. Therefore, according to this system, a random transmission system which is free from signal collisions without increasing a load of the central processing apparatus and can utilize its feature, i.e., a high transmission speed can be realized.

Furthermore, when each terminal 14 transmits a current mode signal, it discriminates the voltage mode signal obtained by converting the current mode signal by the central processing apparatus 10 to confirm that the central processing apparatus 10 received the current mode signal. Therefore, an answer signal from the central processing apparatus 10 can be omitted, and a transmission speed can be increased regardless of a transmission system.

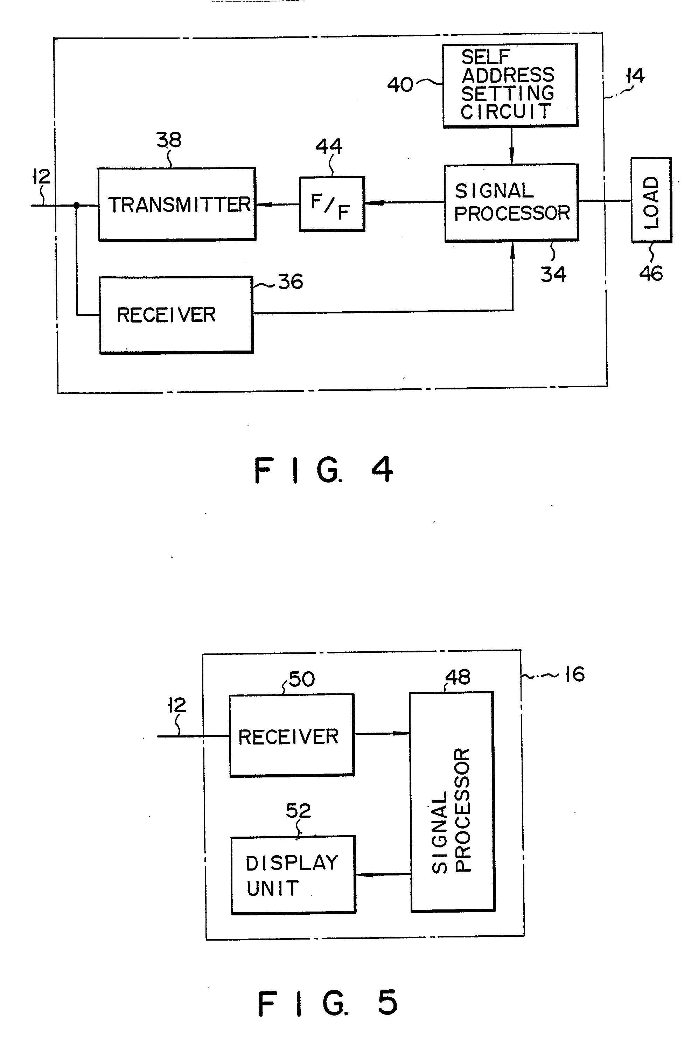

Fig. 4 is a functional block diagram of the terminal 14 in the transmission system shown in Fig. 1. In the terminal 14, a flip-flop (F/F) 44 is added to a terminal of a basic system, which comprises a signal processor 34, a receiver 36, a transmitter 38, a self address setting circuit 40, and the like. The signal processor 34 is connected to one or a plurality of loads 46.

The receiver 36 receives the voltage mode signal transmitted from the central processing apparatus 10 onto the transmission lines 12. The signal processor 34 operates in accordance with a predetermined sequence. That is, the processor 34 receives a control signal or the like included in the voltage mode signal received at the receiver 36 and supplies a load drive signal based on the control signal or the like to each load 46. If the load 46 is a monitor load, the processor 34 detects its monitor signal to create monitor data, and outputs the monitor data to the transmitter 38 in accordance with the control signal or the like. The transmitter 38 connects a resistor to the transmission lines in accordance with the monitor data output from the signal processor 34, and changes a sink current value in this terminal 14. Thus, the monitor data is transmitted onto the transmission lines 12 as the current mode signal. When the output impedance of the driver 22 of the central processing apparatus 10 is low, almost no change in line voltage of the transmission lines 12 caused by the current mode signal occurs. The hatched portion RPI shown in Fig. 3A illustrates this current mode signal.

The F/F 44 latches the output from the signal processor 34.

Fig. 5 is a functional block diagram of the monitor display panel 16 in the transmission system shown in Fig. 1. The monitor display panel 16 comprises a signal processor 48, a receiver 50, and a display unit 52.

The receiver 50 receives the voltage mode signal sent from the central processing apparatus 10 onto the transmission lines 12. The signal processor 48 operates in accordance with a predetermined sequence. That is, the processor 48 discriminates monitor data or the like in accordance with the voltage mode signal obtained by converting the current mode signal sent from each terminal 14 by the central processing apparatus 10 on the basis of the output from the receiver 50. The processor 48 outputs a display signal according to the monitor data. The display unit 52 is constituted by display elements such as LEDs, lamps, an LED array, an LCD, or a CRT, and a driver for driving these display elements. The display unit 52 displays a state of a load or the like by flashing these display elements or displaying a line, a pattern, a character, or the like on these display elements in accordance with the display signal input from the signal processor 48.

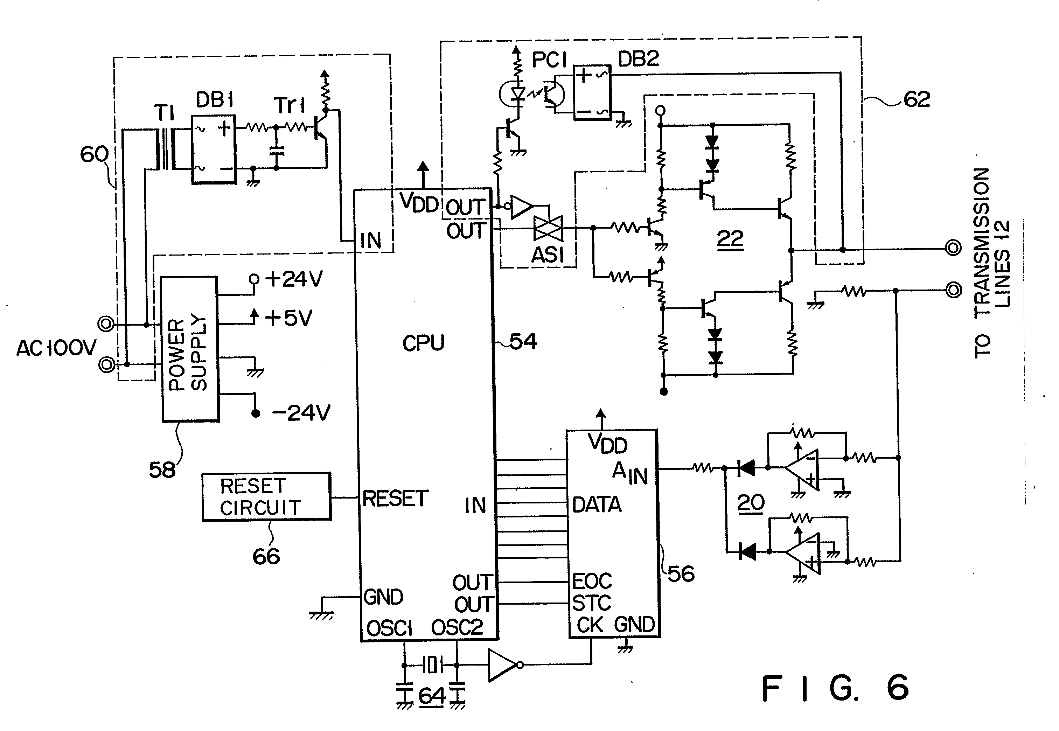

Fig. 6 shows a detailed circuit arrangement of the central processing apparatus 10 in the transmission system shown in Fig. 1.

The overall operation of the central processing apparatus 10 shown in Fig. 6 is controlled by a microprocessor (CPU) 54. The functions of the signal processing circuit 18, the collision detector 24, the differentiator 26, and the F/F 30 are realized by an operation program of the CPU 54.

The central processing apparatus 10 shown in Fig. 6 further comprises an A/D converter 56 for converting an analog output of the current detector 20 into digital data capable of being processed by the CPU 54, and supplying it to the CPU 54, a DC power supply 58 for generating DC voltages of + 24 V and -24 V for the output stage of the driver 22 and a DC voltage of + 5 V for circuits other than the output stage on the basis of an AC power supply, a zero-crossing detector 60 for detecting a zero-crossing point of the AC power supply, a zero-crossing signal sending circuit 62 for sending a zero-crossing signal onto the transmission lines 12, an oscillator 64 for generating a drive clock for the CPU 54, and a reset signal 66 for resetting the CPU 54 to an initial state.

When the central processing apparatus 10 transmits a transmission signal to the terminals, the CPU 54 supplies a voltage signal having a waveform similar to those shown in Figs. 3A and 3B (in which "0" level = 0 V and "1" level = 5 V) to the driver 22. The driver 22 sends a voltage mode signal having the waveform as shown in Figs. 3A and 3B (in which "0" level = -24 V and "1" level = + 24 V) onto the transmission lines 12 in accordance with the voltage signal from the CPU 54.

The zero-crossing detector 60 detects a zerocrossing point of the AC power supply, and inputs a "1"-level zero-crossing signal to the CPU 54. In the detector 60, an AC power supply voltage of, e.g., AC 100 V is supplied to a diode bridge DB1 through an insulating transformer T1, and a full-wave rectified output from the diode bridge DB1 is applied to the base of a transistor Tr1 of class super-C amplification. Thus, when the full-wave rectified output is 0 V, i.e., at the zero-crossing timing of the AC power supply, the detector 60 generates a zero-crossing signal of 5 V at the collector of the transistor Tr1.

The CPU 54 supplies the zero-crossing signal to the zero-crossing signal transmitter 62 if it is necessary in, e.g., a central activation mode. In the zero-crossing signal transmitter 62, an analog switch ASI is turned off upon inputting of the zero-crossing signal to interrupt supply of a voltage signal from the CPU 54 to the driver 22, thus interrupting signal transmission from the central processing apparatus 10 to the terminals. The zero-crossing signal from the CPU 54 drives a photocoupler PC1 to short-circuit AD terminals of a diode bridge DB2, thus short-circuiting the transmission lines 12. In this manner, a zero-crossing signal of 0 V is transmitted to the terminals.

In a conventional system, the zero-crossing signal is generated in each terminal. When the zero-crossing signal is generated in the central processing apparatus 10 and is transmitted to the terminals, a single zero-crossing detector need only be arranged. As compared to a case wherein the zero-crossing detector is arranged in each terminal, the circuit configuration of the entire system can be simplified, and its cost can be reduced.

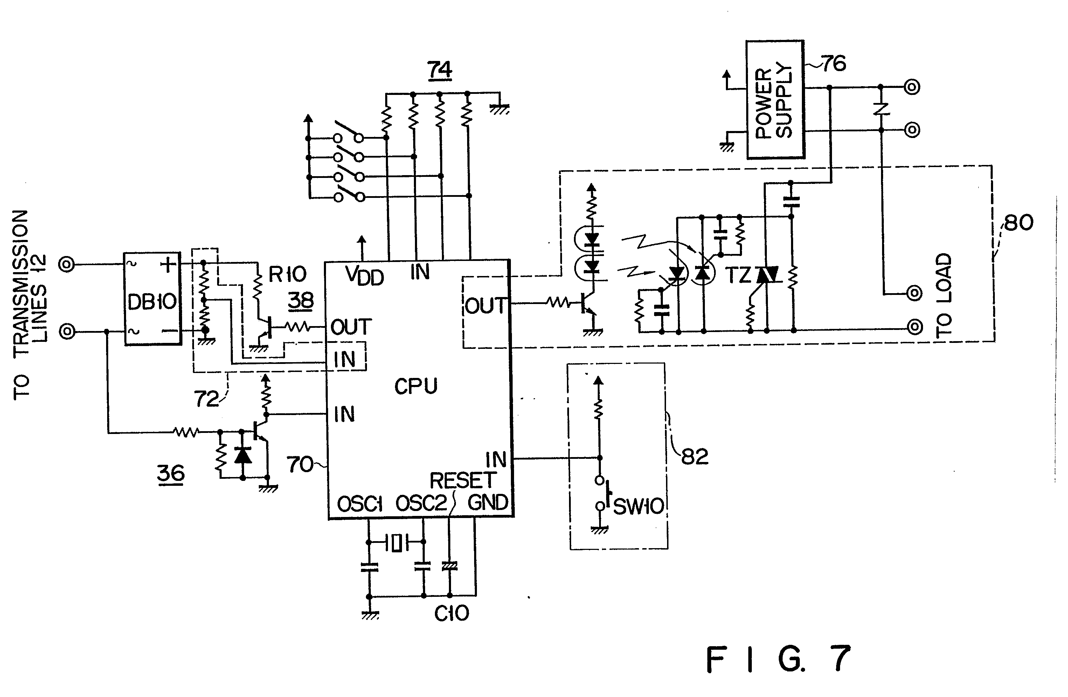

Fig. 7 shows a detailed circuit arrangement of the terminal 14 in the transmission system shown in Fig. 1.

The overall operation of the terminal shown in Fig. 7 is controlled by a microprocessor (CPU) 70. The functions corresponding to the signal processor 34, and the F/F 44 shown in Fig. 4 are realized by the operation program of the CPU 70. Note that reference numerals 36 and 38 denote the receiver and the transmitter common to those shown in Fig. 4, respectively.

Reference numeral 72 denotes a zero-crossing signal receiver; 74, a self-address setting circuit; and 76, a DC power supply for generating a DC output of 5 V on the basis of an AC power supply. Reference symbol C10 denotes a capacitor for resetting the CPU 70 when the power switch of the terminal is turned on; and DB10, a diode bridge for matching the transmission lines 12 as a bipolar (AC) system with the transmitter 38 and the zero-crossing signal receiver 72 as a unipolar (DC) system.

One or a combination of load devices are connected to the terminal as needed. As the load devices, a dimmer 80 as a load device requiring a zero-crossing signal and a switch 82 as a monitor load are exemplified. In the load device 80, only a load drive portion is illustrated. However, the load device 80 is not limited to the dimmer but may be a heater if it performs phase control.

The receiver 36 generates a signal of 0 V or 5 V in accordance with whether the voltage mode of the transmission lines 12 is "0" or "1", and supplies the generated signal to the CPU 70. The transmitter 38 sends the transmission signal generated by the CPU 70 in the terminal to the central processing apparatus 10, and connects a resistor R10 to the transmission lines 12 when the transmission signal is "1". In this case, a resistor R10 serves as a current sink. A current RPI flowing through the transmission lines 12 changes by a current flowing through the current R10, as indicated by the hatched portion in Fig. 3A, and the change in current is detected by the current detector 20 (Fig. 2) of the central processing apparatus 10, thus performing current-mode signal transmission from the terminal to the central processing apparatus 10.

A line voltage of the transmission lines 12 becomes 0 V only when the zero-crossing signal is transmitted from the central processing apparatus 10; otherwise, it is set at +24 V or -24 V. More specifically, a DC terminal voltage of the diode bridge DB10 is set at 0 V only when the zero-crossing signal is transmitted; otherwise, it is set at about +24 V or +24 V. The zero-crossing signal receiver 72 is a voltage dividing resistor circuit for voltage-dividing the DC terminal voltage of the diode bridge DB10 to about 1/5.

The CPU 70 detects a change in output from about 5 V to 0 V from the zero-crossing signal receiver 72 as a zero-crossing signal. The CPU 70 generates pulses of 5 V in accordance with the zero-crossing signal and a phase angle based on the control signal transmitted from the central processing apparatus 10 every half cycle of the AC power supply, and supplies them to the dimmer 80. In the dimmer 80, a triac TZ is turned on at an "ON" angle designated by the control signal, thus turning on a lamp as a load (not shown).

In the monitor load 82, when a switch SW10 is operated, the CPU 70 detects the operation of the switch SW10, and generates monitor data indicating an ON/OFF state of the switch SW10. The monitor data is output to the central processing apparatus 10 in the current mode, as described above.

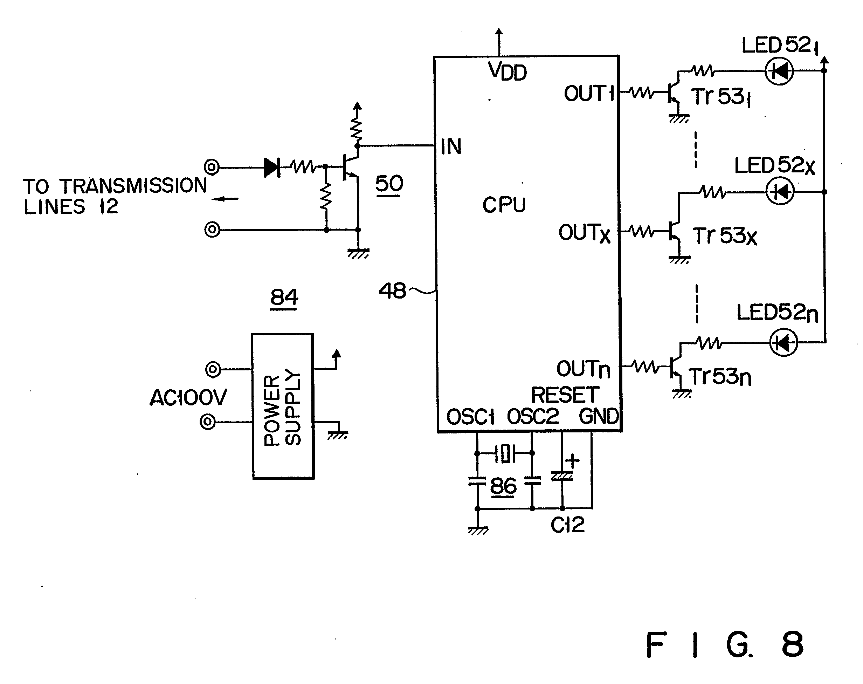

Fig. 8 shows a detailed circuit arrangement of the monitor display panel 16 in the transmission system shown in Fig. 1.

In Fig. 8, reference numeral 48 denotes a microprocessor (CPU) corresponding to the signal processor 48 in Fig. 5; and 50 and 52, the receiver and a display unit common to those shown in Fig. 5.

Reference numeral 84 denotes a DC power supply for generating a DC output of 5 V on the basis of an AC power supply; 86, a clock generator; and C12, a capacitor for resetting the CPU 48 when the power switch of the monitor display panel is turned on.

The receiver 50 generates a reception signal of 0 V or 5 V in accordance with whether the voltage mode of the transmission lines 12 is "0" or "1", and supplies it to the CPU 48. The display unit 52 comprises display elements (light-emitting diodes; LEDs) $52_1$ to $52_n$ corresponding to output terminals $OUT_1$ through $OUT_n$ of the CPU 48, transistors $Tr53_1$ through $Tr53_n$ for driving these LEDs, and the like. In the display unit 52, when the CPU 48 turns on a transistor $Tr53_x$ connected to an output terminal $OUT_x$ at which the drive signal of 5 V appears based on the reception signal, an LED $52_x$ is turned on to make a display.

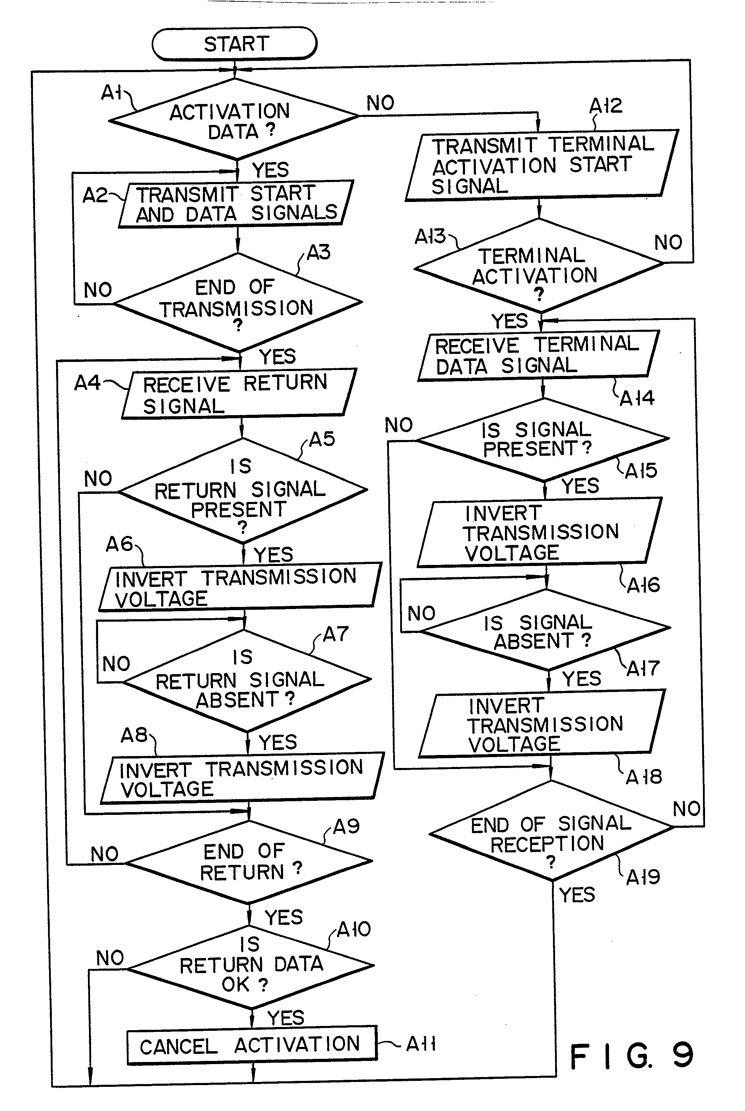

The operation of the system with the arrangements shown in Figs. 1 and 6 through 8 will be described below with reference to the flow charts shown in Figs. 9 through 11.

When the power switches of the central processing apparatus 10, the terminals 14, and the monitor display panel 16 are respectively turned on, the central processing apparatus 10, the terminals 14, and the monitor display panel 16 start predetermined operations in accordance with control programs stored in their CPUs. First, various memories, flags, registers, and the like incorporated in each CPU are initialized. The central processing apparatus 10 executes endless loop processing shown in the flow charts of Figs. 9 through 11.

(1A. Operation of Central Processing Apparatus 10)

Referring to Fig. 9, the central processing apparatus 10 discriminates presence/absence of activation data in step A1. The activation data means data sent from each equipment to other equipment and devices. In this case, if data to be sent to each terminal, i.e., activation data is detected, (i) central activation (master activation) processing in steps A2 through A11 is executed; otherwise, (ii) normal mode processing in steps A12 through A19 is executed.

(i) Central Activation Processing

In the central activation processing, transmission data consisting of the start signal ST, the destination terminal address ADR, the control signal (activation CNT, and the like as shown in Fig. 3B is sent from the driver 22 onto the transmission lines 12 in the voltage mode in step A2. The transmission data is sent bit by bit via every processing in step A2. It is then checked in step A3 if the processing in step A2 is repeated by a predetermined number of times corresponding to the number of bits of the transmission data. If a processing count in step A2 is smaller than the predetermined number of times in step A3, the control returns to step A2. If the processing in step A2 is repeated the predetermined number of times and voltage mode signals corresponding to the predetermined number of bits are output, it is determined in step A3 that transmission is completed, and the control advances to step A4.

In step A4, the output from the current detector 20 is fetched. The presence/absence of a current mode signal from each terminal 14 is checked in step A5. In this embodiment, when no current mode signal is detected within a predetermined period of time (e.g., 600 $\mu$s), this means that one bit (return signal) of return data corresponding to an interval to which the predetermined period of time belongs is "0". When the current mode signal is detected, this means that the detected bit (return signal) is "1".

If YES in step A5, a voltage output from the driver 22 is inverted in step A6. In step A7, the control stands by until no more return signal is detected. In step A8, the voltage output from the driver 22 is inverted again to restore the voltage mode. Thereafter, the flow advances to step A9. With the processing in steps A6 through A8, "1" of the current mode return signal is converted to "0" of the voltage mode return signal.

On the other hand, when no return signal is detected, the flow skips steps A6 through A8, and the flow directly advances from step A5 to step A9. In this case, the current mode signal is "0", and the voltage mode signal is kept "1". Thus, it is equivalent that the current mode signal is converted to the voltage mode signal.

It is checked in step A9 if a return operation from the terminal is completed. If conversion processing from the current mode signal to the voltage mode signal is not completed for all the bits of the return data, the return operation is not completed. Thus, the flow returns from step A9 to step A4, and the processing in steps A4 through A9 is repeated.

When the processing in steps A4 through A9 is repetitively executed the same number of times as the number of bits of the return data, it is determined in step A9 that the return operation from the terminal 14 is completed, and the flow advances to step A10. It is checked in step A10 if the return data is normal. This checking operation can be performed such that the same signal as the transmitted control signal CNT is returned as an affirmative response ACK, and whether or not the affirmative response coincides with the transmitted control signal CNT is checked.

If the return data is normal, this means that the return data can be normally transmitted. Thus, in step A11, the activation data is cleared to cancel activation, and the flow returns to step A1.

If the return data is abnormal, the flow skips step A11, and directly returns from step A10 to step A1. In this case, since the activation data remains, the presence of the activation data is determined in step A1, and the central activation processing is executed again. That is, the central activation processing is repeated until the activation data is normally transmitted.

(ii) Normal Mode Processing

If it is determined step A1 that the activation data is absent, a terminal activation start signal is transmitted in step A12. It is checked in step A13 if the terminal 14 transmits a current mode activation signal. If there is no response from any terminal within a predetermined period of time (e.g., several ms) in response to the terminal activation signal, since terminal activation has not been performed, the flow returns to step A1.

If the terminal activation signal is detected in step A13, the presence of terminal activation is determined, and the flow advances to step A14 to execute normal mode processing in steps A14 through A19.

In the normal mode processing, a current mode signal sent from each terminal is received in step A14.

In this embodiment, as described above, when no current mode signal is detected within a predetermined period of time (e.g., 600 $\mu$s), this means 1 bit of terminal data corresponding to an interval to which the predetermined period of time belongs is "0"; otherwise, this means that the bit is "1". In step A15, the output from the current detector 20 is checked. If the current mode signal is detected, since the bit (transmission signal) of terminal data corresponding to the present timing is "1", a voltage output from the driver 22 is inverted in step A16. In step A17, the control stands by until no more current mode signal is detected. In step A18, the voltage output from the driver 22 is inverted again to restore the voltage mode of the transmission lines. Thereafter, the flow advances to step A19.

If no return signal is received after the lapse of the predetermined period of time (e.g., 600 $\mu$s) in step A15, since the bit of terminal data corresponding to the present timing is "0", the flow skips the processing in steps A16 through A18, and directly advances from step A15 to step A19. In this case, the output voltage from the driver 22 to the transmission lines 12 is not inverted.

More specifically, every time the processing in steps A14 through A19 is executed once, the terminal data is converted to voltage mode signals bit by bit.

Step A19 is a decision block for converting terminal data into voltage mode signals bit by bit. More specifically, in step A19, it is checked whether or not current mode signals corresponding to all the bits of terminal data are received from the terminal, i.e., whether or not current mode signals corresponding to a predetermined number of bits are converted to voltage mode signals. If NO in step A19, the flow returns to step A14 to repeat the processing in steps A14 through A19.

After the processing in steps A14 through A19 is repeated by the same number of times as the number of bits of the terminal data, processing necessary for the terminal data, i.e., reception of all the bits of the terminal data, conversion from the current mode signal to the voltage mode signal, and the like, is completed. In this case, YES is determined in step A19, and the flow returns to step A1.

(1B. Operation of Terminal)

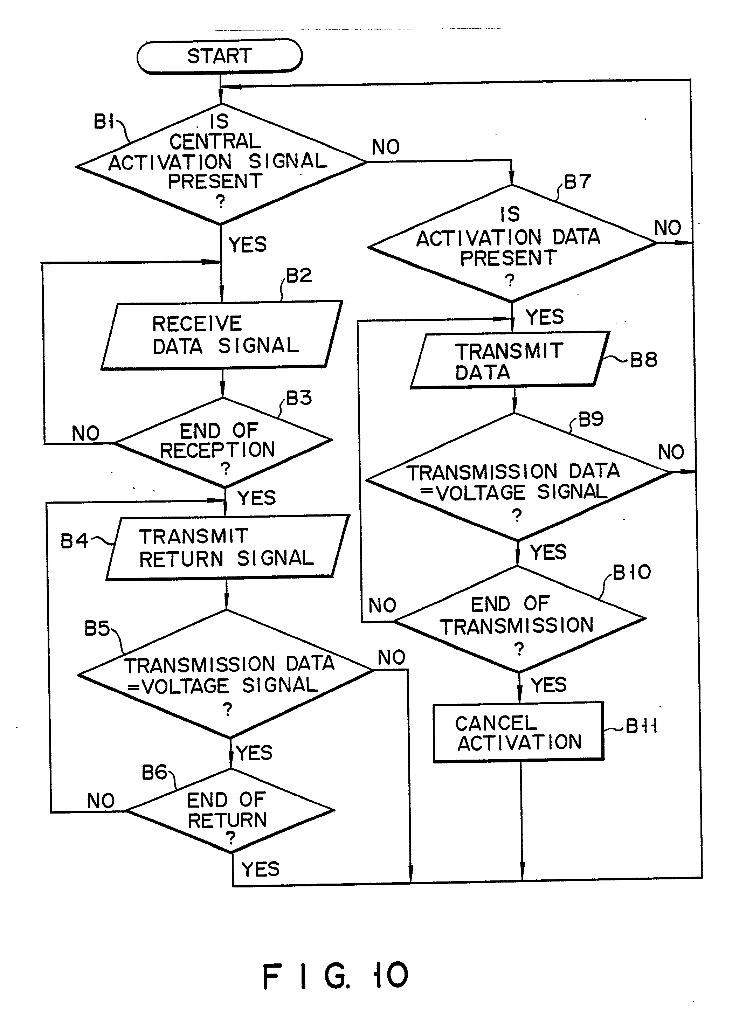

Referring to Fig. 10, the terminal 14 checks in step B1 if a central activation signal in the voltage mode is output from the central processing apparatus. If YES in step B1 (step A2 in Fig. 9), (iii) return processing in steps B1 through B6 is executed. If NO in step B1, the presence/absence of activation data is checked in step B7 (to be described later). If YES in step B7, i.e., if data to be sent to the central processing apparatus, i.e., activation data is present, (iv) terminal activation (slave activation) processing as loop processing of steps B8 through B11 is executed. If no central activation signal is output in step B1 and if no terminal data to be sent to the central processing apparatus is present, the flow returns to step B1.

(iii) Return Processing

In the return processing, in loop processing of steps B2 and B3, voltage mode transmission data transmitted from the central processing apparatus 10 (steps A2 and A3 in Fig. 9) is received bit by bit every loop processing on the basis of the output from the receiver 36. When the predetermined number of bits are received, the flow advances from step B3 to step B4, the first bit (return signal) of return data is sent from the transmitter 38 onto the transmission lines 12 in the current mode. The current mode return signal is received by the central processing apparatus 10 (step A4 in Fig. 9), and is converted to the voltage mode signal (steps A6 through A8 in Fig. 9).

In step B5, the voltage mode signal is received from the transmission lines 12, and it is checked if the received signal coincides with the content of the return signal which was sent from the terminal. If YES in step B5, since 1 bit of the return signal sent in step B4 was received by the central processing apparatus 10 and was converted from the current mode to the voltage mode, this indicates that transmission of the bit was normally performed. It is then checked in step B6 if all the bits of the return data are normally transmitted. If NO in step B6, the flow returns to step B4 to repeat processing of steps B4 through B6 for the next bit (return signal). If YES in step B6, the return processing is terminated, and the flow returns to step B1.

If NO in step B5, i.e., if the return signal does not coincide with the received signal, the bit (return signal) of the return data was not normally received by the central processing apparatus. Therefore, the flow returns to step B1. In this case, since the central processing apparatus cannot obtain return data of the predetermined number of bits (step A10 in Fig. 9), the activation cancel processing (step A11 in Fig. 9) is skipped, and the central activation processing is executed again. The terminal 14 executes return processing for this central activation processing again. As a result, the central activation processing of the central processing apparatus 10 and return processing of the terminal are repeated until return data is normally transmitted.

(iv) Terminal Activation Processing

In the terminal activation processing, every time loop processing of steps B8 through B10 is executed once, activation data is sent bit by bit in the current mode. The current mode signal is received by the central processing apparatus (step A14 in Fig. 9), and is converted to the voltage mode signal (steps A16 through A18 in Fig. 9). In this loop processing, in step B9, the voltage mode of the transmission line 12 is discriminated, and the voltage mode signal is compared with the current mode signal which was sent from the terminal. If these signals coincide with each other, it can be determined that the current mode signal sent from the terminal is normally received by the central processing apparatus, and is converted to the voltage mode signal. As long as the current mode signal is normally received, the loop processing continues until it is determined in step B10 that transmission of activation data is completed.

After the loop processing is executed the number of times corresponding to the number of bits of the activation data, it is determined in step B10 that transmission of the activation data is completed, and the flow advances to step B11. In step B11, for example, the activation data is cleared to cancel activation, and the flow returns to step B1.

If it is determined in step B9 that the content of the current mode signal is different from the content of the received voltage mode signal, it is determined that the current mode signal sent from the terminal 14 was normally received by the central processing apparatus 10, and the loop processing is interrupted in step B9. The flow then returns to step B1. In this case, since the activation data of the terminal 14 remains, a terminal activation start signal is sent from the central processing apparatus 10 (step A12 in Fig. 9). When the flow advances from step B1 to step B7, YES is determined in step B7, and the terminal activation processing is executed again. More specifically, the terminal activation processing is repeated until the activation data is normally transmitted to the central processing apparatus.

(1C. Operation of Monitor Display Panel)

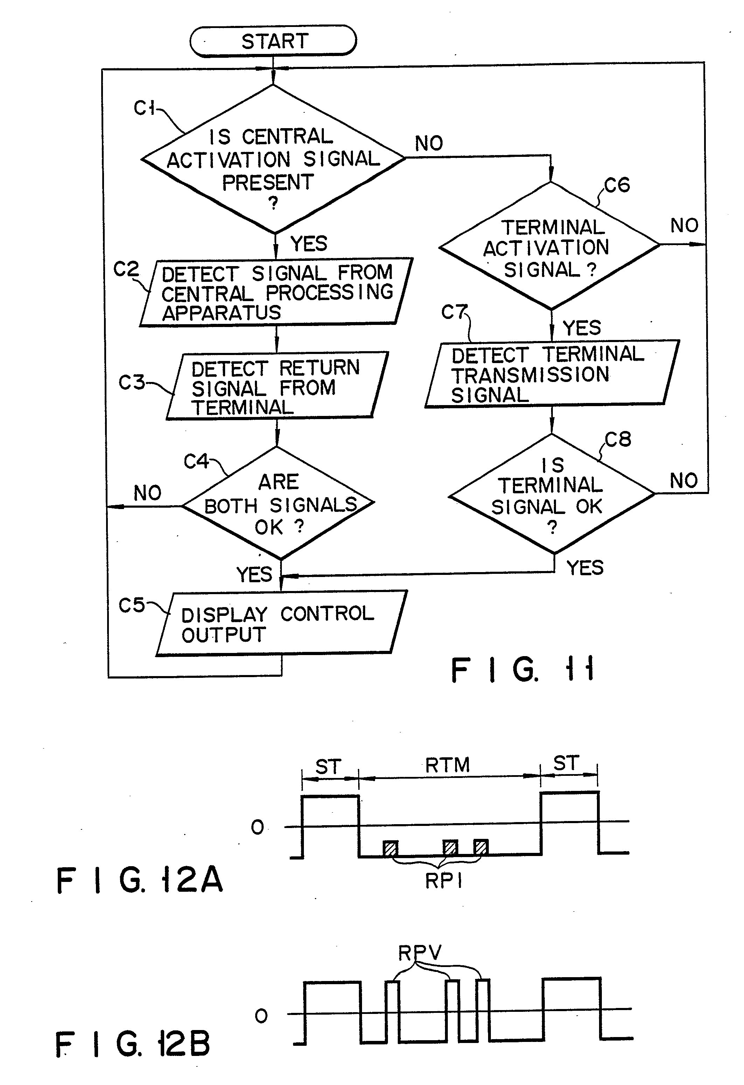

Referring to Fig. 11, the monitor display panel 16 checks in step C1 if the central activation signal is sent from the central processing apparatus 10 (step A2 in Fig. 9). If YES in step C1, the flow advances to step C2; otherwise, the flow advance to step C6 (to be described later).

In step C2, a transmission signal in the voltage mode sent from the central processing apparatus 10 (steps A2 and A3 in Fig. 9) is detected. After a return signal (return data) from the terminal 14 in response to this transmission signal is detected as a voltage mode signal obtained by converting the return signal in the central processing apparatus 10 in step C3, whether or not these signals are normally transmitted is checked in step C4. Step C4 is the same processing as step A10 (Fig. 9) in the central processing apparatus 10. If YES in step C4, since data transmission between the central processing apparatus 10 and the terminal 14 is normally performed, a display is made on the basis of the content of the transmission data in step C5.

If NO in step C4, since data transmission between the central processing apparatus 10 and the terminal 14 is abnormal, data received in steps C2 and C3 is cleared, and the flow returns to step C1. In this case, since transmission of data having the same content is repeated until it is normally executed, processing in step C5 is executed when it is normally executed. Therefore, a display based on the content of the transmitted data is performed at that time in step C5.

If NO in step C1, the flow advances to step C6 to check the presence/absence of terminal activation. If NO in step C6, the flow directly returns from step C6 to step C1.

If YES in step C6, the flow advances to step C7. In step C7, terminal data sent from the activation terminal is detected bit by bit as the voltage mode signals converted in the central processing apparatus 10. Whether or not terminal signals are normally transmitted is checked in step C8 on the basis of whether or not signals corresponding to the predetermined number of bits are detected.

If YES in step C8, a load monitor display is performed on the basis of this terminal data in step C5.

If it is determined in step C6 that data transmission from the terminal to the central processing apparatus is not normally performed, the flow returns from step C8 to step C1. In this case, data transmission of terminal activation is repeated until it is normally executed. Therefore, the flow advances to step C5 when the data transmission is normally executed to perform a monitor display.

In the first embodiment described above, the present invention is applied to a system wherein the central processing apparatus 10 outputs the "1"-level return standby signal RTM during the return period from the terminal 14. However, the present invention is not limited to this. For example, as shown in Fig. 12A, the present invention is applicable to a case wherein the return standby signal RTM is at "0" level. The polarities of the voltage mode signal converted from the current mode signal are opposite to those in the case described above, as can be seen from a comparison between Figs. 12B and 3B.

(Second Embodiment)

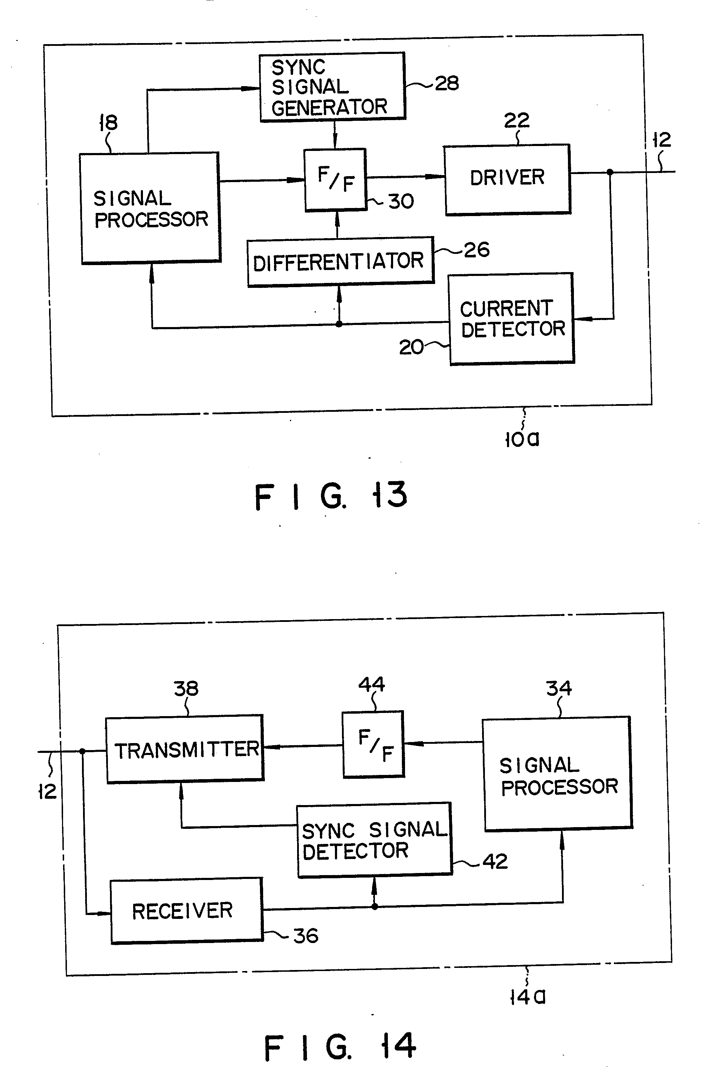

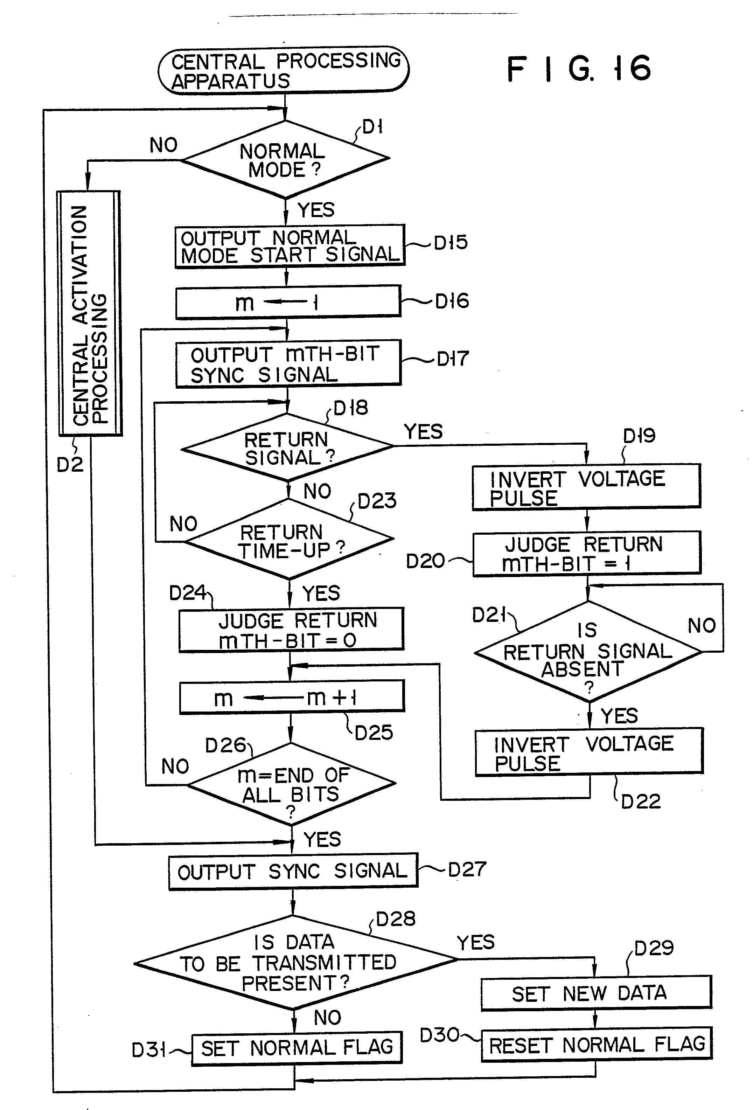

A second embodiment of the present invention will now be described with reference to Figs. 13, 14, 15A, and 15B, and the flow charts shown in Figs. 16 through 19.

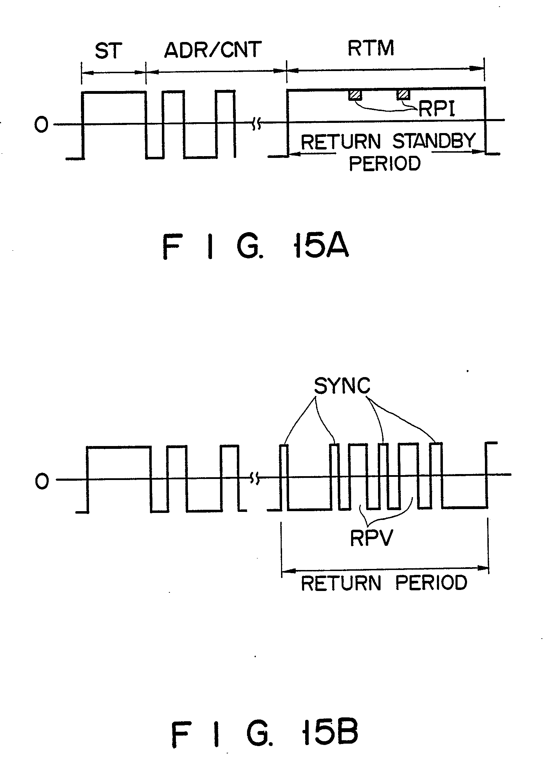

In the related arts and the first embodiment described above, during a terminal transmission period in which current mode terminal data is transmitted from the terminal 14 to the central processing apparatus 10, a positive or negative long pulse voltage such as the return period signal RTM shown in Fig. 15A is transmitted from the central processing apparatus 10 onto the transmission lines, and the terminal 14 sinks the current from the long pulse voltage to perform signal transmission in the current mode from the terminal 14 to the central processing apparatus 10. In these cases, a current mode terminal signal such as a return signal is set at a relatively free timing during the long pulse period set by the central processing apparatus 10.

In the second embodiment, in the signal transmission system with the arrangement shown in Fig. 1, a sync signal indicating a transmission timing in units of bits of transmission data is sent from the central processing apparatus 10 to the transmission lines 12 in the voltage mode during the terminal transmission period such as a return standby period, so that the timing of transmission signals from the terminal 14 is managed by the central processing apparatus 10.

In the signal transmission system shown in Fig. 1, hardware shown in Fig. 6 is used as the central processing apparatus 10, hardware shown in Fig. 7 is used as each terminal 14, and the control programs of CPUs 54 and 70 are appropriately set to realize the above-mentioned function.

Figs. 13 and 14 are respectively functional block diagrams of a central processing apparatus 10a and a terminal 14a according to the second embodiment.

In the central processing apparatus 10a shown in Fig. 13, a sync signal generator 28 for supplying a sync signal SYNC for a predetermined cycle only during a signal transmission period from the terminal to the central processing apparatus is added to the arrangement shown in Fig. 2, so that an output from an F/F 30 is inverted in response to the sync signal SYNC and a differential output from a differentiator 26. The functions of the differentiator 26, the sync signal generator 28, the F/F 30, and the like are realized by the control program of the CPU 54.

In the terminal 14a shown in Fig. 14, a sync signal detector 42 for detecting a voltage mode sync signal transmitted from the central processing apparatus 10a onto the transmission lines 12 on the basis of an output from a receiver 36 is added to the arrangement shown in Fig. 4. Furthermore, in the terminal 14a, when the sync signal detector 42 detects the sync signal, the latch output of the F/F 44 is transmitted onto the transmission lines 12 in the current mode. The functions of the sync signal detector 42 and the F/F 44 are also realized by the control program of the CPU 70.

The operation of the system with the arrangement shown in Figs. 1, 6, 7, 13, and 14 will be described below with reference to the flow charts shown in Figs. 16 through 19.

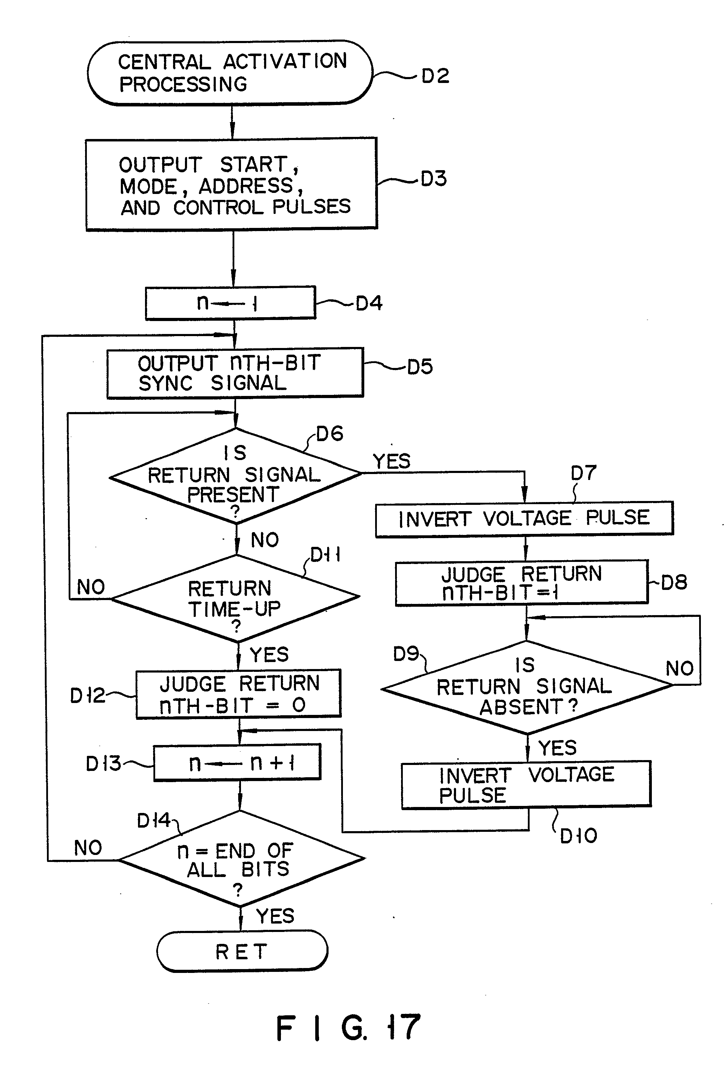

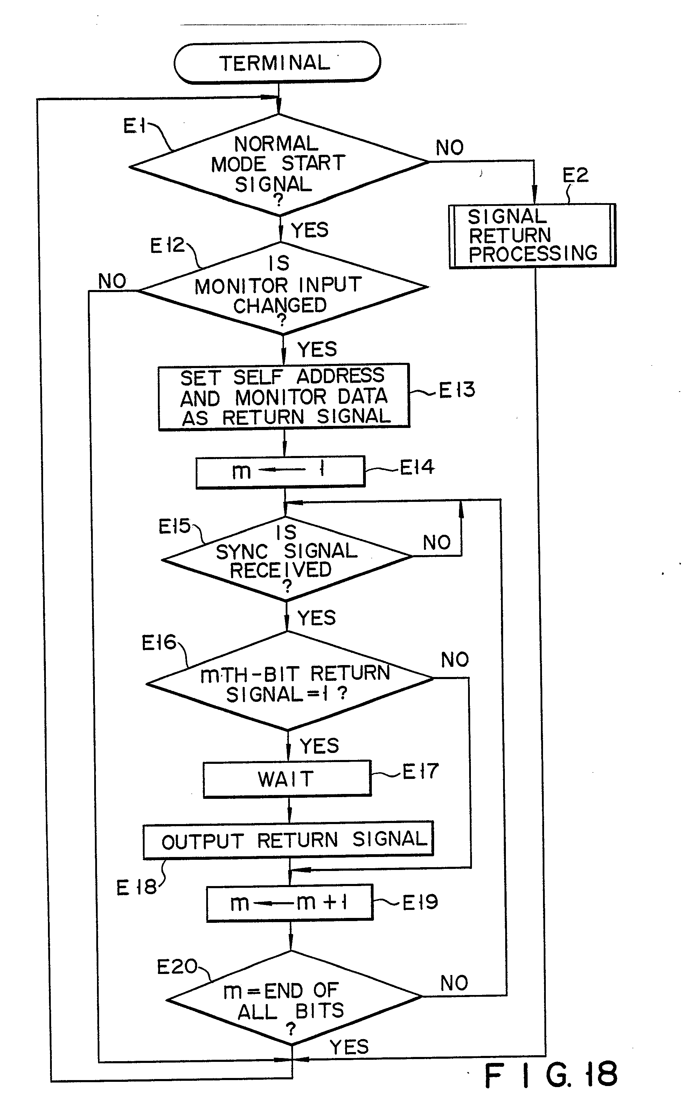

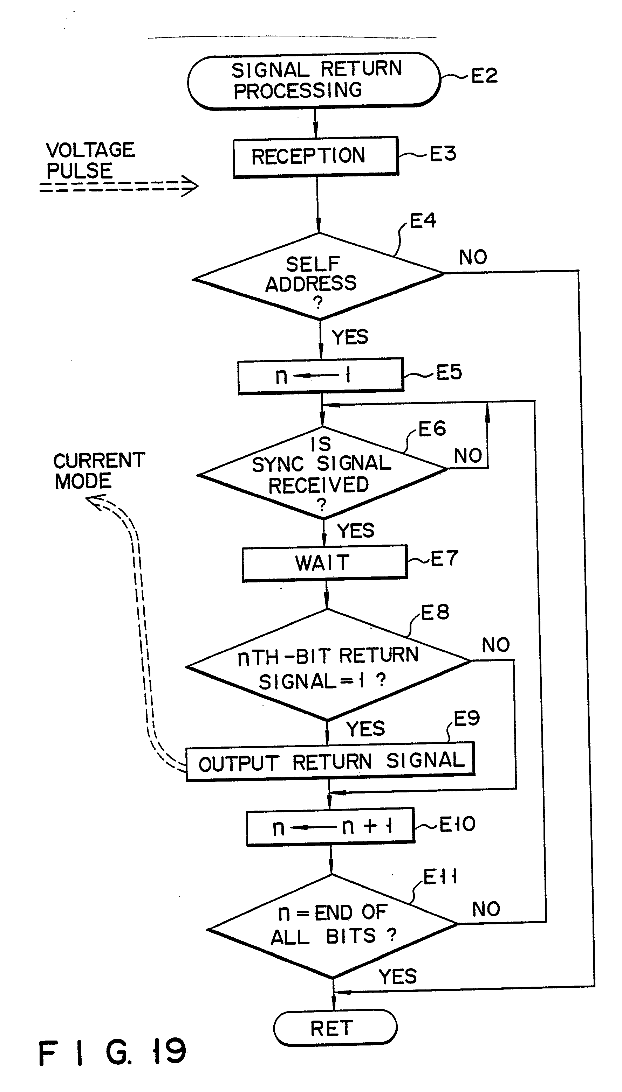

When the power switches of the central processing apparatus 10a, the terminals 14a, and a monitor display panel 16 are turned on, they start operations in accordance with control programs stored in their CPUs. Various memories, flags, registers, and the like stored in each CPU are initialized, and endless loop processing is executed in accordance with the following flow charts. The processing of the central processing apparatus 10a is shown in the flow charts of Figs. 16 and 17 and the processing of the terminal 14a is shown in the flow charts of Figs. 18 and 19, and the processing of the monitor display panel 16 is shown in the flow chart of Fig. 11 described above.

(2A. Operation of Central Processing Apparatus 10a)

Referring to Fig. 16, the central processing apparatus 10a checks in step D1 if data transmission to be performed is in a normal mode. If there is no data to be transmitted from the central processing apparatus 10a to each terminal 14a, i.e., activation data, the normal mode is selected, and a normal mode flag is set in step D31 (to be described later). If activation data is detected, the normal mode flag is reset in step D30. Therefore, in step D1, the normal mode flag is checked. If the flag is set in step D1, the flow advances to step D15, and (ii) normal mode processing in steps D15 through D31 is executed. If the normal mode flag is reset, the flow advances to step D2, and (i) central activation processing in steps D4 through D14 shown in Fig. 14 is executed.

(i) Central Activation Processing

Referring to Fig. 17, in the central activation processing, in step D3, transmission data having a start signal ST, a destination terminal address ADR, a control signal (activation data) CNT, and the like is transmitted from a driver 22 onto the transmission lines 12 in the voltage mode. After a control variable $n$ is set to be 1 in step D4, return signal reception processing in steps D5 through D14 is executed.

In the return signal reception processing, in step D5, an nth sync signal is transmitted from the driver 22. The sync signal is a "1"-level short pulse, and then keeps "0" level. In loop processing of steps D6 through D11, an output from a current detector 20 is checked.

When a current mode return signal is transmitted from the terminal 14a, the output voltage from the current detector 20 is changed. If transmission of the return signal is detected in step D6, the presence of the return signal is determined, and the flow advances from step D6 to step D7. In step D7, the output voltage from the driver 22 is inverted. It is determined in step D8 that an nth bit of return data is "1". The control stands by in step D9 until no more return signal is detected. In step D10, the output voltage from the driver 22 is inverted again to restore the transmission lines 12 to "0" level as the original voltage level. Thereafter, in step D13, the control variable $n$ is incremented by 1, and the flow advances to step D14. With the processing in steps D7 through D10, "1" of the current mode return signal is converted to "1" of a voltage mode signal.

In the second embodiment, when 1 bit (return signal) of return data to be transmitted is "1", the terminal 14a transmits the current mode signal "1". However, when it is "0", the terminal 14a does not transmit the current mode signal. If a predetermined period of time (e.g., 600 μs) has passed without detecting a current mode return signal in loop processing in steps D6 through D11, the absence of the return signal is determined in step D11, and the flow advances to step D12. In step D12, it is determined that an nth bit of return data is "0", and the control variable $n$ is incremented by 1 in step D13. Thereafter, the flow advances to step D14. When the return signal is absent, the output voltage from the driver 22 is kept at "0" level, and as a result, "0" of the current mode return signal on the transmission lines 12 is represented by "0" in the voltage mode. More specifically, the current mode return signal is converted to the voltage mode signal on the transmission lines 12 regardless of level, i.e., "0" or "1".

It is checked in step D14 if processing of the current mode return signal from the terminal 14a, e.g., detection, level discrimination, conversion to the voltage mode signal, and the like is completed for all the bits of return data. The control variable $n$ indicates the number of processed bits. If the control variable $n$ does not reach a bit count N of the return data, since return signals which are not received yet remain, the flow returns from step D14 to step D5 to repeat return signal reception processing in steps D5 through D14.

If the control variable $n$ has reached the bit count N of the return data, since all the bits of the return data have been received, it is determined in step D14 that a return operation from the terminal is completed. The return signal reception processing is canceled, and the flow advances to step D27 in Fig. 16.

In step D27, the sync signal is output, and it is checked in step D28 if there is data to be transmitted to the terminal 14a. If YES in step D28, new data is set as transmission data in step D29. In step D30, the normal mode flag is reset, and the flow then returns to step D1. If NO in step D28, the normal mode flag is set in step D31, and the flow returns to step D31.

(ii) Normal Mode Processing

Referring to Fig. 16, if there is no data to be transmitted from the central processing apparatus 10a to the terminal 14a, as described above, the normal mode flag is reset in step D31, and the reset flag is detected in step D1. The flow then advances to step D15. The normal mode processing in steps D15 through D26 is executed.

In the normal mode processing, a normal mode start signal is transmitted onto the transmission lines 12 in step D15. After a control variable $m$ is set to be 1 in step D16, terminal signal reception processing in steps D17 through D26 is executed.

In the terminal signal reception processing, an mth sync signal is transmitted from the driver 22 in step D17. The output from the current detector 20 is checked in loop processing of steps D18 and D23. The sync signal is a "1"-level short pulse, and is followed by a "0"-level terminal standby period for detecting 1 bit (terminal signal) of terminal data.

In the terminal signal reception processing, when a current mode terminal signal is transmitted from the terminal 14a, the output voltage of the current detector 20 changes as in the return signal reception processing described above. When the change in output voltage of the current detector 20, i.e., transmission of the terminal signal is detected, the presence of the terminal signal is determined in step D18, and the flow advances from step D18 to step D19. In step D19, an output voltage from the driver 22 is inverted. In step D20, it is determined that an mth bit of terminal data is "1". In step D21, the control stands by until the current mode terminal signal changes to "0" again. In step D22, the output voltage of the driver 22 is inverted again to restore the voltage mode of the transmission lines 12 to "0" level. Thereafter, the flow advances to step D25. With the processing in steps D19 through D22, "1" of the current mode terminal signal is converted' to "1" of the voltage mode signal.

As has been described in the return signal reception processing, in this embodiment, if the terminal signal as one bit of the transmission data transmitted from the terminal 14a to the central processing apparatus 10a is "1", the current mode signal transmitted from the terminal 14a is "1". However, if it is "0", the current mode signal is "0", and this is equivalent to a non-signal state.

When the predetermined period of time (e.g., 600 μs) has passed without detecting the current mode terminal signal in the loop processing of steps D18 and D23, the flow advances from step D23 to step D24. After it is determined in step D24 that the mth bit of the terminal data is "0", the flow advances to step D25. When the current mode terminal signal is "0", the output voltage of the driver 22 is kept at "0", i.e., is left unchanged. In this case, it can be considered that the current mode terminal signal is converted to the voltage mode signal. More specifically, the current mode terminal signal is converted to the voltage mode signal by the processing in steps D17 through D24 regardless of level, i.e., "0" or "1", and is transmitted onto the transmission lines 12.

In step D25, the control variable $m$ is incremented by 1. In step D26, it is checked all the bits of the terminal data have been received. The control variable $m$ indicates the number of processed bits. If the control variable $m$ does not reach a bit count M of the terminal data, all the bits of the terminal data are not received yet. In this case, the flow returns from step D26 to step D17, and the terminal signal reception processing in steps D17 through D26 is repeated.

If the control variable $m$ is equal to the bit count M of the terminal data, all the bits of the terminal data have been received. In this case, it is determined in step D26 that reception of the terminal data is completed. The flow advances from step D26 to step D27. After the processing in steps D27 through D31, and other necessary operations are completed, the flow returns to step D1 to repeat the above-mentioned processing.

(2B. Operation of Terminal 14a)

Referring to Fig. 18, the terminal 14a checks in step E1 on the basis of an output from the receiver 36 if the voltage mode signal transmitted from the central processing apparatus 10a is a normal mode start signal. If the normal mode start signal transmitted in the processing of step D15 shown in Fig. 16 described above has been received from the central processing apparatus 10a, the flow advances to step E12 (to be described later) to check if a load monitor input changes. If the monitor input changes, terminal activation processing consisting of loop processing of steps E16 through E20 (to be described later) is executed to transmit the monitor input to the central processing apparatus 10a as monitor data (terminal data). If no monitor input is detected in step E12, since there is no data output in correspondence with the normal mode start signal, another processing (not shown) is executed, and the flow then returns to step E1 to wait for the next start signal.

If the start signal received in step E1 is not the normal mode start signal but a central activation start signal sent from the central processing apparatus 10a by the processing in step D3 (Fig. 17), the flow advances to step E3 in Fig. 19 to receive transmission data such as the destination address ADR, control signal CNT, and the like transmitted from the central processing apparatus 10a after the central activation start signal. It is checked in step E4 if the destination address ADR coincides with the self address. If NO in step E4, since the following control signal CNT is transmitted to another terminal 14a, another processing is executed, and the flow returns to step E1 to wait for the next start signal.

If YES in step E4, return processing in steps E5 through E11 (to be described later) is executed.

(iii) Return Processing

In the return processing, the control variable $n$ is set to be 1 in step E5, and the control stands by in step E6 until the sync signal is received. If the sync signal is received in step E6, the control stands by for a predetermined period of time (e.g., 50 $\mu$s) in step E7. Thereafter, it is checked in step E8 if an nth bit (return signal) of return data is "1". If YES in step E8, a current mode return signal of "1" is sent from the transmitter 38 onto the transmission lines 12 in step E9, and the flow then advances to step E10. The current mode return signal is received by the central processing apparatus 10a (step D6 in Fig. 17), and is converted to a voltage mode signal (steps D7 through D10 in Fig. 17). If it is determined in step E8 that the nth bit of the return data is "0", since the current mode return signal of "0" is equivalent to a non-signal state, the current mode signal return processing in step E9 is skipped, and the flow directly advances from step E8 to step E10.

In step E10, the control variable $n$ is incremented by one. It is checked in step E11 if all the bits of return data are sent. If NO in step E11, the flow returns to step E6, and the processing in steps E6 through E11 is repeated for the next bit (return signal). If YES in step E11, the return processing is terminated, and the flow returns to step E1.

(iv) Terminal Activation Processing

As described above, when the normal mode start signal is received in step E1 and the presence of the monitor input is determined in step E12, the monitor data is transmitted to the central processing apparatus 10a by the terminal activation processing in steps E12 through E20.

In the terminal activation processing, in step E13, the self address and monitor data are set as terminal data. In step E14, the control variable $m$ is set to be 1. Thereafter, terminal data transmission processing as loop processing of steps E15 through E20 is executed, and terminal data is output in the current mode bit by bit as a terminal signal for every cycle of the terminal data transmission processing.

More specifically, the control stands by in step E15 until the sync signal is received. If the sync signal is received, it is checked in step E16 if the mth bit (terminal signal) of terminal data is "1". If YES in step E16, the control stands by for a predetermined period of time (e.g., 50 $\mu$s) in step E17. In step E18, a current mode terminal signal of "1" is transmitted from the transmitter 38 onto the transmission lines 12.

Thereafter, the flow advances to step E19. The current mode terminal signal is received by the central processing apparatus 10a (step D18 in Fig. 16), and is converted to a voltage mode signal (steps D19 through D22 in Fig. 16). On the other hand, if it is determined in step E16 that the mth bit of the terminal data is "0", since the current mode signal of "0" is equivalent to a non-signal state, the current mode signal transmission processing in step E18 is skipped, and the flow directly advances from step E16 to step E19.

In step E19, the control variable $m$ is incremented by one, and it is then checked in step E20 if all the bits of the terminal data are transmitted. If NO in step E20, the flow returns to step E15, and the processing in steps E15 through E20 is repeated for the next bit (terminal signal). Meanwhile, if YES in step E20, the terminal activation processing is terminated, and the flow returns to step E1.

In the above description, a sync signal is output to have a one-to-one correspondence with each bit of return data or terminal data, i.e., the return signal or terminal signal. One sync signal may be output every plurality of bits. Alternatively, a sync signal may be output for one bit, e.g., the first bit.

In this manner, the central processing apparatus outputs one or a plurality of sync signals during a signal standby period from the terminals, and each terminal outputs the return or terminal signal at a timing according to this sync signal, so that the following advantages can be obtained.

(1) Since the central processing apparatus manages a signal transmission timing from each terminal, timing adjustment can be facilitated. (2) Since the central processing apparatus can limit the number of sync pulses, the terminal transmission standby period can have a redundancy. In addition, the number of transmission bits from the terminal can have a redundancy. (3) As described above, since the transmission period and the number of transmission bits can enjoy redundant conditions if the time and bit count remain the same, a transmission speed can be increased by the margins.

(Third Embodiment)

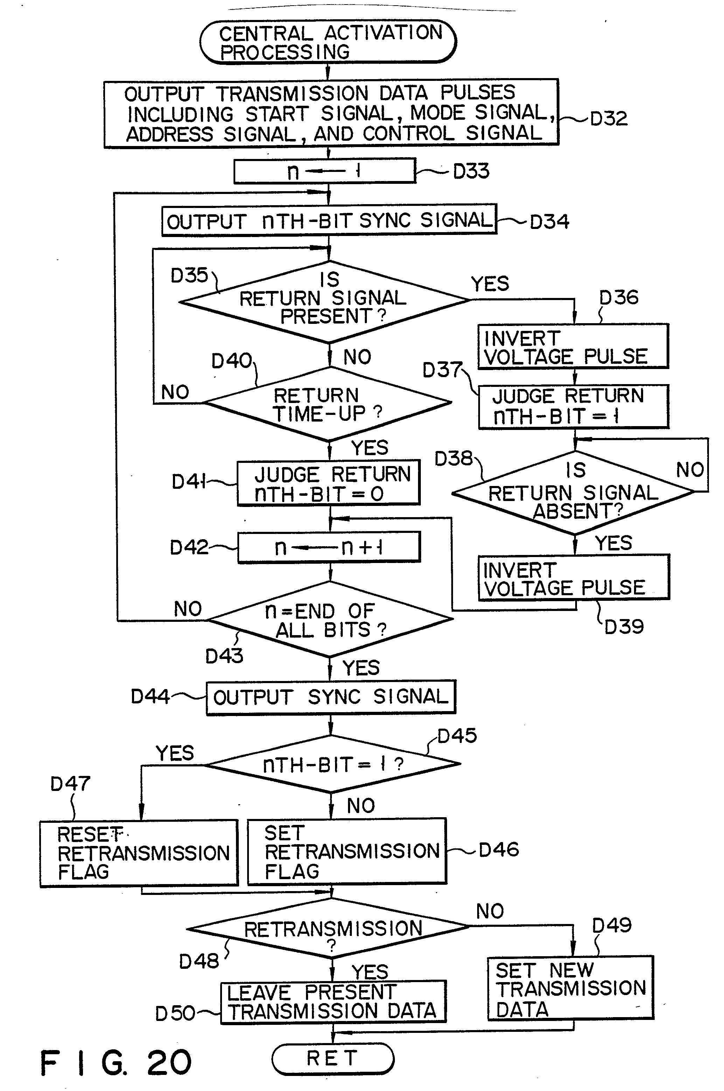

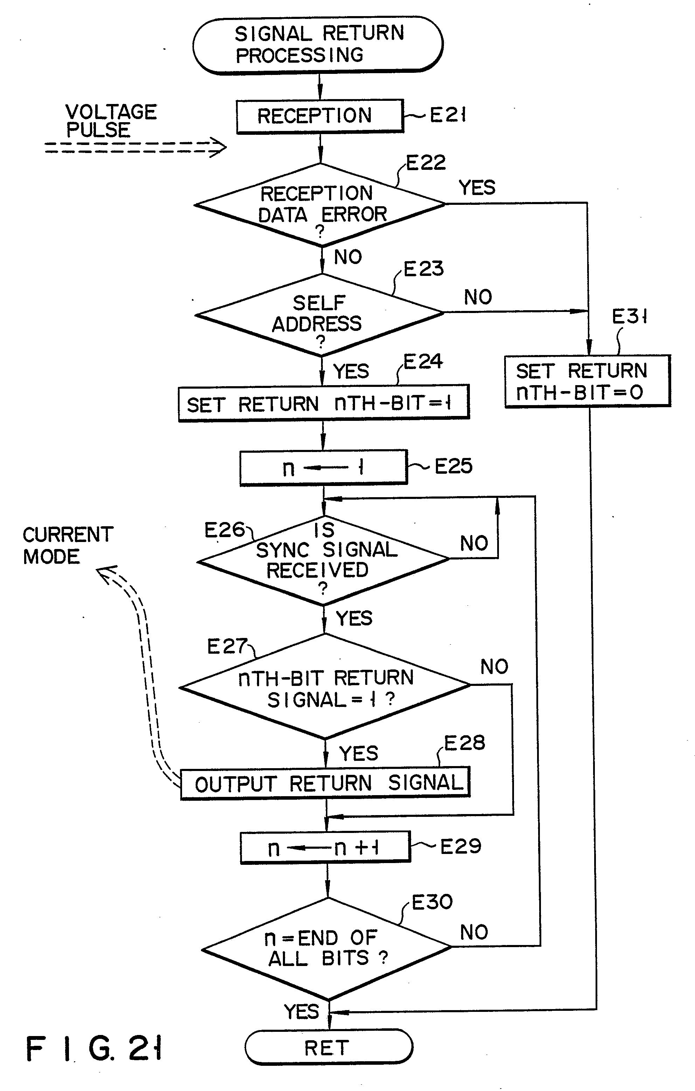

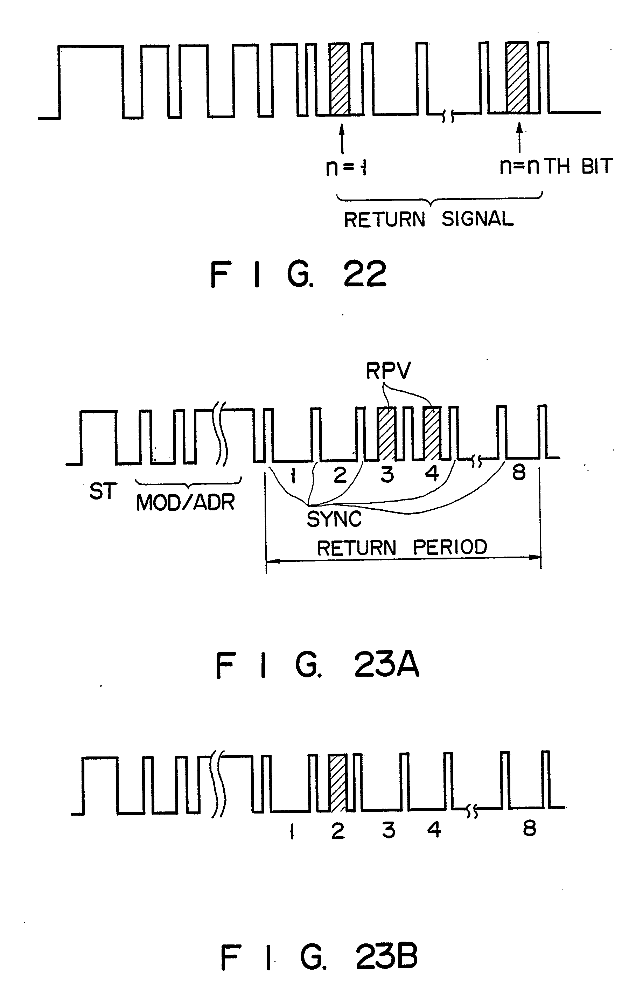

A third embodiment of the present invention will be described below with reference to flow charts of Figs. 20 and 21 and to Figs. 22, 23A, and 23B.

In the second embodiment described above, a central processing apparatus sends a sync signal to each terminal, and the terminal sends a current mode signal in synchronism with the sync signal if a return or terminal signal is "1".

In the third embodiment, a status bit which goes to "1" only when transmission is normally ended is added to an end portion of a transmission signal. The central processing apparatus checks the status bit to determine whether or not received data is legal. Thus, it can be prevented that the central processing apparatus cannot determine whether transmission from the terminal to the central processing apparatus is completed without an error or failure and is interrupted due to an error or failure, and that the central processing apparatus performs erroneous operations.

An operation of the signal transmission system according to the third embodiment will now be described with reference to the flow charts shown in Figs. 20 and 21.

In the third embodiment, since the operation in the terminal activation mode is the same as that in the second embodiment, only the operation in the central activation mode will be described below, and other descriptions will be omitted.

(3A. Operation of Central Processing Apparatus 10a)

When data to be transmitted to a terminal 14a, i.e., activation data is generated in a central processing apparatus 10a, (i) central activation processing shown in Fig. 20 is executed.

(i) Central Activation Processing

Referring to Fig. 20, in the central activation mode, transmission data having a start signal ST, a mode signal MOD, a destination terminal address ADR, a control signal (activation data) CNT, and the like is transmitted in a voltage mode onto transmission lines 12 in step D32. Subsequently, a control variable $n$ is set to be 1 in step D33. Thereafter, return signal reception processing in steps D34 through D43 is executed.

In the return signal reception processing, an nth sync signal is transmitted in step D34, and an output from a current detector 20 is checked in loop processing of steps D35 and D40 (to be described later).

If a return signal transmitted from the terminal 14a in processing in step E28 (to be described later) in Fig. 21 is detected in step D35, the flow advances from step D35 to step D36. In step D36, a voltage mode output onto the transmission lines 12 is inverted. In step D37, it is determined that an nth bit of return data is "1". In step D38, the control waits until no more return signal which is being received is detected. In step D39, the voltage mode output onto the transmission lines is inverted again to be restored, and the control variable $n$ is incremented by one in step D42. The flow then advances to step D43. With processing in steps D36 through D39, "1" of a current mode return signal is converted to "1" of a voltage mode signal.

If a predetermined period of time (e.g., 600 $\mu$s) has passed without detecting a current mode return signal in loop processing of steps D35 and D40, the absence of a return signal is determined in step D40, and the flow advances to step D41. In step D41, it is determined that the nth bit of return data is "0", and the control variable n is incremented by one in step D42. The flow then advances to step D43.

It is checked in step D43 if a current mode return signal is received from the terminal 14a for all the bits of return data, i.e., all the bits are received. If NO in step D43, the flow returns to step D34, and the return signal reception processing in steps D34 through D43 is repeated. On the other hand, if YES in step D43, a sync signal is output in step D44, and processing in steps D45 through D50 is executed. After the processing, the flow advances to step D27 in Fig. 16.

In the third embodiment, processing in steps D45 through D50 is added to the processing in the second embodiment.

In Fig. 20, it is checked in step D45 if the nth bit of return data is "1". The nth bit, i.e., the final bit is transmission data from the terminal 14a which indicates whether or not communication between the central processing apparatus 10a and the terminal 14a is normally performed.

If NO in step D45, it is determined that data transmission from the central processing apparatus 10a to the terminal 14a or from the terminal 14a to the central processing apparatus 10a includes an error, and a retransmission flag is set in step D46. If YES in step D45, since the communication is normally performed, the retransmission flag is reset in step D47.

In step D48, the retransmission flag is checked. If the flag is reset, new data is set in step D49, and the flow advances to step D27. If the flag is set, the present transmission data is left in step D50, and the flow advances to step D27.

(3B. Operation of Terminal)

In the terminal 14a, if a voltage mode start signal transmitted from the central processing apparatus 10a in step E1 in Fig. 18 is a central activation start signal transmitted in the processing of step D32 in Fig. 20 of the central processing apparatus 10a, the flow advances to step E21 in Fig. 21. The terminal 14a receives the transmission data such as the destination address ADR, the control signal CNT, and the like transmitted after the central activation start signal from the central processing apparatus 10a. It is checked in step E22 if a received data error is present. If YES in step E22, the flow advances to step E31 (to be described later); otherwise, the flow advances to step E23.

In step E23, it is checked if the destination address ADR coincides with the self address. If NO in step E23, the following control signal CNT is transmitted to another terminal 14a. In this case, the flow advances to step E31.

In step E31, "0" is set in the last bit of the return data, and the flow returns to step E1 described above. In step E1, the next start signal is waited.

If YES in step E23, "1" is set in the final bit of the return bit in step E24, and return processing in steps E25 through E30 (to be described later) is executed.

(ii) Return Processing

In the return processing, the control variable n is set to be 1 in step E25. In step E26, the control stands by until the sync signal is received. If YES in step E26, the controls stands by for a predetermined period of time (e.g., 50 $\mu$s). Thereafter, it is checked in step E27 if the nth bit (return signal) of the return data is "1". If YES in step E27, a "1"-level current mode return signal is transmitted from the transmitter 38 onto the transmission lines 12, and the flow then advances to step E29. The current mode return signal is received by the central processing apparatus 10a (step D35 in Fig. 20), and is converted to a voltage mode signal (steps D36 through D39 in Fig. 20).

On the other hand, if NO in step E27, since the "0"-level current mode return signal is equivalent to a non-signal state, current mode signal transmission processing in step E28 is skipped, and the flow directly advances from step E27 to step E29.

In step E29, the control variable n is incremented by 1, and it is then checked in step E30 if all the bits of return data are transmitted. If NO in step E30, the flow returns to step E26, and the processing in steps E26 through E30 is repeated for the next bit (return signal). On the other hand, if YES in step E30, the return processing is ended, and the flow returns to step E1 described above.

In this embodiment, as shown in Fig. 22, one bit is added to the end of the return data, and the final bit, i.e., an nth bit is used as a reception and return status bit of the terminal 14a. If communication is normally performed, the bit is set to be "1". For this reason, when the central processing apparatus 10a receives a "1"-level current mode as the final bit, it can determine that transmission has been normally performed.

In the above description, the status bit added to the end portion of the transmission signal is set to be "1" when the transmission is normally ended. Alternatively, the status bit may be set to be "1" when a transmission error occurs, and the central processing apparatus 10a may detect an error based on the status bit = "1".

According to the third embodiment, since the central processing apparatus can discriminate a case wherein transmission is interrupted due to a transmission error or failure from a case wherein transmission is normally ended, erroneous control can be prevented.

According to the system of this embodiment, collision processing in a random transmission mode can be optimally executed.

More specifically, when the central processing apparatus 10a detects collision of a plurality of terminal activation requests, it transmits a polling signal consisting of a start signal ST, a mode signal MOD, and a dummy address ADR for addressing all the terminals to all the activation terminals. In this case, the terminals 14a are classified into some groups, and the central processing apparatus 10a transmits sync signals SYNC in the voltage mode so that a return signal RPI having the same number of bits as that of the number of groups is returned. Collision detection in the central processing apparatus 10a can be performed on the basis of, e.g., the status signal or upon detection of variations in a reception signal.

For example, Fig. 23A shows a first polling signal from the central processing apparatus 10a after collision detection. In Fig. 23A, the return signal RPI is expressed by a signal RPV converted to the voltage mode by the central processing apparatus 10a. The terminals 14 are classified into 8 groups in accordance with a value x of upper 3 bits of the self addresses, and the sync signals SYNC are transmitted so that an 8-bit return signal is returned.

More specifically, in response to the first polling signal, each activation terminal 14a generates a "1"-level current mode return signal RPI in accordance with the group to which it belongs, e.g., at an xth bit for an xth group. Thus, the central processing apparatus 10a can detect the groups of the activation terminals 14. Fig. 23A exemplifies a case wherein the terminals 14a in the third group (upper 3 bits = "010") and in the fourth group (upper 3 bits = "011") are activated.

In the second and subsequent polling operations, polling is performed while designating the detected groups. More specifically, in the case shown in Fig. 23A, "010" (or "011") is set in the upper address of the address signal ADR, and a dummy address is set in the lower address to perform the second polling. The terminals 14a which have the upper address of "010" (or "011") generate "1"-level current mode return signals RPI at a timing according to the value of the fourth to sixth bits of their own addresses. With the second polling, the central processing apparatus 10a can detect up to upper 6 bits of one address of the activation terminal 14a.

Fig. 23B shows a polling signal from the central processing apparatus 10a in the second and subsequent polling operations after collision detection. In Fig. 23B, the second group (upper 3 bits = "001") generates a return signal. Therefore, if this polling is the second one, it can be detected that one (or a plurality) of the activation terminals 14a has an address of "010001...". Similarly, one of 512 (9 bits) addresses can be detected by three polling operations.

(Fourth Embodiment)

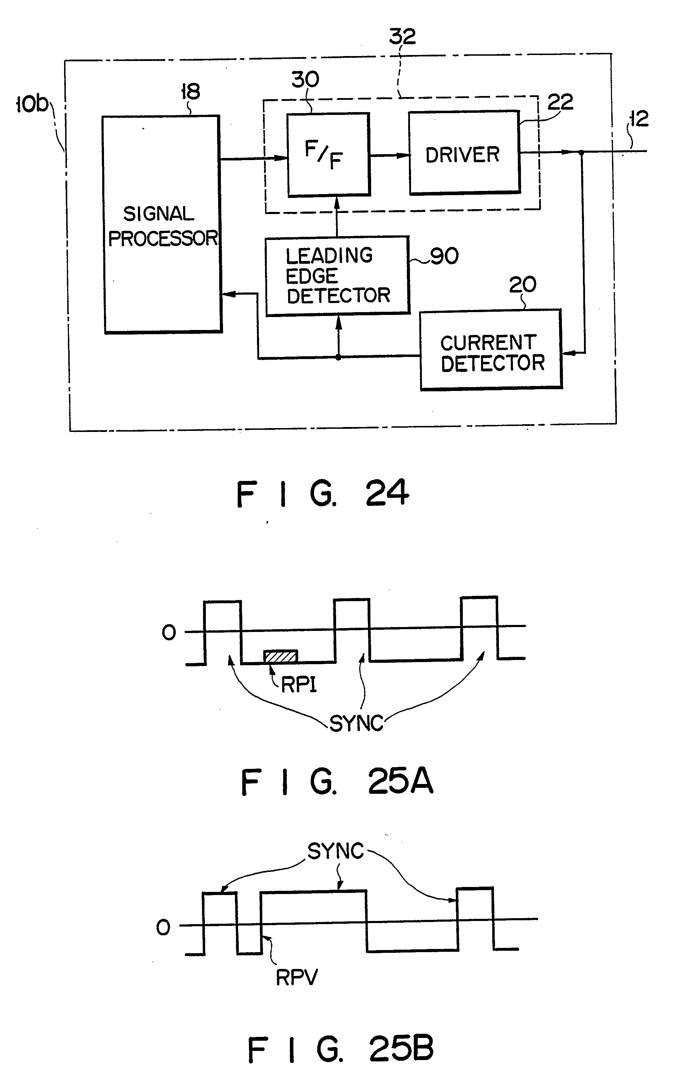

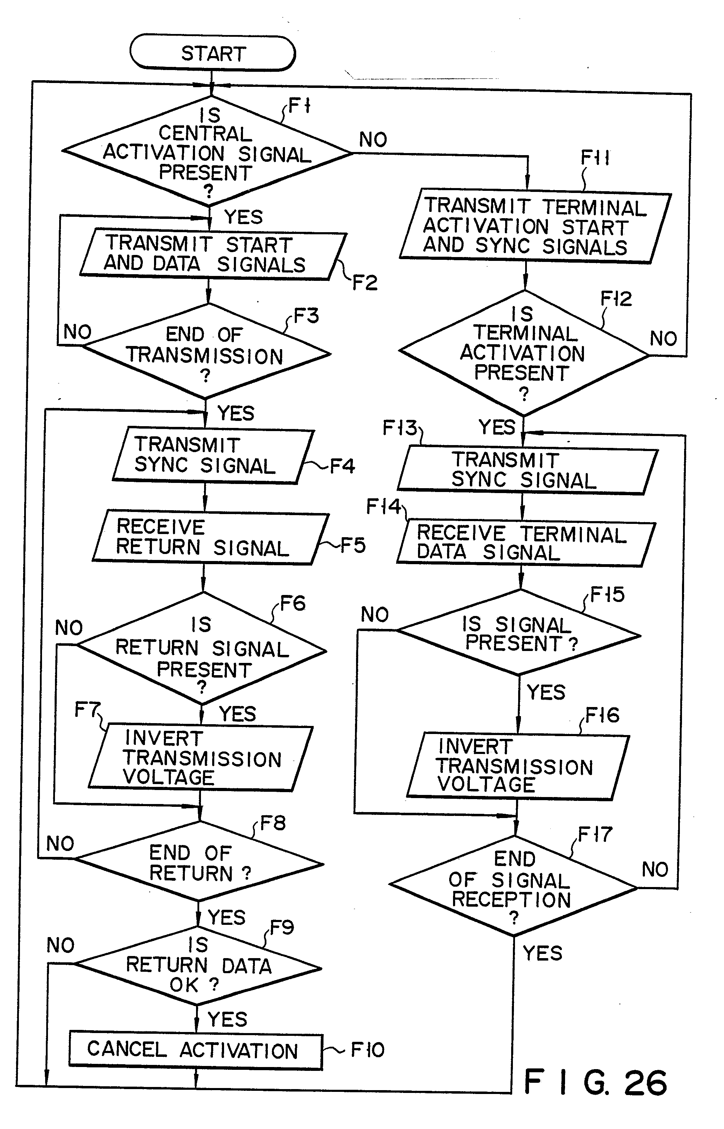

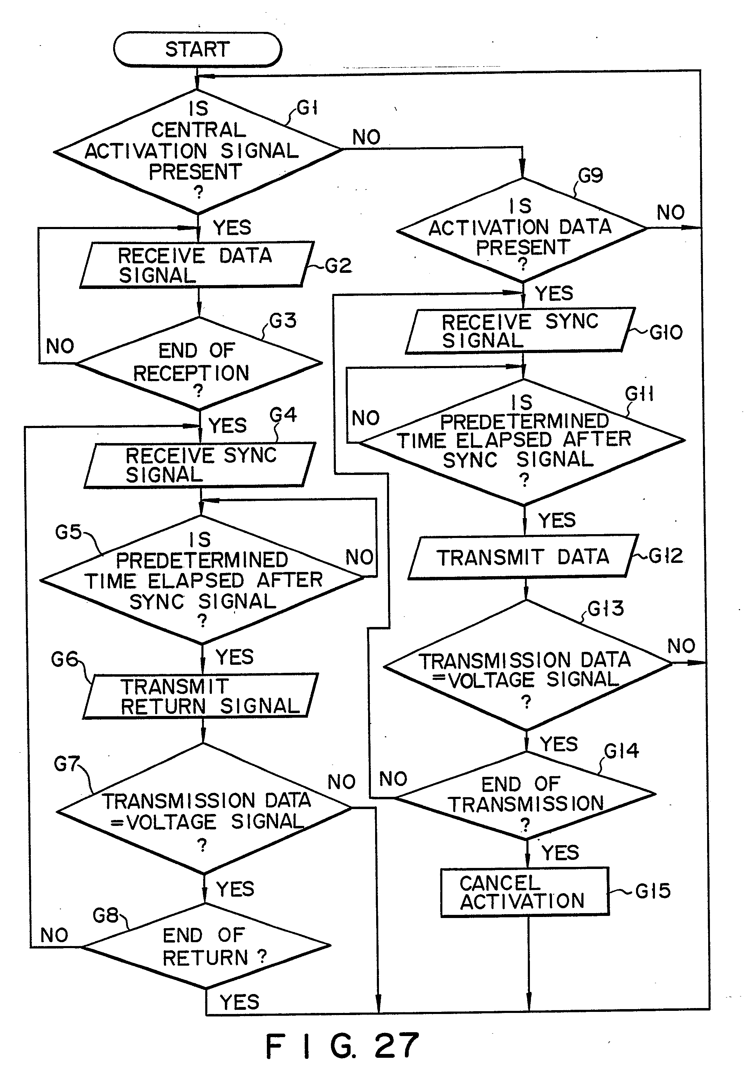

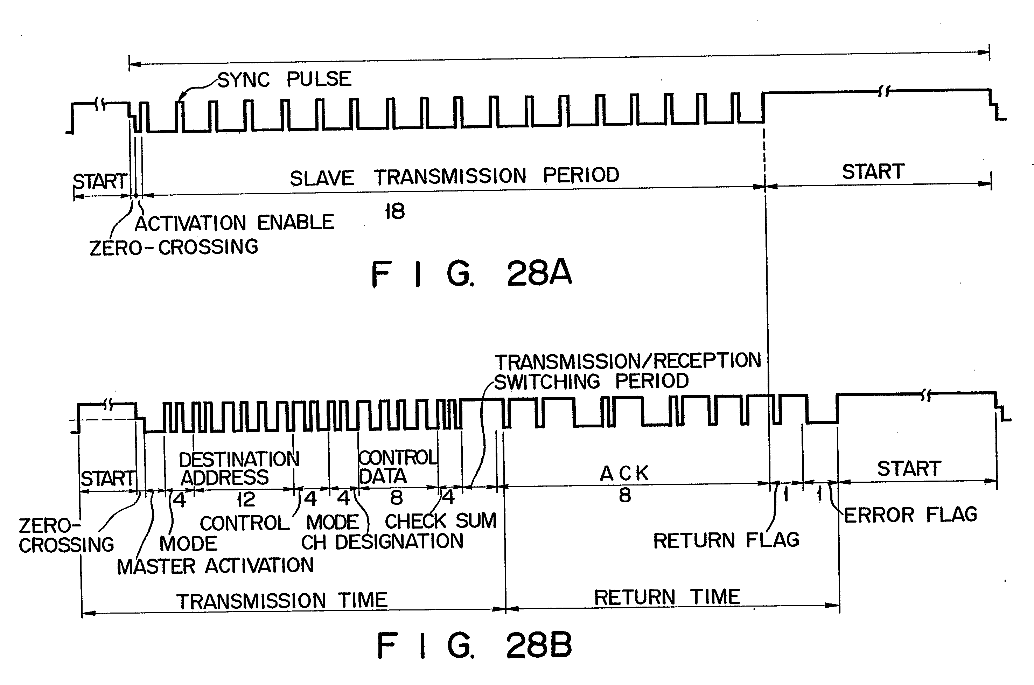

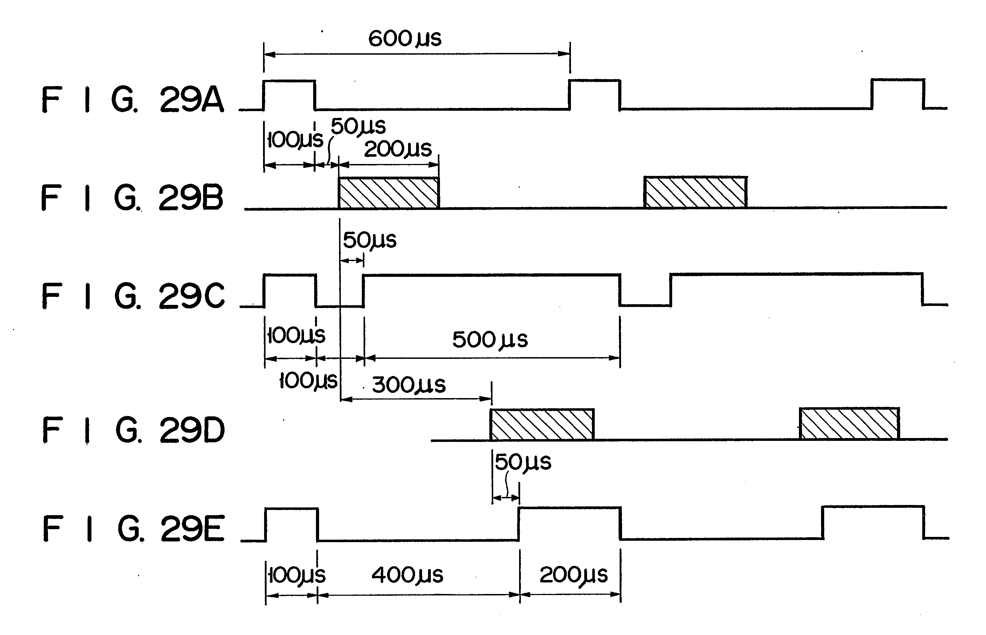

A fourth embodiment of the present invention will now be described below with reference to Figs. 24, 25A, and 25B, flow charts shown in Figs. 26 and 27, and timing charts shown in Figs. 28A through 28E and Figs. 29A through 29E.

In the fourth embodiment, the central processing apparatus 10 shown in Fig. 2 according to the first embodiment is replaced with a central processing apparatus 10b shown in Fig. 24 in the signal transmission system shown in Fig. 1.

Fig. 24 is a functional block diagram of the central processing apparatus 10b according to the fourth embodiment. In the central processing apparatus 10 shown in Fig. 2, when a current mode signal is transmitted from each terminal to the central processing apparatus, the output from the F/F 30 is inverted twice in response to leading and trailing edges of one current mode signal, so that one current mode signal is converted into one voltage pulse. In contrast to this, in the central processing apparatus 10b shown in Fig. 24, a leading edge detector 90 is used in place of the differentiator 26, so that the output from the F/F 30 is inverted at only the leading edge of the signal. As shown in Figs. 25A and 25B, a sync signal is generated for every bit of return or terminal data from each terminal, and the F/F 30 is reset in response to the trailing edge of the sync signal. Fig. 25A shows a voltage waveform chart of transmission lines 12 if the F/F 30 is omitted, and Fig. 25B shows a voltage waveform chart of the fourth embodiment. The functions of the leading edge detector 90, the F/F 30, and the like are realized by the control program of a CPU 54.

The operation of the system with the arrangement shown in Figs. 1, 6, 7, and 24 will be described below with reference to the flow charts shown in Figs. 26 and 27.

When the power switches of the central processing apparatus 10b, terminals 14b, and a monitor display panel 16 are turned on, they start predetermined operations in units of CPUs. The central processing apparatus 10b, each terminal 14b, and the monitor display panel 16 respectively execute endless loop processing shown in the flow chart of Fig. 26, the flow chart of Fig. 27, and the flow chart of Fig. 11 described above.

(4A. Operation of Central Processing Apparatus)

Referring to Fig. 26, the central processing apparatus 10b judges the presence/absence of activation data in step F1. If there is data to be transmitted to a terminal, i.e., activation data, central activation (master activation) processing in steps F2 through F10 is executed; if there is no activation data, normal mode processing in steps F11 through F17 is executed.

(i) Central Activation Processing

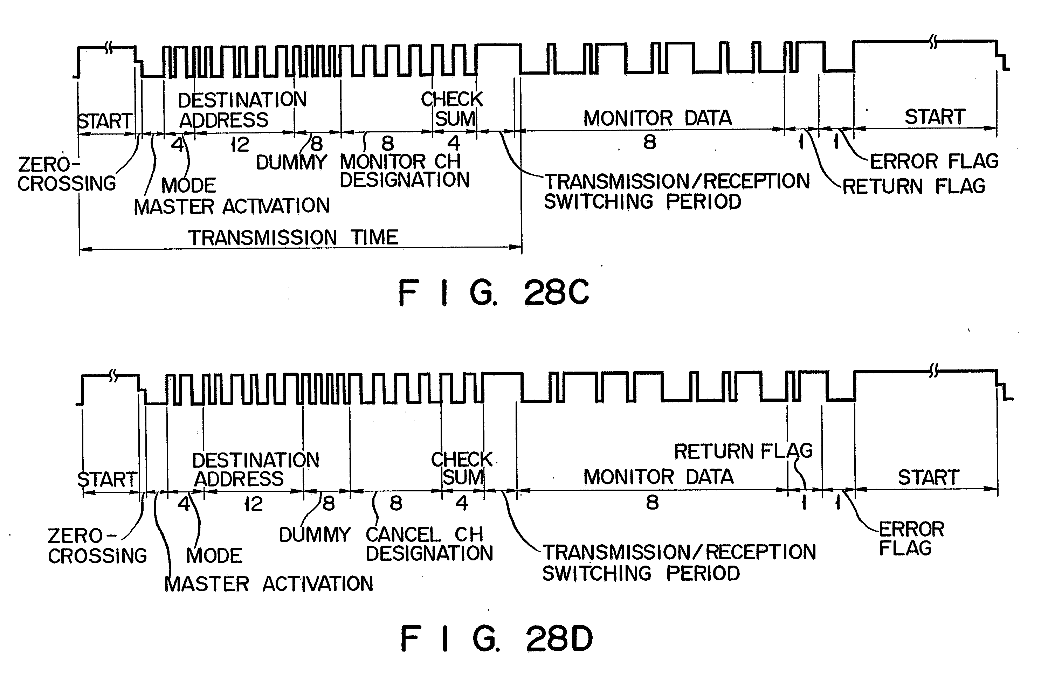

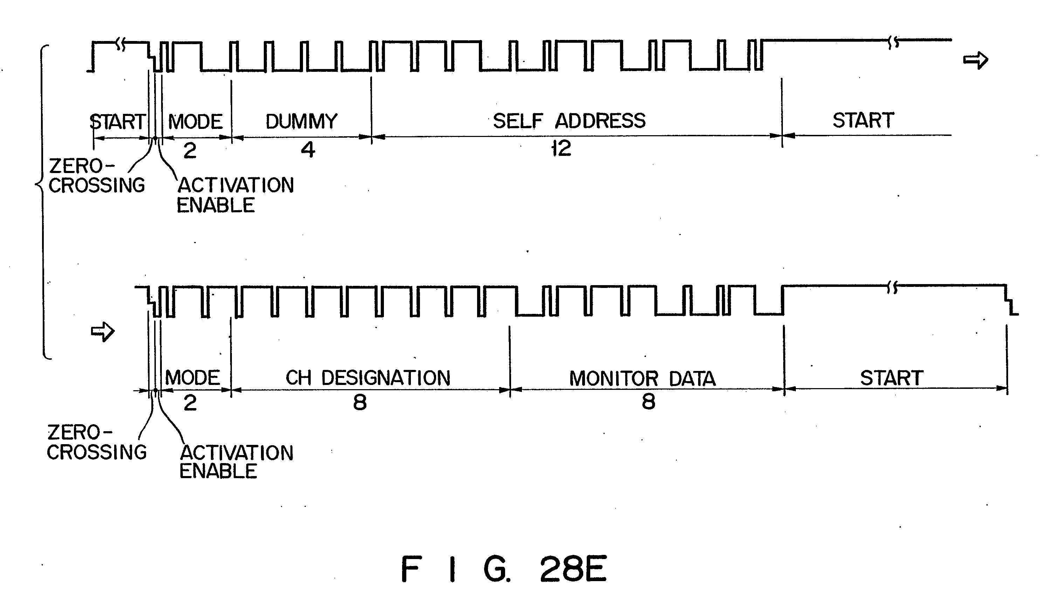

In the central activation processing, transmission data having a start signal ST, a destination terminal address ADR, a control signal (activation data) CNT, and the like shown in Figs. 28B through 28D is transmitted in a voltage mode from a driver 22 onto the transmission lines 12 in accordance with the activation data in step F2. Figs. 28B, 28C, and 28D show transmission signals in a master activation mode corresponding to sync pulses of the normal mode shown in Fig. 28A (20 ms at one power supply cycle = 50 Hz; 16.7 ms at the cycle = 60 Hz), and respectively indicate a control mode, a monitor mode, and a slave activation cancel mode. Fig. 28E shows a transmission signal in a slave activation mode (to be described later). The transmission data is output bit by bit via every processing of step F2. In step F3, it is checked if the processing in step F2 is repeated the predetermined number of times corresponding to the number of bits of the transmission data. If the processing count in step F2 is smaller than the predetermined number of times, the flow returns to step F2. If the processing in step F2 is repeated the predetermined number of times and a voltage mode signal consisting of the predetermined number of bits is transmitted, end of transmission is determined in step F3, and the flow advances to step F4.

In step F4, a sync signal of a "1"-level voltage pulse is generated. In step F5, the output from a current detector 20 is fetched, and the presence/absence of a current mode signal from each terminal is then checked in step F6. Like in the above embodiments, in this embodiment, if one bit (return or terminal signal) of data to be transmitted is "1", the terminal 14b transmits a current mode signal; if it is "0", it does not transmit the current mode signal. Therefore, when no current mode signal is detected within a predetermined period of time (e.g., 600 $\mu$s), this means that one bit (return signal) of the data to be transmitted corresponding to an interval to which the predetermined period of time belongs is "0"; when detected, this means that the bit (return signal) is "1".

If it is determined in step F6 that the return signal is present, an output voltage from the driver 22 is inverted in step F7. After the output voltage is inverted, if no return signal is detected, the flow directly advances to step F8 while skipping step F7, that is, without inverting the output voltage from the driver 22.

It is checked in step F8 if a return operation from the terminal 14b is completed. If generation of sync signals (step F4) and reception of return signals (step F5) are not completed for all the bits of return data, since the return operation is not completed yet, the flow returns from step F8 to step F4, and processing in steps F4 through F8 is repeated.

When the processing in steps F4 through F8 is executed the same number of times as the number of bits of the return data, it is determined in step F8 that the return operation from the terminal is completed, and the flow advances to step F9. In step F9, it is checked if the return data is normal. This checking operation can be performed such that the same signal as the transmitted control signal CNT is returned as an affirmative response ACK, and it is checked if the affirmative response ACK coincides with the control signal CNT transmitted from the terminal. Alternatively, as in the third embodiment, a status signal indicating a normal/abnormal detection result of transmission/reception in the terminal is added to the end of return data from the terminal, and the checking operation in step F9 may be performed in accordance with whether or not the status data is received.

If the return data is normal, the activation data is cleared in step F10 to cancel activation, and the flow then returns to step F1.

If the return data is abnormal, the flow skips step F10, and directly returns from step F9 to step F1. In this case, since the activation data remains, the presence of the activation data is determined in step F1, and the central activation processing is executed again. More specifically, the central activation processing is repeated until the activation data is normally transmitted.

## (ii) Normal Mode Processing

If the absence of the activation data is determined in step F1, a terminal activation start signal and the first sync signal shown in Fig. 28A are transmitted in step F11. It is then checked in step F12 if a current mode activation signal is transmitted from the terminal 14b. If there is no response from any terminal within a predetermined period of time (e.g., 600 $\mu$s) in response to the sync signal following the first start signal, it is determined that no terminal activation is performed, and the flow returns to step F1.

If the terminal activation signal shown in Fig. 28E is detected in step F12, the presence of terminal activation is determined, and the flow advances to step F13. The normal mode processing in steps F13 through F17 is then executed.

In the normal mode processing, the first sync signal is transmitted in step F13, and the output from the current detector 20 is fetched in step F14.

As described above, in this embodiment, the absence of a current mode signal within the predetermined period of time (e.g., 600 $\mu$s) means that one bit of terminal data corresponding to an interval to which the predetermined period of time belongs is "0"; the presence of the current mode signal means that the bit is "1". In step F15, the fetched output of the current detector 20 is checked. If the current mode signal is detected, since the bit (terminal signal) of the terminal data corresponding to the present timing is "1", the output voltage of the driver 22 is inverted in step F16, and the flow advances to step F17.

If no terminal signal is received after the lapse of the predetermined period of time in step F15, since the bit of the terminal data corresponding to the present timing is "0", the flow skips the processing in step F16, and advances from step F15 to step F17. In this case, the output voltage of the driver 22 to the transmission lines 12 is not inverted.

It is checked in step F17 if sync signal transmission processing (step F13), reception processing (step F14), signal presence/absence determination processing (step F15), and the like are completed for all the bits of terminal data. If NO in step F17, the flow returns to step F13, and the processing in steps F13 through F17 is repeated.

When the processing in steps F13 through F17 is repeated the same number of times as the number of bits of the terminal data, end of reception is determined in step F17, and the flow returns to step F1.

(4B. Operation of Terminal)

Referring to Fig. 27, the terminal 14b checks in step G1 if the central processing apparatus 10b transmits a voltage mode central activation signal. If YES in step G1, i.e., if the central processing apparatus 10b transmits the central activation signal by the processing in step F2 in Fig. 26, the flow advances to step G2, and return processing in steps G2 through G8 is executed. However, if NO in step G1, the presence/absence of activation data is checked in step G9. If there is data to be transmitted to the central processing apparatus 10b, i.e., activation data, terminal activation (slave activation) processing as loop processing of steps G10 through G15 is executed. If no central activation signal is transmitted in step G1 and if there is no terminal data to be transmitted to the central processing apparatus 10b from the terminal, the flow returns to step G1.

(iii) Return Processing

In the return processing, voltage mode transmission data which is transmitted from the central processing apparatus 10b (steps F2 and F3 in Fig. 26) is received bit by bit for every loop processing of steps G2 and G3 on the basis of the output from a receiver 36. If the reception of the predetermined number of bits is completed, the flow advances from step G3 to step G4, and the control stands by until the sync signal is received in step G4. If the sync signal is received, the control stands by for a predetermined period of time (e.g., 50 $\mu$s) in step G5. Thereafter, in step G6, one bit (return signal) of return data is transmitted in the current mode from the transmitter 38 onto the transmission lines 12. The current mode return signal is received by the central processing apparatus 10b (step F5 in Fig. 26), and the output voltage mode from the central processing apparatus 10b is thus inverted (step F7 in Fig. 26).

In step G7, the voltage mode signal on the transmission lines 12 is received, and it is checked if the content of the received signal coincides with the content of the return signal which was sent immediately before reception.

If YES in step G7, since the return signal transmitted in step G6 is received by the central processing apparatus and the voltage mode of the transmission lines is inverted, transmission of the bit is normally performed. In step G7, it is checked if transmission of all the bits of the return signal is normally completed. If NO in step G7, the flow returns to step G4, and processing in steps G4 through G8 is repeated for the next bit (return signal). On the other hand, if YES in step G7, the return processing is terminated, and the flow returns to step G1.

If it is determined in step G7 that the content of the return signal does not coincide with that of the received signal, it is determined that the bit (return signal) of the return data is not normally received by the central processing apparatus 10b, and the flow directly returns from step G7 to step G1. In this case, the central processing apparatus 10b cannot obtain return data of the predetermined number of bits (step F9 in Fig. 26). For this reason, the activation cancel processing (step F10 in Fig. 26) is skipped, and the central activation processing is executed again. Therefore, the terminal 14b executes the return processing again in response to the central activation processing. As a result, the central activation processing of the central processing apparatus 10b and the return processing of the terminal 14b are repeated until the return data is normally transmitted.

(iv) Terminal Activation Processing

In the terminal activation processing, reception of a sync signal transmitted in the processing of step F11 or F13 in Fig. 26 of the central processing apparatus 10b is waited in step G10. If this sync signal is received, the control stands by for a predetermined period of time (e.g., 50 $\mu$s) in step G11, and one bit (terminal signal) of terminal data is transmitted in the current mode from the transmitter 38 onto the transmission lines 12 in step G12. The current mode terminal signal is received by the central processing apparatus 10b (step F15), and the output voltage mode from the central processing apparatus 10b to the transmission lines 12 is inverted (step F16 in Fig. 26).

In step G13, the voltage mode signal on the transmission lines 12 is received, and whether or not the content of the received signal coincides with that of the terminal signal sent immediately before reception is checked. If YES in step G13, since the terminal signal transmitted in step G12 is received by the central processing apparatus 10b and the voltage mode of the transmission lines 12 is inverted, the bit of the terminal data can be normally transmitted.

In step G14, it is checked if all the bits of the terminal data are transmitted. If NO in step G14, the flow returns to step G10, and the processing in steps G10 through G14 is repeated for the next bit of the terminal data. On the other hand, if YES in step G14, the terminal activation processing is terminated, and the flow returns to step G1.

If the content of the current mode signal transmitted in step G12 is different from the content of the voltage mode signal checked in step G13, it is determined that the current mode signal transmitted from the terminal 14b cannot be normally received by the central processing apparatus 10b, and the loop processing is interrupted in step G13. The flow then returns to step G1. In this case, since the activation data of the terminal 14b remains, when the terminal activation start signal is transmitted from the central processing apparatus 10b (step F11 in Fig. 26) and the flow advances from step G1 to step G9, the presence of activation data is determined in step G9, and the terminal activation processing is executed again. More specifically, the terminal activation processing is repeated until the activation data is normally transmitted to the central processing apparatus.

Figs. 29A through 29E show the timing relationship among the sync signal SYNC sent from the central processing apparatus, the current mode signal RPI sent from each terminal, and the voltage mode signal RPV sent from the central processing apparatus upon reception of the current mode signal RPI.

In Figs. 29A through 29E, a time from the trailing edge of the sync clock SYNC (Fig. 29A) to an output timing of the current mode signal RPI (Fig. 29B) in the terminal is a maximum of 50 $\mu$s, and a time from detection of the current mode signal RPI to inversion of voltage polarities (output timing of the voltage mode signal RPV (Fig. 29C)) is a maximum of 50 $\mu$s. A maximum signal delay time caused by a repeater or the like is 300 $\mu$s (Fig. 29D). The return waveform (Fig. 29E) is generated every 400-$\mu$s interval.

(Fifth Embodiment)

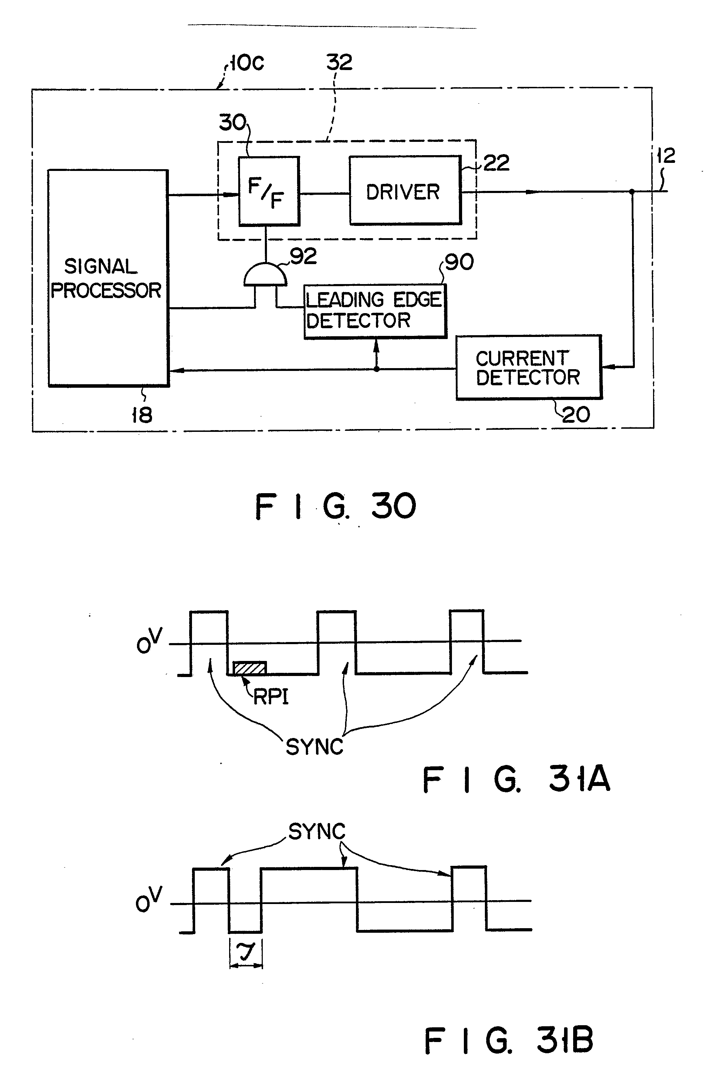

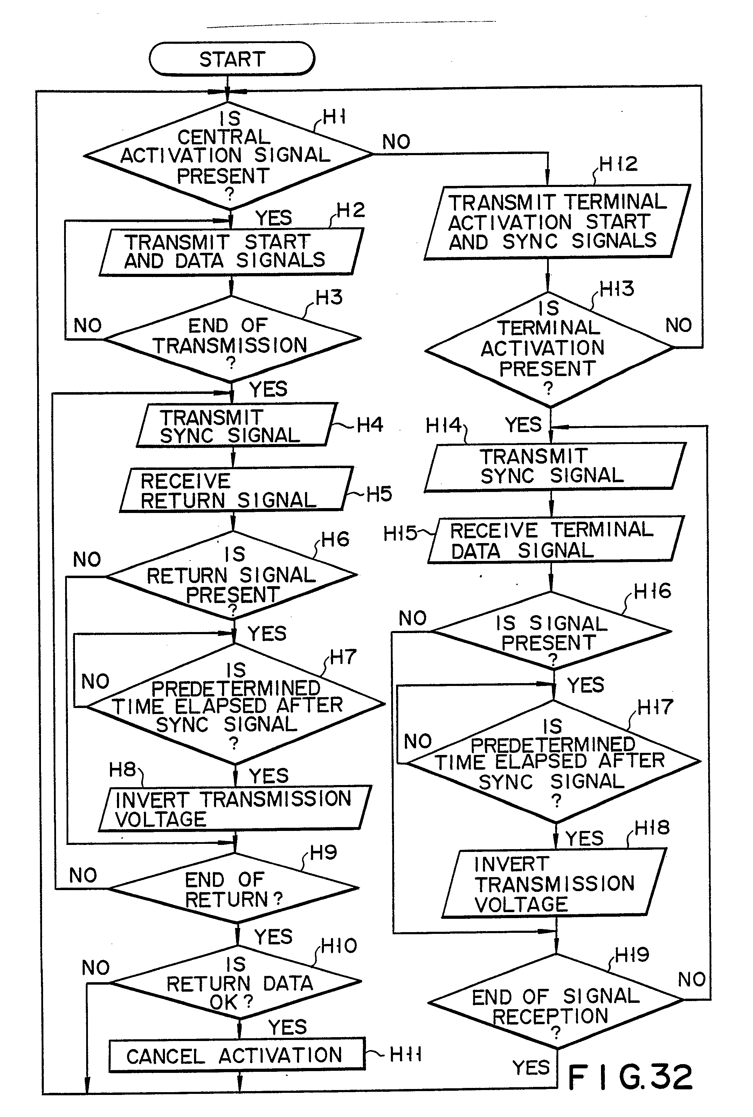

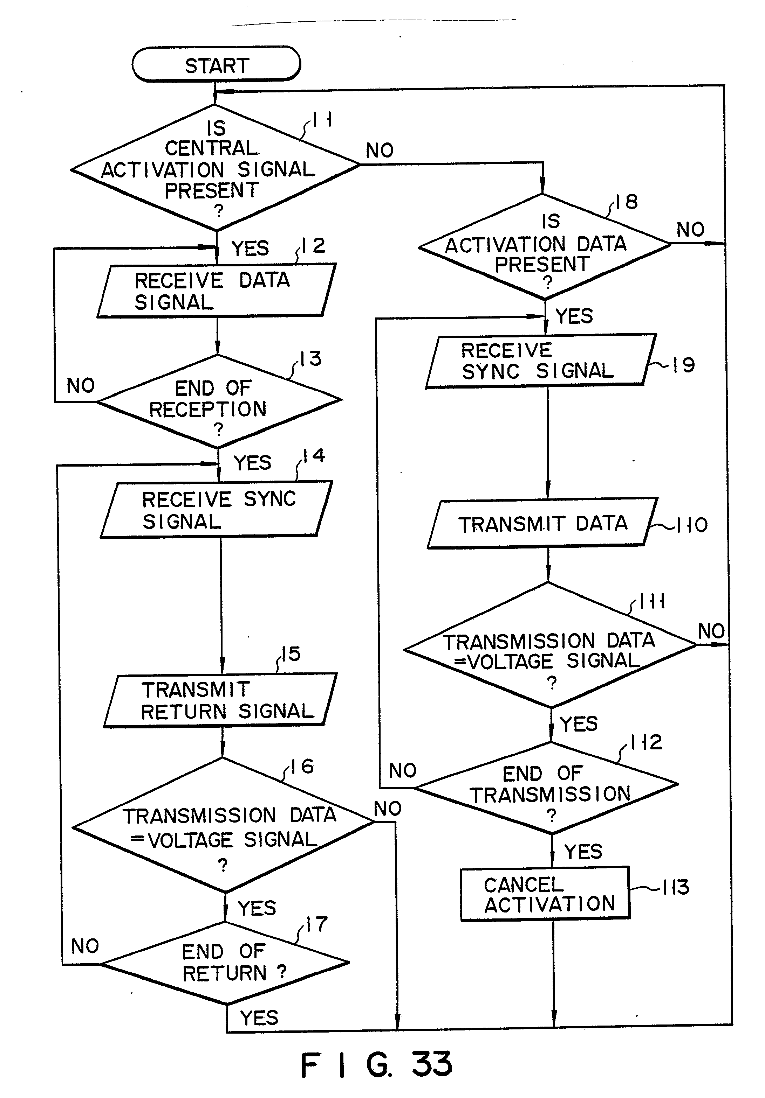

A fifth embodiment of the present invention will now be described with reference to Figs. 30, 31A, and 31B, and flow charts of Figs. 32 and 33.

In the fifth embodiment, the central processing apparatus 10b in the arrangement shown in Fig. 24 according to the fourth embodiment is replaced with a central processing apparatus 10c in the arrangement shown in Fig. 30 in the signal transmission system shown in Fig. 1.

Fig. 30 shows a functional block diagram of the central processing apparatus 10c according to the fifth embodiment. When the central processing apparatus 10c shown in Fig. 24 detects a current mode signal sent from the terminal to it, the output from the F/F 30 is inverted immediately at the leading edge of the detected signal. In contrast to this, in the central processing apparatus 10c shown in Fig. 30, an AND gate 92 is added, so that the output from the F/F 30 is inverted in accordance with a logic sum output from the AND gate 92 on the basis of the output from a leading edge detector 90 and a pulse signal generated by a signal processor 18 and delayed from the sync signal by a predetermined period of time.

Fig. 31A is a line voltage waveform chart of the transmission lines 12 when the F/F 30 is omitted, and Fig. 31B is a line voltage waveform chart of the fifth embodiment. The functions of the leading edge detector 90, the AND gate 92, the F/F 30, and the like are realized by the control program of a CPU 54.

The operation of the system with the arrangement shown in Figs. 1, 6, 7, and 30 will be described below with reference to the flow charts in Figs. 32 and 33.

When the power switches of the central processing apparatus 10c, terminals 14c, and a monitor display panel 16 are turned on, they start predetermined operations in units of their CPUs. The central processing apparatus 10c, each terminal 14c, and the monitor display panel 16 respectively execute endless loop processing shown in the flow chart of Fig. 32, the flow chart of Fig. 33, and the flow chart of Fig. 11 described above.

(5A. Operation of Central Processing Apparatus)

Referring to Fig. 32, the central processing apparatus 10c determines the presence/absence of activation data in step H1. If there is data to be transmitted to a terminal, i.e., activation data, (i) central activation (master activation) processing in steps H2 through H11 is executed; if there is no activation data, (ii) normal mode processing in steps H12 through H19 is executed.

(i) Central Activation Processing

In the central activation processing, transmission data having a start signal ST, a destination terminal address ADR, a control signal (activation data) CNT, and the like shown in Figs. 28B through 28D described above is transmitted in a voltage mode from a driver 22 onto the transmission lines 12 in accordance with the activation data in step H2. The transmission data is output bit by bit via every processing of step H2. In step H3, it is checked if the processing in step H2 is repeated the predetermined number of times corresponding to the number of bits of the transmission data. If the processing count in step H2 is smaller than the predetermined number of times in step H3, the flow returns to step H2. If the processing in step H2 is repeated the predetermined number of times and a voltage mode signal consisting of the predetermined number of bits is transmitted, end of transmission is determined in step H3, and the flow advances to step H4.

In step H4, a sync signal of a "1"-level voltage pulse is generated. In step H5, the output from a current detector 20 is fetched, and the presence/absence of a current mode signal from each terminal is then checked in step H6. Like in the above embodiments, in this embodiment, if one bit (return or terminal signal) of data to be transmitted is "1", the terminal 14c transmits a current mode signal; if it is "0", it does not transmit the current mode signal. Therefore, when no current mode signal is detected within a predetermined period of time (e.g., 600 $\mu$s), this means that one bit (return signal) of the data to be transmitted corresponding to an interval to which the predetermined period of time belongs is "0"; when detected, this means that the bit (return signal) is "1".

If it is determined in step H6 that the return signal is present, the controls stands by for a predetermined time $\tau$ (e.g., $\tau$ = 100 $\mu$s) in step H7, and an output voltage from the driver 22 is inverted in step H8. The flow then advances to step H9. When the current mode signal is detected, the voltage mode signal is inverted with a delay from the sync signal by the predetermined time $\tau$. On the other hand, if no return signal is detected in step H6, the flow directly advances to step H9 while skipping step H8, i.e., without inverting the output voltage from the driver 22.

It is checked in step H9 if the return operation from the terminal 14c is completed. If generation of sync signals (step H4) and reception of return signals (step H5) are not completed for all the bits of return data, since the return operation is not completed yet, the flow returns from step H9 to step H4, and processing in steps H4 through H9 is repeated.

When the processing in steps H4 through H9 is executed the same number of times as the number of bits of the return data, it is determined in step H9 that the return operation from the terminal 14c is completed, and the flow advances to step H10. In step H10, it is checked if the return data is normal. This checking operation can be performed such that the same signal as the transmitted control signal CNT is returned as an affirmative response ACK, and it is checked if the affirmative response ACK coincides with the control signal CNT transmitted from the terminal. Alternatively, as in the third embodiment, a status signal indicating a normal/abnormal detection result of transmission/reception in the terminal is added to the end of return data from the terminal, and the checking operation in step H10 may be performed in accordance with whether or not the status data is received.

If the return data is normal, the activation data is cleared in step H11 to cancel activation, and the flow then returns to step H1.

If the return data is abnormal, the flow skips step H11, and directly returns from step H10 to step H1. In this case, since the activation data remains, the presence of the activation data is determined in step H1, and the central activation processing is executed again. More specifically, the central activation processing is repeated until the activation data is normally transmitted.

(ii) Normal Mode Processing

If the absence of the activation data is determined in step H1, a terminal activation start signal and the first sync signal shown in Fig. 28A are transmitted in step H12. It is then checked in step H13 if a current mode activation signal is transmitted from the terminal 14c. If there is no response from any terminal within a predetermined period of time (e.g., 600 $\mu$s) in response to the sync signal following the first start signal, it is determined that no terminal activation is performed, and the flow returns to step H1.

If the terminal activation signal shown in Fig. 28E is detected in step H13, the presence of terminal activation is determined, and the flow advances to step H14. The normal mode processing in steps H14 through H19 is then executed.

In the normal mode processing, the first sync signal is transmitted in step H14, and the output from the current detector 20 is fetched in step H15.

As described above, in this embodiment, the absence of a current mode signal within the predetermined period of time (e.g., 600 $\mu$s) means that one bit of terminal data corresponding to an interval to which the predetermined period of time belongs is "0"; the presence of the current mode signal means that the bit is "1". In step H16, the fetched output of the current detector 20 is checked. If the current mode signal is detected, since the bit (terminal signal) of the terminal data corresponding to the present timing is "1", the control stands by for the predetermined time $\tau$ - (e.g., $\tau$ = 100 $\mu$s) in step H17, and the output voltage of the driver 22 is inverted in step H18. The flow then advances to step H19. With the processing in steps H16 through H18, when the current mode signal is detected, the voltage mode signal is inverted with a delay from the sync signal by the predetermined time $\tau$.

If no terminal signal is received after the lapse of the predetermined period of time in step H16, since the bit of the terminal data corresponding to the present timing is "0", the flow skips the processing in step H18, and advances from step H16 to step H19. In this case, the output voltage of the driver 22 to the transmission lines 12 is not inverted.

It is checked in step H19 if sync signal transmission processing (step H14), reception processing (step H15), signal presence/absence determination processing (step H16), and the like are completed for all the bits of terminal data. If NO in step H19, the flow returns to step H14, and the processing in steps H14 through H19 is repeated.

When the processing in steps H14 through H19 is repeated the same number of times as the number of bits of the terminal data, end of reception is determined in step H19, and the flow returns to step H1.

(5B. Operation of Terminal)

Referring to Fig. 33, the terminal 14c checks in step I1 if a voltage mode central activation signal is transmitted from the central processing apparatus 10c. If the central processing apparatus 10c transmits the central activation signal by the processing in step H2 in Fig. 32, the flow advances to step I2, and return processing in steps I2 through I7 is executed. If the central activation signal is not transmitted, the presence/absence of activation data is checked in step I8. If there is data to be transmitted to the central processing apparatus 10c, i.e., activation data, terminal activation (slave activation) processing as loop processing of steps I9 through I13 is executed. If no central activation signal is transmitted and there is no terminal data to be transmitted from the terminal to the central processing apparatus 10c in step I1, the flow returns to step I1.

(iii) Return Processing

In the return processing, voltage mode transmission data transmitted from the central processing apparatus 10c in the processing of step H2 in Fig. 32 is received bit by bit for every loop processing of steps I2 and I3 on the basis of the output from a receiver 36. If reception of the predetermined number of bits is completed, the flow advances from step I3 to step I4, and the control stands by in step I4 until the sync signal is received. If the sync signal is received, one bit (return signal) of return data is transmitted in the current mode from a transmitter 38 to the transmission lines 12 in step I5. The current mode return signal is received by the central processing apparatus 10c (step H5 in Fig. 32) and the output voltage mode from the central processing apparatus 10c is inverted (step H8 in Fig. 32).

In step I6, the voltage mode signal on the transmission lines 12 is received, and it is checked if the content of the received signal coincides with the return signal which was sent immediately before reception.

If YES in step I6, since the return signal transmitted in step I5 is received by the central processing apparatus 10c and the voltage mode of the transmission lines 12 is inverted, this indicates that the bit is normally transmitted. It is checked in step I7 if all the bits of the return data are normally transmitted. If NO in step I7, the flow returns to step I4, and processing in steps I4 through I7 is repeated for the next bit (return signal). If YES in step I7, the return processing is terminated, and the flow returns to step I1.

If it is determined in step I6 if the content of the return signal does not coincide with that of the received signal, the bit (return signal) of the return data is not normally received by the central processing apparatus 10c. Therefore, the flow directly returns from step I6 to step I1. In this case, the central processing apparatus 10c cannot obtain return data of the predetermined number of bits (step $H_{10}$ in Fig. 32). For this reason, the activation cancel processing (step H11 in Fig. 32) is skipped, and central activation processing is executed again. Therefore, the terminal 14c executes the return processing again in response to the central activation processing. As a result, the central activation processing of the central processing apparatus 10c and the return processing of the terminal are repeated until the return data is normally transmitted.

### (iv) Terminal Activation Processing

In the terminal activation processing, reception of the sync signal transmitted in the processing of step H12 or H14 of Fig. 32 of the central processing apparatus 10c is waited in step I9. When the sync signal is received, one bit (terminal signal) of terminal data is transmitted in the current mode from the transmitter 38 to the transmission lines 12 in step I10. The current mode terminal signal is received by the central processing apparatus 10c (step H16 in Fig. 32), and the output voltage mode from the central processing apparatus 10c to the transmission lines is inverted (step H18 in Fig. 32).

In step I11, the voltage mode signal of the transmission lines 12 is received, and it is checked if the content of the received signal coincides with the content of the terminal signal which was sent immediately before reception. If YES in step I11, since the terminal signal transmitted in step I10 is received by the central processing apparatus 10c and the voltage mode of the transmission lines is inverted, this indicates that the bit of the terminal data is normally transmitted. In step I12, it is checked if transmission of all the bits of the terminal data is normally completed. If NO in step I12, the flow returns to step I9, and the processing in steps I9 through I12 is repeated for the next bit (terminal signal) of the terminal data. If YES in step I12, the terminal activation processing is canceled in step I13, and the flow returns to step I1.

If the content of the current mode signal transmitted in step I10 is different from the content of the voltage mode signal checked in step I11, it is determined that the current mode signal transmitted from the terminal 14c is not normally received by the central processing apparatus 10c, and the loop processing is interrupted in step I11. The flow then returns to step I1. In this case, since the activation data of the terminal 14c remains, when the terminal activation start signal is transmitted from the central processing apparatus (step F11 in Fig. 26) and the flow advances from step I1 to step I8, the presence of activation data is determined in step I8, and the terminal activation processing is executed again. That is, the terminal activation processing is repeated until the activation data is normally transmitted to the central processing apparatus.

### (Sixth Embodiment)

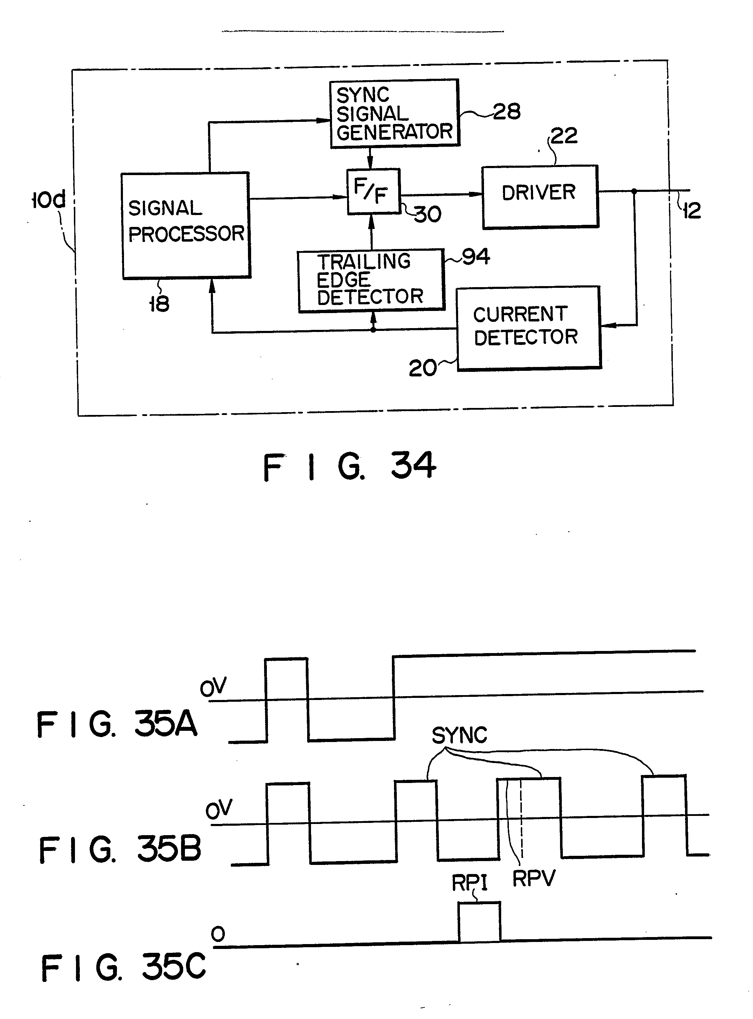

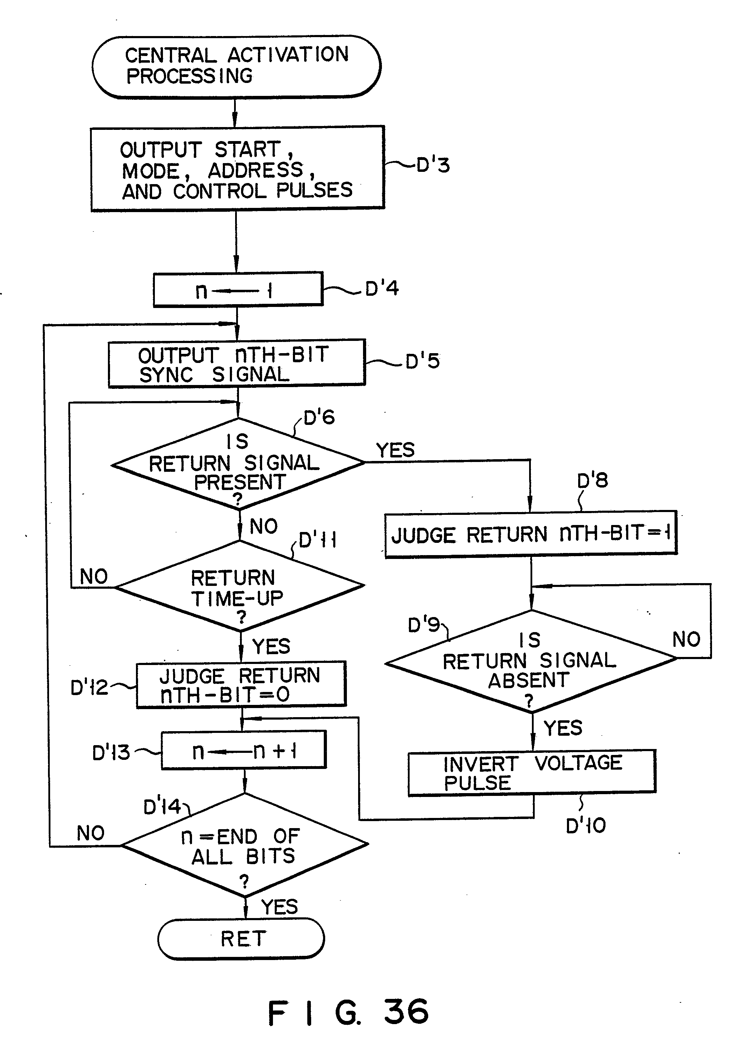

A sixth embodiment of the present invention will now be described with reference to Fig. 34, Figs. 35A through 35C, and flow chart of Fig. 36.

In the sixth embodiment, the central processing apparatus 10a shown in Fig. 13 of the second embodiment is replaced with a central processing apparatus 10d of the arrangement shown in Fig. 34 in the signal transmission system shown in Fig. 1.

Fig. 34 is a functional block diagram of the central processing apparatus 10d according to the sixth embodiment. In the central processing apparatus 10d shown in Fig. 34, a trailing edge detector 94 is arranged in place of the differentiator 26 in the central processing apparatus 10a of Fig. 13. With this arrangement, a sync signal SYNC is transmitted from the central processing apparatus 10d, and a current mode return signal (or terminal signal) RPI is transmitted from each terminal 14d in response to the sync signal SYNC. Thus, in the central processing apparatus 10d, a current detector 20 outputs an H-level voltage in accordance with the signal RPI. When the reception of the return signals RPI from the terminal 14d is completed, the output from the current detector 20 goes to L level. The trailing edge detector 94 detects the trailing edge of the output from the current detector 20 which changes from H level to L level. An F/F 30 is triggered by the trailing edge signal, and inverts its output.

Fig. 35B shows a voltage waveform of transmission lines 12 of the sixth embodiment. Note that Fig. 35A shows the same voltage waveforms of the transmission lines as in the second embodiment shown in Fig. 15A. Fig. 35C shows a current waveform of a return signal from the terminal 14d in the sixth embodiment.

In the sixth embodiment, when the current mode signals RPI are output from the terminal 14d, the voltage mode of the transmission lines is switched after transmission of the current mode signals RPI is completed. In the second embodiment, every time a change in current mode signal RPI output from the terminal 14a is detected, the voltage mode of the transmission lines 12 is switched. Thus, in this embodiment, the current mode signals RPI are improved.

Referring back to Fig. 34, the output of the F/F 30 is reset in response to the trailing edge of the sync signal output from a sync signal generator 28, and the F/F 30 is set/reset to a predetermined output state by a signal processor 18.

The functions of the F/F 30, the trailing edge detector 94, and the like in Fig. 34 are realized by the control program of a CPU 54.

Fig. 36 is a flow chart showing the control program for realizing the functions. This flow chart corresponds the flow chart shown in Fig. 17 from which the processing in step D7 is omitted. Therefore, in the sixth embodiment, the central processing apparatus 10d and the terminal 14d are operated in the same manner as the second embodiment described with reference to Figs. 16 through 19, except that the central processing apparatus 10d does not perform an output voltage inversion operation in step D7 of the second embodiment. To avoid repetitive descriptions, steps D′1 through D′14 in the flow chart of Fig. 36 are the same as steps D1 through D14 in the flow chart of Fig. 17, and a description thereof will be omitted.

In this manner, the central processing apparatus 10d transmits one or a plurality of sync signals during a signal standby period from the terminal 14d, and the terminal 14d transmits a current mode return or terminal signal at a timing according to the sync signal. The central processing apparatus 10d detects the trailing edge of the return or terminal signal to invert the voltage mode of the transmission lines, so that the following advantages can be obtained. (1) Since the central processing apparatus outputs the sync pulses, timings can be easily taken. (2) Since the central processing apparatus inverts the voltage mode of the transmission lines after it detects a current mode signal, whether or not a given terminal correctly receives data can be confirmed at any position on the transmission lines, i.e., at any terminal and monitor display panel. (3) Since the polarity inversion timing does not overlap the current mode signal, the current mode signal is free from distortion.

(Seventh Embodiment)

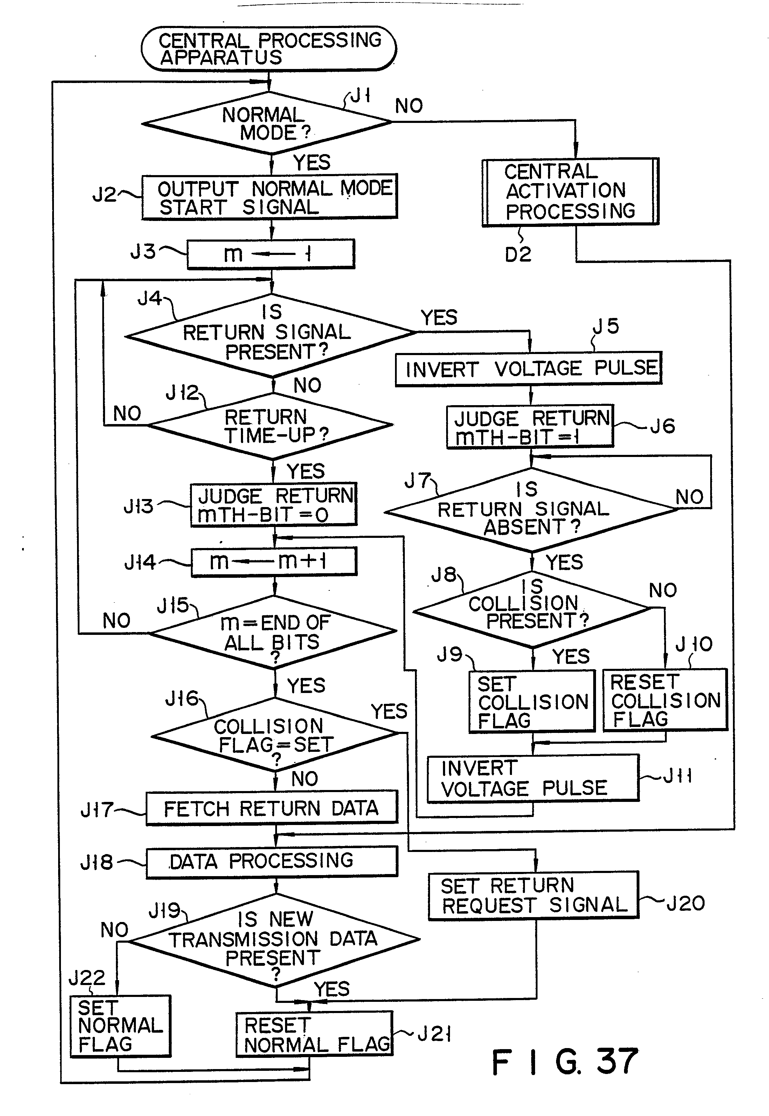

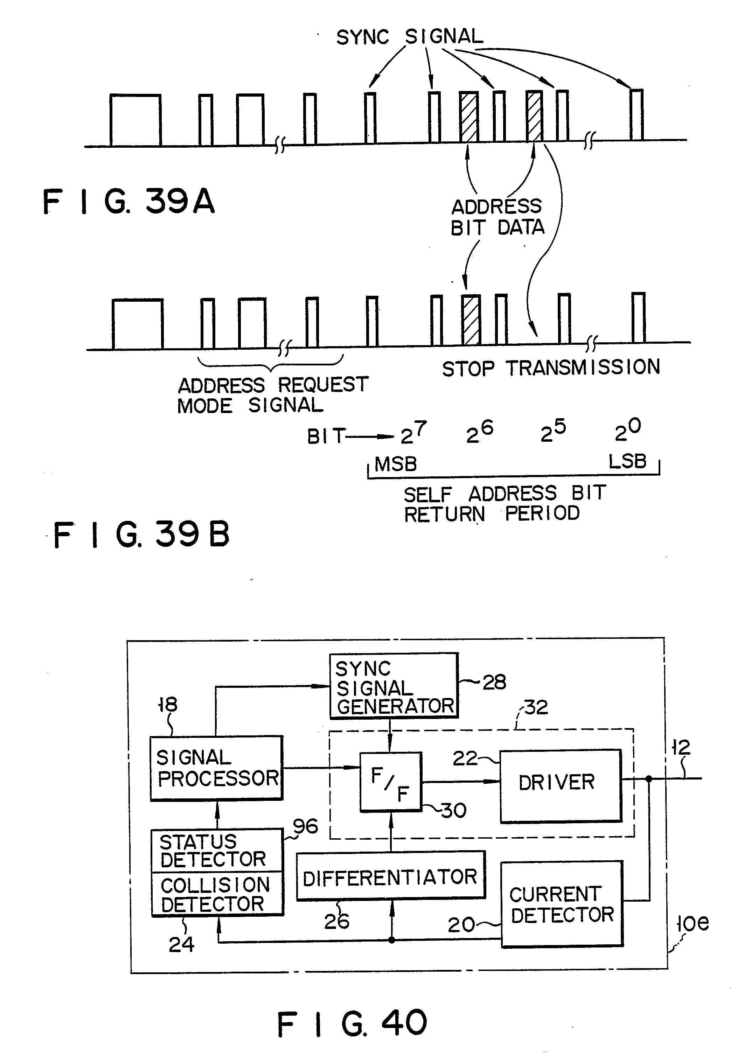

An operation of the system shown in Fig. 1 and Figs. 6 through 8 will be described below as a seventh embodiment of the present invention with reference to flow charts of Figs. 37 and 38 and Figs. 17 and 11 described above, and to Figs. 39A and 39B.

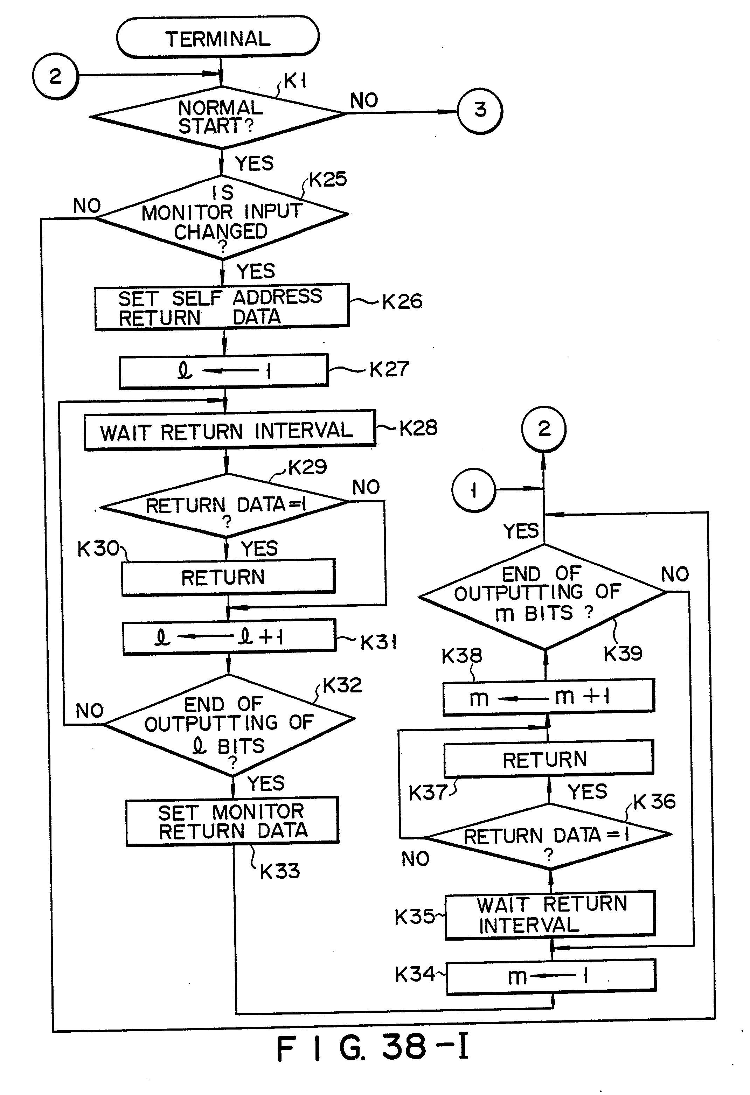

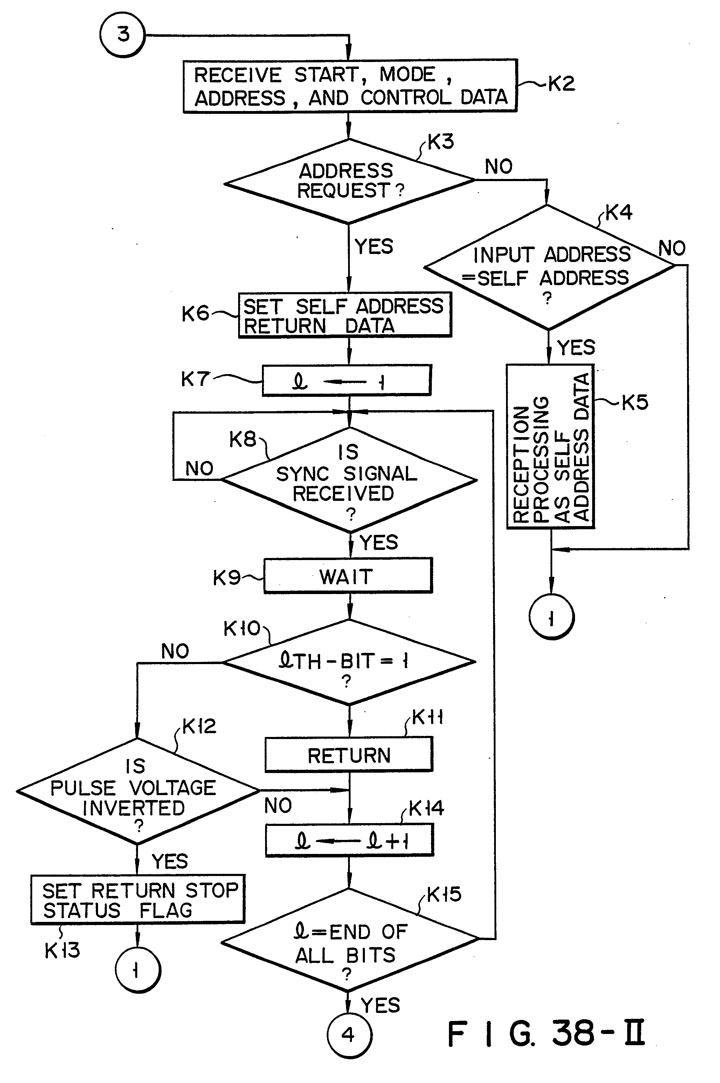

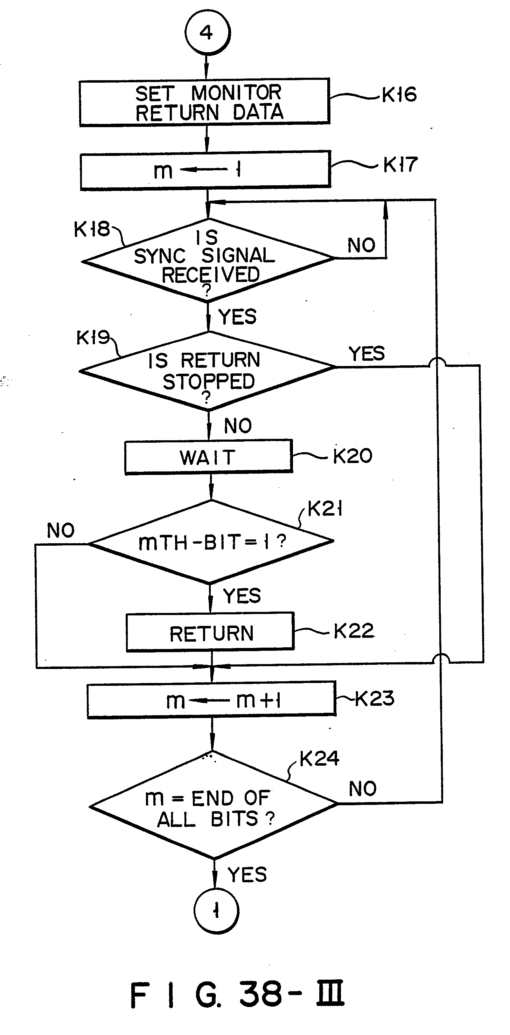

When the power switches of a central processing apparatus 10, terminals 14, and a monitor display panel 16 are turned on, they start predetermined operations in units of CPUs. The central processing apparatus 10, each terminal 14, and the monitor display panel 16 respectively execute endless loop processing shown in the flow charts of Figs. 37 and 17, the flow chart of Fig. 38, and the flow chart of Fig. 11 described above. In the seventh embodiment, the operation of the monitor display panel 16 is the same as that of the first embodiment shown in the flow chart of Fig. 11, and a description thereof will be omitted.

(7A. Operation of Central Processing Apparatus 10)

Referring to Fig. 37, the central processing apparatus 10 checks in step J1 if data transmission to be performed is in a normal mode. If there is no data to be transmitted from the central processing apparatus 10 to each terminal 14, i.e., activation data, the normal mode is selected, and a normal mode flag is set in step J22 (to be described later). Meanwhile, if there is activation data, the normal mode flag is reset in step J21 (to be described later). In step J1, the normal mode flag is checked. If this flag is set, the flow advances to step J2 to execute normal mode processing in steps J2 through J15. If the normal mode flag is reset, the flow advances to step D2 (Fig. 17), and central activation processing in steps D3 through D14 is executed. Note that the central activation processing is the same as that of the second embodiment (the flow chart of Fig. 17), and a description thereof will be omitted.

(i) Normal Mode Processing

Referring again to Fig. 37, as described above, when there is no data to be transmitted from the central processing apparatus 10 to each terminal 14, the normal mode flag is reset in step J22, and the reset operation of the flag is determined in step J1. The flow then advances to step J2, and the normal mode processing in steps J2 through J15 is executed.

In the normal mode processing, a normal mode start signal is sent onto the transmission lines 12 in step J2. In step J3, a control variable $m$ is set to be 1. Thereafter, terminal signal reception processing in steps J4 through J15 is executed.

In the terminal signal reception processing, the output from a current detector 20 is checked in loop processing of steps J4 and J12.

Like in the return signal reception processing, when a current mode terminal signal is output from the terminal 14, the output voltage of the current detector 20 changes. The presence of a terminal signal is determined in step J4 when the output voltage of the current detector 20 changes, i.e., transmission of the terminal signal i detected, and the flow advances from step J4 to step J5. In step J5, an output voltage of a driver 22 is inverted. In step J6, it is determined that an mth bit of terminal data is "1". In step J7, the control stands by until the current mode terminal signal changes to "0" again. In step J8, the output from a collision detector 24 is checked. If the collision detector 24 detects a collision, a collision flag is set in step J9; otherwise, the collision flag is reset in step J10. In step J11, the output voltage of the driver 22 is inverted again to restore the voltage mode of the transmission lines 12 to "0" level, and the flow then advances to step J14. With the processing in steps J5 through J11, "1" of the current mode terminal signal is converted to "1" of a voltage mode signal.

As has been described in the return signal reception processing, in the seventh embodiment, when a terminal signal as one bit of transmission data (terminal data) from the terminal 14 to the central processing apparatus 10 is "1", a current mode signal transmitted from the terminal 14 is "1"; if it is "0", the current mode signal is "0", which is equivalent to a non-signal state.

When a predetermined period of time (e.g., 600 μs) has passed without detecting a current mode terminal signal in the loop processing of steps J4 and J12, the flow advances from step J12 to step J13. In step J13, it is determined that the mth bit of the terminal data is "0", and the flow advances to step J14. When the current mode terminal signal is "0", the output voltage of the driver 22 is kept "0", i.e., is left unchanged. In this case, it can be considered that the current mode terminal signal is converted to a voltage mode signal.

More specifically, the current mode terminal signal is converted to the voltage mode signal by the processing in steps J4 through J13 regardless of level "0" or "1", and is transmitted onto the transmission lines 12.

In step J14, the control variable $m$ is incremented by one. In step J15, it is checked if all the bits of the terminal data are received. The control variable $m$ indicates the number of processed bits.

If the control variable $m$ does not reach the number of bits of the terminal data, all the bits of the terminal data are not received yet. In this case, the flow returns from step J15 to step J4, and the terminal signal reception processing in steps J4 through J15 is repeated.

If the control variable $m$ is equal to the number of bits of the terminal data, this indicates that all the bits of the terminal data are received. In this case, it is determined in step J15 that reception of terminal data is completed, and the flow advances from step J15 to step J16.

In step J16, the collision flag is checked. If the collision flag is "0", transmission data (terminal or return data) from the terminal 14 is fetched in step J17, and predetermined data processing is executed in step J18. It is then checked in step J19 if there is new data to be transmitted to the terminal 14. If YES in step J19, the normal mode flag is reset in step J21, and the flow returns to step J1. If NO in step J19, the normal mode flag is set in step J22, and the flow returns to step J1. If it is determined in step J16 that the collision flag is "1", a return request signal is set in step J20, and the normal mode flag is reset in step J21. Thereafter, the flow returns to step J1.

(7B. Operation of Terminal)

Referring to Figs. 38-I through 38-III, the terminal 14 checks in step K1 on the basis of the output from a receiver 36 whether or not a voltage mode signal transmitted from the central processing apparatus 10 is the normal mode start signal. If the normal mode start signal transmitted from the central processing apparatus 10 in the processing of step J2 in Fig. 37 is received, the flow advances to step K25 (to be described later) to check if a monitor input of a load changes. If YES in step K25, terminal activation processing as loop processing of steps K26 through K39 is executed to transmit the monitor input to the central processing apparatus 10 as monitor data (terminal data). If NO in step K25, since there is no data to be transmitted in response to the normal mode start signal, another processing (not shown) is executed, and the flow returns to step K1 to wait for the next start signal.

If the start signal received in step K1 is not the normal mode start signal but a central activation start signal transmitted from the central processing apparatus 10 in the processing of step D3 in Fig. 17, the flow advances to step K2, and transmission data such as a mode signal MOD, a destination address ADR, a control signal CNT, and the like transmitted from the central processing apparatus 10 after the start signal are received. It is checked in step K3 if the mode signal MOD .indicates an address transmission request mode. If NO in step K3, the flow advances to step K4; otherwise, the flow advances to step K6.

It is checked in step K4 if the destination address ADR received from the central processing apparatus 10 coincides with the self address. If YES in step K4, reception processing of transmission data from the central processing apparatus 10 is executed in step K5, and the flow returns to step K1. On the other hand, if NO in step K4, since the control signal CNT is transmission data to another terminal, the reception processing in step K5 is skipped, and other operations described above are executed. The flow then returns to step K1 to wait for the next start signal.

If the mode signal MOD received in step K2 indicates the address request mode, return processing in steps K6 through K24 is executed.

(ii) Return Processing

The return processing includes self address return processing in steps K6 through K15 and monitor data return processing in steps K16 through K24. In the self address return processing, in step K6, the self address is set as return data. In step K7, a control variable $l$ is set to be 1. Thereafter, the control stands by until a sync signal is received in step K8. If the sync signal is received in step K8, the control stands by for a predetermined period of time (e.g., 50 $\mu$s) in step K9, and it is then checked in step K10 if an $l$th bit (return signal) of return data, i.e., the self address is "1". If YES in step K10, a "1" level current mode return signal is transmitted from a transmitter 38 onto the transmission lines 12 in step K11, and the flow advances to step K14. The current mode return signal is received by the central processing apparatus 10 (step D6 in Fig. 17), and is converted to a voltage mode signal (steps D7 through D10 in Fig. 17).

If it is determined in step K10 that the $l$th bit of the return data is "0", it is checked in step K12 if a pulse voltage of the transmission lines is inverted. If another terminal transmits an $l$th-bit signal of the self address when the self address is "0", this indicates that a terminal having a higher priority order has been activated. Therefore, return processing is interrupted, and a retransmission flag is set in step K13. Thereafter, the other processing is executed, and the flow returns to step K1. If it is determined in step K12 that the pulse voltage is not inverted by a current mode signal from another terminal, the flow advances to step K14.

In step K14, the control variable $l$ is incremented by one, and it is checked in step K15 if all the bits of the self address are transmitted. If NO in step K15, the flow returns to step K8, and the processing in steps K8 through K15 is repeated for the next bit of the self address. If YES in step K15, the terminal serves as the highest priority activation terminal. In this case, monitor data return processing in steps K16 through K24 is executed.

In the monitor data return processing, monitor data is set as return data in step K16, and the control variable $m$ is set to be 1 in step K17. The control then stands by until the sync signal is received in step K18. If the sync signal is received, the control stands by for a predetermined period of time (e.g., 50 $\mu$s) in step K20. It is then checked in step K21 if an mth bit (return signal) of return data, i.e., monitor data is "1". If YES in step K21, a "1"-level current mode return signal is transmitted from the transmitter 38 onto the transmission lines 12 in step K22, and the flow advances to step K23. However, if NO in step K21, the flow skips step K22, and directly advances from step K21 to step K23.

In step K23, the control variable $m$ is incremented by one. It is then checked in step K24 if all the bits of monitor data are output. If NO in step K24, the flow returns to step K18, and the processing in steps K18 through K24 is repeated for the next bit (monitor data). If YES in step K24, the return processing is terminated, and other operations described above are executed. Thereafter, the flow returns to step K1.

(iii) Terminal Activation Processing

As described above, when the normal mode start signal is received in step K1 and the presence of the monitor input is determined in step K25, the self address and monitor data are transmitted to the central processing apparatus 10 by terminal activation processing in steps K25 through K39.

In the terminal activation processing, in step K26, the self address is set as terminal data. The control variable $l$ is set to be 1 in step K26. Thereafter, self address transmission processing as loop processing of steps K28 through K35 is executed to transmit the self address bit by bit as terminal signals for every cycle of the self address transmission processing.

More specifically, in step K28, the control stands by for a predetermined period of time (e.g., 300 $\mu$s) as a transmission interval. It is then checked in step K29 if an $l$th bit (terminal signal) of the terminal data, i.e., the self address is "1". If YES in step K29, a "1"-level current mode terminal signal is transmitted from the transmitter 38 onto the transmission lines 12 in step K30, and the flow advances to step K31. The current mode terminal signal is received by the central processing apparatus 10 (step J4 in Fig. 37), and is converted to a voltage mode signal (steps J5 through J11 in Fig. 37).

If it is determined in step K29 that the $l$th bit of the self address is "0", the current mode signal transmission processing in step K30 is skipped, and the flow directly advances from step K29 to step K31. In this case, the current mode signal is not transmitted. That is, a "0"-level current mode signal is equivalent to a non-signal state.

In step K31, the control variable $l$ is incremented by one, and it is checked in step K32 if transmission of all the bits of the self address is completed. If NO in step K32, the flow returns to step K28, and the processing in steps K28 through K32 are repeated for the next bit (terminal signal). However, if YES in step K32, monitor data transmission processing in steps K33 through K39 is executed.

In the monitor data transmission processing, in step K33, monitor data is set as terminal data. Furthermore, the control variable $m$ is set to be 1. Thereafter, the monitor data transmission processing as loop processing of steps K35 through K39 is executed.

The monitor data as the terminal data is transmitted bit by bit in the current mode as terminal signals for every cycle of the monitor data transmission processing. More specifically, in step K35, the control stands by for a predetermined transmission interval time (e.g., 300 μs), and it is then checked in step K36 if an mth bit (terminal signal) of monitor data is "1". If YES in step K36, a "1"-level current mode terminal signal is transmitted from the transmitter 38 onto the transmission lines 12 in step K37, and the flow advances to step K38. The current mode terminal signal is received by the processing in step J4 of Fig. 37 in the central processing apparatus 10, and is converted to a voltage mode signal by the processing in steps J5 through J11 in Fig. 37.

If it is determined in step K36 that the mth bit of the terminal data is "0", since the "0"-level current mode signal is equivalent to a non-signal state, the current mode signal transmission processing in step K37 is skipped, and the flow directly advances from step K36 to step K38.

In step K38, the control variable $m$ is incremented by one, and it is checked in step K39 if transmission of all the bits of terminal data is completed. If NO in step K39, the flow returns to step K35, and the processing in steps K35 through K39 is repeated for the next bit (terminal signal). However, if YES in step K39, the terminal activation processing is terminated, and other operations described above are executed. Thereafter, the flow returns to step K1.

In the above description, a sync signal is output to have a one-to-one correspondence with each bit of return or terminal data, i.e., a return or terminal signal. However, one sync signal may be output for every plurality of bits. Alternatively, a sync signal may be output for one bit, e.g., the first bit.

Figs. 39A and 39B show processing after signals collide against each other by terminal activation (steps K26 through K39 in Fig. 38-I) of an activation terminal A having the 8-bit self address of "60H" and an activation terminal B having the address of "41H".

When the central processing apparatus 10 detects collision (step J16 in Fig. 37), it sets the address return request signal (step J20 in Fig. 37), and sends an address return request signal by central activation (step J1 in Fig. 37) (steps D3 through D14 in Fig 17). In response to this, the activation terminals A and B execute self address return processing in steps K6 through K15 in Fig. 38-II.

When the central processing apparatus 10 receives the current mode signals from the activation terminals A and B (step D6 in Fig. 17), it converts the received signals into voltage mode signals, and outputs the voltage mode signals (steps D7 through D10 in Fig. 17).

Since both the second bit ($2^6$ bit) and the third bit ($2^5$ bit) are "1"s, the activation terminal A sends the current mode signals. However, the activation terminal B sends the current mode signal for the $2^6$ bit = "1" but does not send a current mode signal for the $2^5$ bit = "0" (step K10 in Fig. 38-II). When the terminal B detects on the basis of the voltage mode signals from the central processing apparatus 10 that the activation terminal A sent the current mode signals (step K12 in Fig. 38-II), it stops the following return operation (step K13 in Fig. 38-II). More specifically, the terminal B does not send the current mode signal even if the fourth ($2^4$) and subsequent bits are "1"s.

The central processing apparatus 10 can identify the activation terminal A. When the central processing apparatus 10 completes a series of processing such as data read access for the activation terminal A, it transmits the address return request signal again. In this case, since the terminal A completes data transmission, it is deactivated, and only the activation terminal B responds in turn.

In the seventh embodiment, the activation terminal A outputs monitor data after it returns the self address (steps K16 through K24 in Fig. 38-III). In this manner, one activation terminal is selected in response to one address return request (polling) from the central processing apparatus, and executes data transmission, thus greatly improving a transmission speed.

(Eighth Embodiment)

In an eighth embodiment, a status signal indicating whether or not a terminal normally completes transmission is output at the end of transmission data from the terminal in the system shown in Fig. 1, and a central processing apparatus can determine on the basis of the status signal whether or not polling processing after collision is necessary.

Fig. 40 is a functional block diagram of a central processing apparatus 10e according to the eighth embodiment of the present invention.

In the apparatus shown in Fig. 40, a collision detector 24 with a status detector 96 for detecting the status signal is added to the arrangement shown in Fig. 2. The function of the status detector 96 can be realized by hardware shown in Fig. 6 by appropriately setting the control program of a CPU 54.

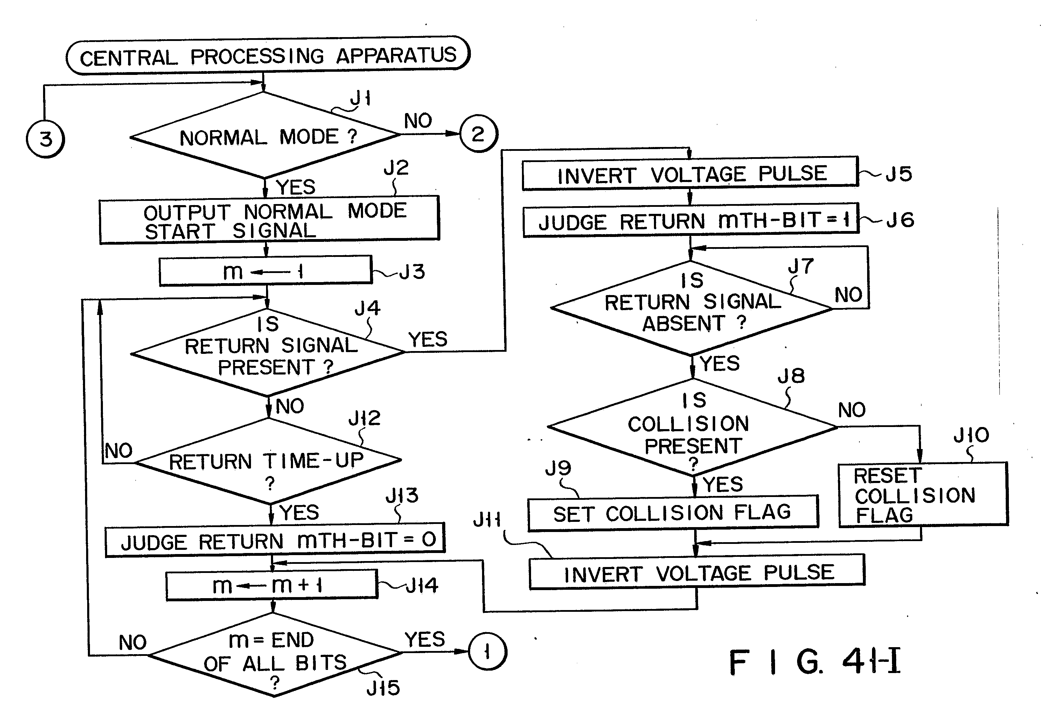

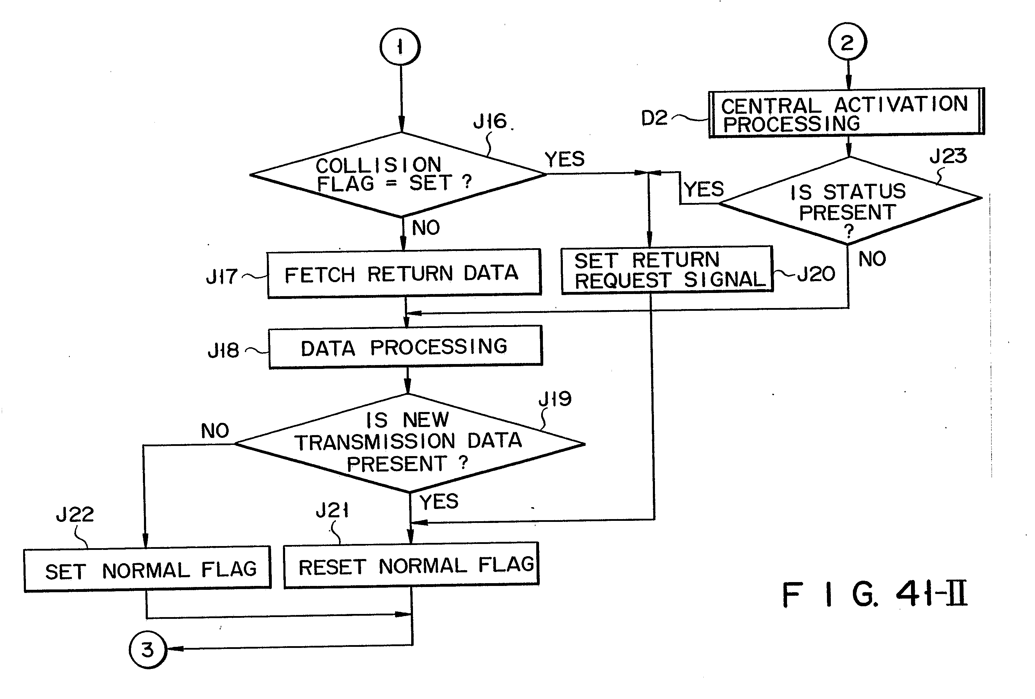

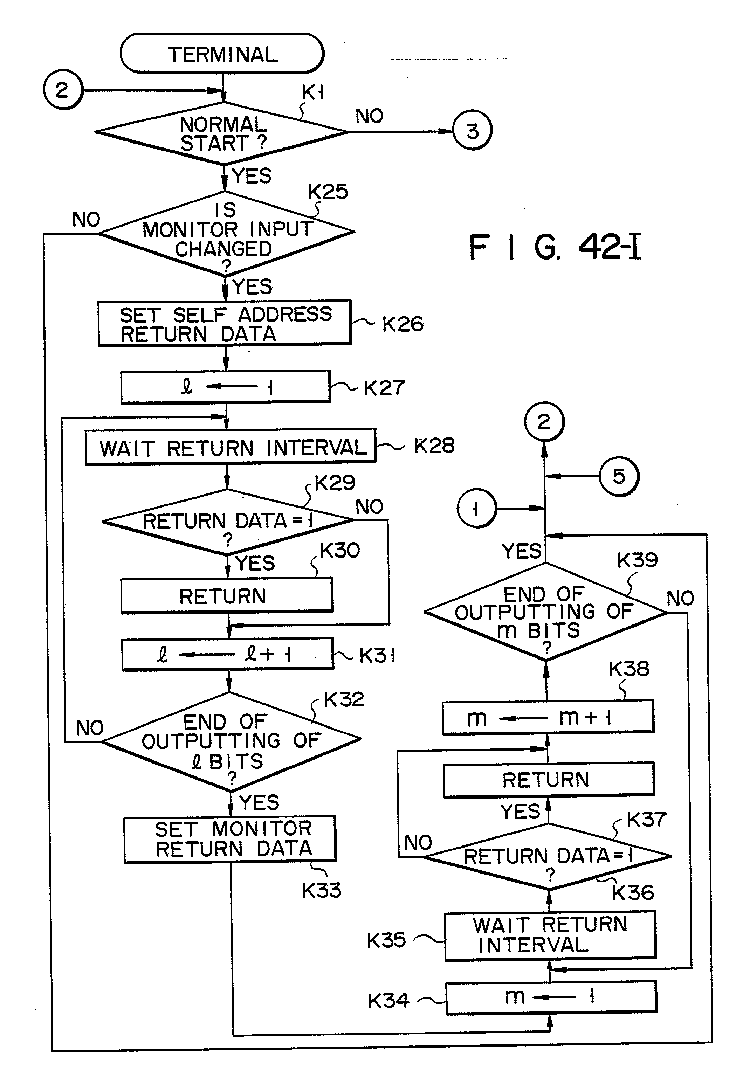

The operation of the system with the arrangement shown in Figs. 1, 6, 7, and 40 will be described below with reference to the flow charts shown in Figs. 41 and 42.

(8A. Operation of Central Processing Apparatus 10e)

Referring to the flow chart shown in Fig. 41, the operation of the central processing apparatus 10e is the same as that in the seventh embodiment, except that step J23 for judging detection of the status signal upon completion of the central activation processing is added, and if the status signal is detected, a return request signal is set.

More specifically, in the seventh embodiment, when the central activation processing (Fig. 37) in step D2 is completed, the control immediately advances to step J18. In the eighth embodiment, however, when the central activation processing (step D2) is completed, the presence/absence of the status signal is checked in step J23. If NO in step J23, the flow advances to step J18. The operation in this case is essentially the same as that in the seventh embodiment.

Meanwhile, if YES in step J23, the flow advances to step J20 as in the collision judgement operation (step J16). In step J20, the return request signal is set, and the normal mode flag is reset in step J21. Thereafter, the flow returns to step J1.

In this case, the central processing apparatus 10e outputs a self address transmission request to activation terminals as the next operation.

Since other operations are the common to the seventh embodiment, the same step numbers as in Fig. 41 designate the common processing in Fig. 37, and a detailed description thereof will be omitted.

(8B. Operation of Terminal 14)

The operation of the terminal 14 is the same as that in the embodiment shown in Figs. 38-I through 38-III, except for return processing (steps K6 through K24) and status signal processing (steps K41 through K45) associated with it. Therefore, only the different processing operations will be described below, and a description of processing for receiving and discriminating a start signal, address signal, and the like transmitted from the central processing apparatus 10e (steps K1 through K5 and step K25), and normal mode processing (steps K25 through K39) will be omitted while the same step numbers as in Figs. 42-I through 42-III designate the common processing in Figs. 38-I through 38-III.

(i) Return Processing

The return processing consists of self address return processing in steps K6 through K15 and monitor data return processing in steps K16 through K24.

In the self address return processing, the self address is set as return data in step K6, and a control variable $l$ is set to be 1 in step K7. Thereafter, the control stands by until a sync signal is received in step K8. If the sync signal is received in step K8, a status flag is checked in step K40. If the status flag is set, the control stands by for a predetermined period of time (e.g., 50 $\mu$s) in step K9, and it is checked in step K10 if an $l$th bit (return signal) of the return data, i.e., the self address is "1". If YES in step K10, a current mode return signal is transmitted from a transmitter 38 onto transmission lines 12 in step K11, and the flow then advances to step K14. The current mode return signal is received by the central processing apparatus 10e (step D6 in Fig. 17), and is converted to a voltage mode signal (steps D7 through D10 in Fig. 17).

If it is determined in step K10 that the $l$th bit of the return data is "0", it is checked in step K12 if a pulse voltage of the transmission lines is inverted. If another terminal transmits an $l$th-bit signal of the self address if its own self address is "0", this indicates that a terminal having a higher priority order has been activated. Therefore, in step K13, the terminal stops the return processing, and sets the status flag. Thereafter, the flow advances to step K14. If the pulse voltage inversion due to the current mode signal from another terminal is not detected in step K12, the flow directly advances from step K12 to step K14.

If it is determined in step K40 that the status flag is "0", the processing in steps K9 through K13 is skipped, and the flow directly advances from step K40 to step K14. With the processing in step K40, a terminal which detects that its priority order is lower than that of another terminal (step K12) and stops its return operation (step K13) does not output current mode signals even if the remaining bits of the self address include "1"s.

In step K14, the control variable $\ell$ is incremented by one, and it is checked in step K15 if transmission of all the bits of the self address is completed. If NO in step K15, the flow returns to step K8, and the processing in steps K8 through K15 including step K40 is repeated for the next bit of the self address. However, if YES in step K15, monitor data return processing in steps K16 through K24 is executed.

In the monitor data return processing, monitor data is set as return data in step K16, and a control variable m is set to be 1 in step K17. Thereafter, the control stands by until a sync signal is received in step K18. If the sync signal is received, the status flag is checked in step K19. If the status flag is set, the control stands by for a predetermined period of time (e.g., 50 μs) in step K20. Thereafter, it is checked in step K21 if an mth bit (return signal) of the return data, i.e., the monitor data is "1". If YES in step K21, a "1"-level current mode return signal is transmitted from the transmitter 38 onto the transmission lines 12 in step K22, and the flow advances to step K23. However, if NO in step K21, the flow skips step K22, and directly advances from step K21 to step K23.

If it is determined in step K19 that the status flag is "0", the flow skips the processing in steps K20 through K22, and directly advances from step K19 to step K23. With the processing in step K19, a terminal which detects that its priority order is lower than that of another terminal (step K12) and stops its return operation (step K13) does not output current mode signals even if the remaining bits of the self address include "1"s.

In step K23, the control variable m is incremented by one, and whether or not transmission of all the bits of monitor data is completed is checked in step K24. If NO in step K24, the flow returns to step K18, and the processing in steps K18 through K24 is repeated for the next bit (monitor data). However, if YES in step K24, status signal processing in steps K41 through K45 is executed.

(ii) Status Signal Processing

In the status signal processing, the status flag is checked in step K41. If the status flag is set (step K13), the status flag is reset in step K42, and the control stands by until the sync signal is received in step K43. If the sync signal is received, the control stands by for a predetermined period of time (e.g., 50 μs) in step K44. In step K45, a current mode status signal is transmitted from the transmitter 38. Thereafter, other operations described above are executed, and the flow returns to step K1.

If it is determined in step K41 that the status flag is not set, the flow skips the processing in steps K42 through K45, and directly advances from step K41 to other operations described above. After these operations are executed, the flow returns to step K1.

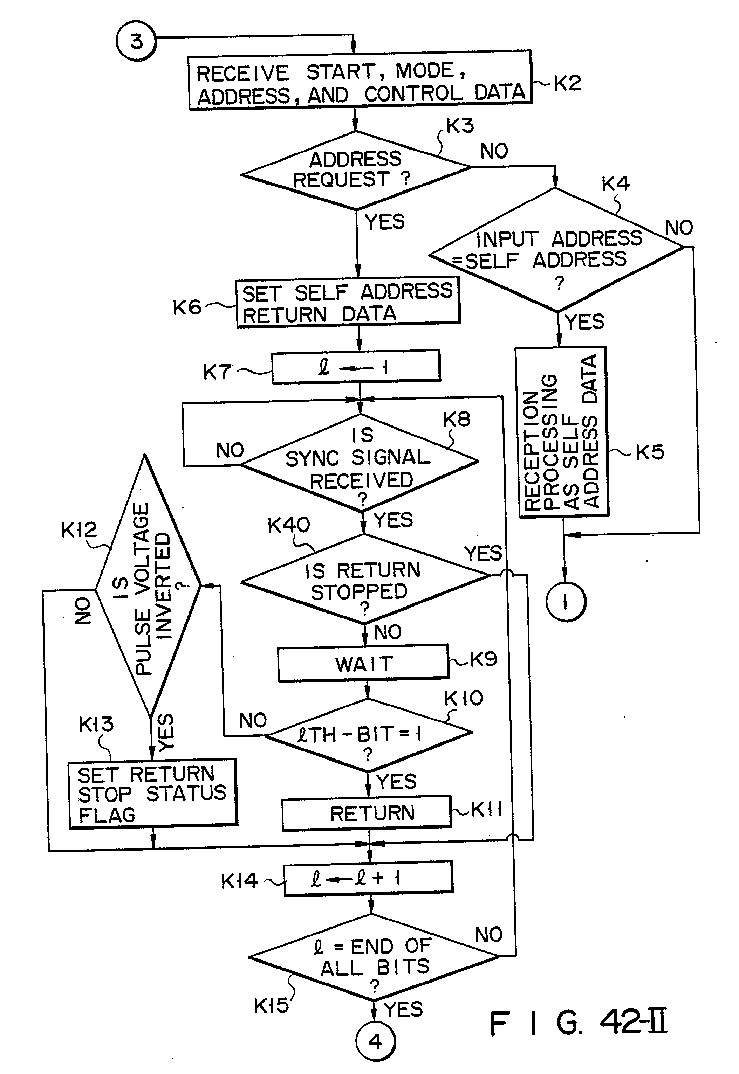

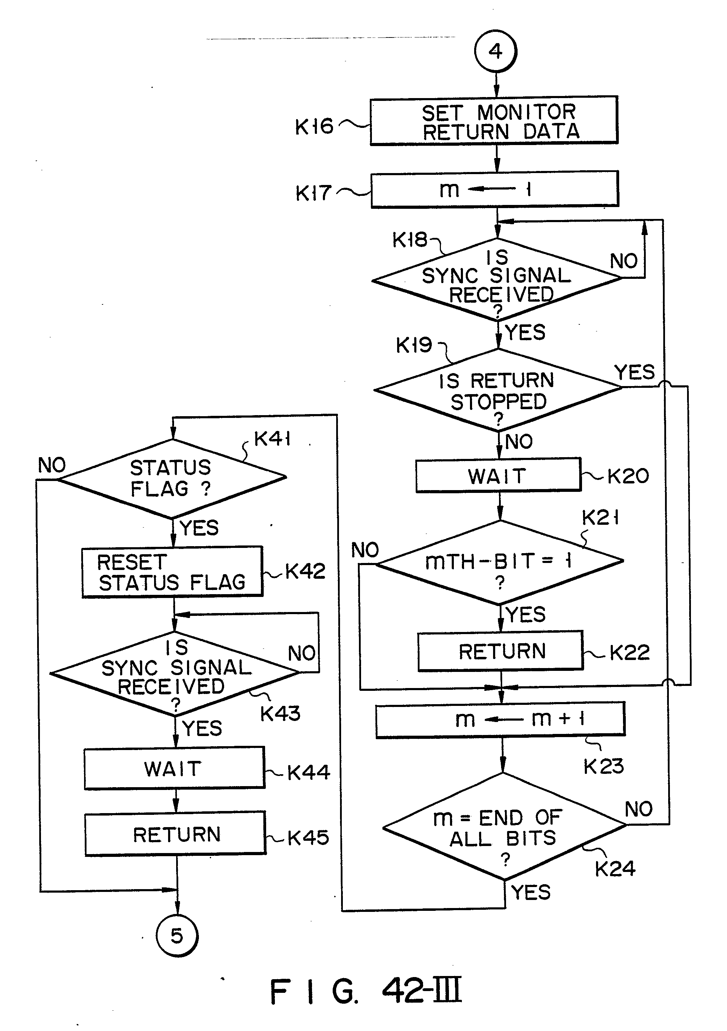

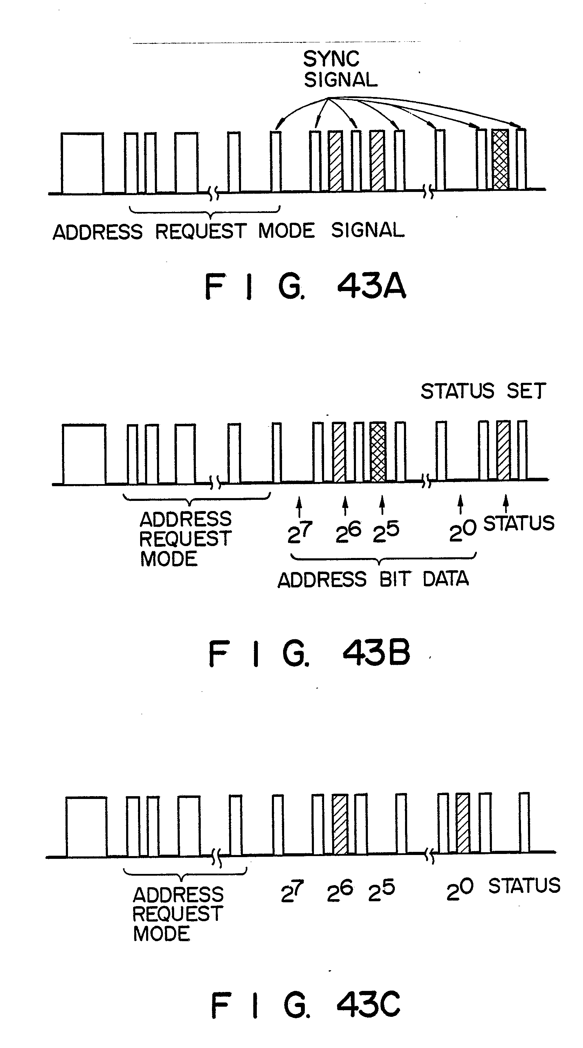

Figs. 43A through 43C show processing (Fig. 43C) after signals collide against each other by terminal activation (steps K26 through K39 in Fig. 42-I) of an activation terminal A (Fig. 43A) having an 8-bit self address of "60H" (H indicates hexadecimal notation) and an activation terminal B (Fig. 43B) having the address of "41H".

When the central processing apparatus 10e detects collision (step J16 in Fig. 41), it sets the address return request signal (step J20 in Fig. 41), and sends an address return request signal by central activation (step J1 in Fig. 41) (steps D3 through D14 in Fig. 17). In response to this, the activation terminals A and B execute return processing in steps K6 through K24 in Figs. 42-II and 42-III, and status signal processing in steps K41 through K45.

When the central processing apparatus 10e receives the current mode signals from the activation terminals A and B (step D6 in Fig. 17), it converts the received signals into voltage mode signals, and outputs the voltage mode signals (steps D7 through D10 in Fig. 17).

Since both the second bit ($2^6$ bit) and the third bit ($2^5$ bit) are "1"s, the activation terminal A sends the current mode signals. However, the activation terminal B sends the current mode signal for the $2^6$ bit = "1" but does not send a current mode signal for the $2^5$ bit = "0" (step K10 in Fig. 42-II). When the terminal B detects on the basis of the voltage mode signals from the central processing apparatus 10 that the activation terminal A sent the current mode signals (step K12 in Fig. 42-II), it stops the following return operation (steps K13 and K40 in Fig. 42-II). More specifically, the terminal B does not send the current mode signal even if the fourth ($2^4$ bit) and subsequent bits are "1"s. example, although the eighth bit ($2^0$ bit) of the activation terminal B is "1", a current mode signal at this timing is not output, as shown in Fig. 43B. When the return operation is stopped, no monitor data is output (step K19 in Fig. 42-III). The terminal 14 which stopped the return operation outputs a status signal in the current mode (step K45 in Fig. 42-III).

Thus, the central processing apparatus 10e can receive returned monitor data from only the activation terminal A which has the highest priority order, and receives the status signal as the last bit of return data from the activation terminal B.

When the central processing apparatus 10e receives the status signal, it can recognize the presence of an activation terminal other than the activation terminal A. Therefore, when the central processing apparatus 10e completes a series of processing such as data read access for the activation terminal A, it transmits the address return request signal again. In this case, since the terminal A completes data transmission, it is deactivated, and only the activation terminal B responds in turn, as shown in Fig. 43C.

In this manner, an activation terminal which has not transmitted data yet is caused to send the status signal, so that missing of an activation terminal upon collision can be prevented, or wasteful last polling for searching an activation terminal can be avoided. Thus, addresses and data of activation terminals can be efficiently loaded.

(Ninth Embodiment)

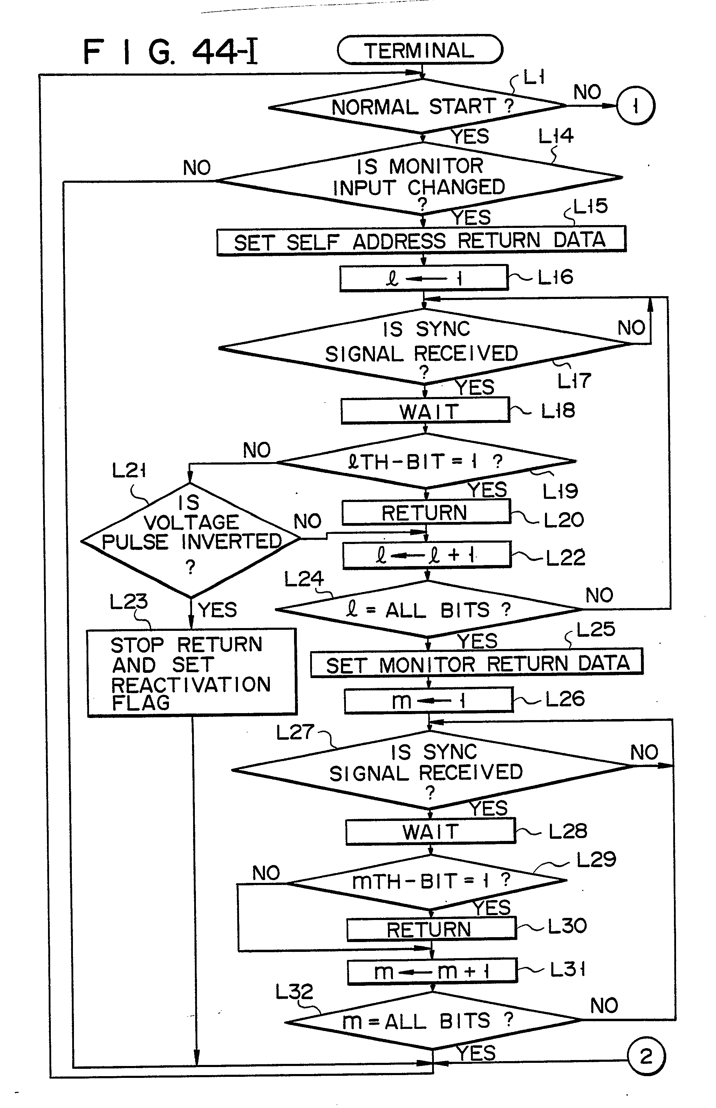

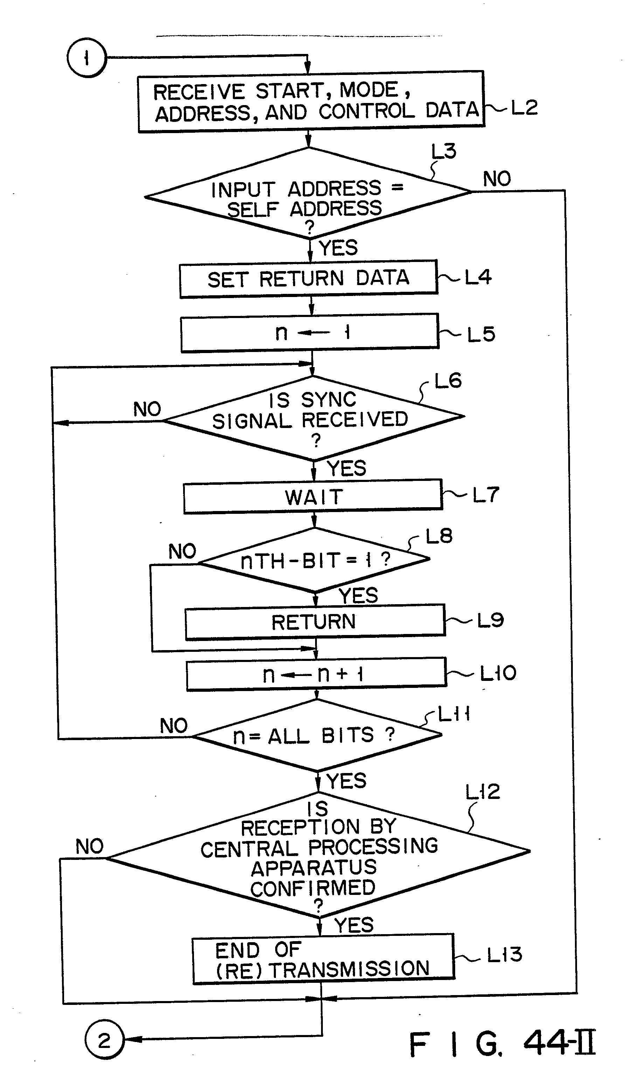

Figs. 16, and 44-I and 44-II show a ninth embodiment of the present invention.

In the ninth embodiment, each terminal stops signal transmission after it detects an address signal of another activation terminal upon terminal activation, so that an activation terminal having a highest priority order is automatically selected during a self address transmission period by one terminal activation, and data transmission can be executed.

The functional block diagram of this embodiment corresponds to one shown in Fig. 2 from which the collision detector 24 is omitted.

The operation of the system with the arrangement shown in Figs. 1, 6, 7, and the like will be described below with reference to the flow charts shown in Fig. 16 described above and Figs. 44-I and 44-II. The operation of a central processing apparatus is the same as that in the second embodiment, and a description thereof will be omitted.

When the power switches of the central processing apparatus 10a, terminals 14a, and a monitor display panel 16 are turned on, they start predetermined operations in units of CPUs. The central processing apparatus 10a, each terminal 14a, and the monitor display panel 16 respectively execute endless loop processing shown in the flow charts of Figs. 16 and 17, the flow chart of Figs.

44-I and 44-II, and the flow chart of Fig. 11.

(9B. Operation of Terminal 14a)

Referring to Figs. 44-I and 44-II, each terminal 14a checks on the basis of an output from a receiver 36 in step L1 if a voltage mode signal sent from the central processing apparatus 10a is a normal mode start signal. If the normal mode start signal sent by the processing in step D15 shown in Fig. 16 is received from the central processing apparatus 10a, the flow advances to step L14 (to be described later) to check if a load monitor input changes. If YES in step L14, terminal activation processing in steps L20 through L32 (to be described later) is executed to transmit the monitor input to the central processing apparatus 10a as monitor data (terminal data). If NO in step L14, since there is no data to be transmitted in correspondence with the normal mode start signal, another processing (not shown) is executed, and the flow returns to step L1 to wait for the next start signal.

If the start signal received in step L1 is not the normal mode start signal but a central activation start signal sent from the central processing apparatus 10a by the processing in step D3 in Fig. 17, the flow advances to step L2. In step L2, the terminal receives transmission data such as a destination address ADR, a control signal CNT, and the like sent from the central processing apparatus 10a after the central activation start signal. It is checked in step L3 if the destination start address ADR coincides with the self address. If NO in step L3, since the following control signal CNT is sent to another terminal 14a, other operations described above are executed, and the flow returns to step L1 to wait for the next start signal.

If YES in step L3, (i) return processing in steps L4 through L11 is executed.

(i) Return Processing

In the return processing, return data is set in step L4. In step L5, a control variable n is set to be 1. Thereafter, in step L6, the control stands by until a sync signal is received. If the sync signal is received in step L6, the control stands by for a predetermined period of time (e.g., 50 $\mu$s) in step L7, and it is then checked in step L8 if an nth bit (return signal) of return data is "1". If YES in step L8, a "1"-level current mode return signal is transmitted from a transmitter 38 onto transmission lines 12 in step L9, and the flow advances to step L10. The current mode return signal is received by the central processing apparatus 10a (step D6 in Fig.

17), and is converted to a voltage mode signal (steps D7 through D10 in Fig. 17). If it is determined in step L8 that the nth bit of the return data is "0", since the "0"-level current mode return signal is equivalent to a non-signal state, the flow skips the current mode signal transmission processing in step L9, and directly advances from step L8 to step L10.

In step L10, the control variable n is incremented by one. It is checked in step L11 if transmission of all the bits of return data is completed. If NO in step L11, the flow returns to step L6, and the processing in steps L6 through L11 is repeated for the next bit (return signal). However, if YES in step L11, the return processing is terminated, and the flow returns to step L1 via steps L12 and L13.

(ii) Terminal Activation Processing

As described above, when the normal mode start signal is received in step L1 and the presence of the monitor input is determined in step L14, the monitor data is transmitted to the central processing apparatus 10a by terminal activation processing in steps L14 through L32. When data transmission is disturbed due to activation collision or the like and a retransmission flag is set in step L23 (to be described later), it is determined in step L14 that the retransmission flag = "1", and terminal activation processing in steps L14 through L27 is executed.

The terminal activation processing consists of self address transmission processing in steps L15 through L24 and monitor data transmission processing in steps L25 through L32. In the self address transmission processing, a self address is set as terminal data in step L15. In step L16, a control variable $\ell$ is set to be 1. Thereafter, terminal data transmission processing as loop processing of steps L17 through L27, so that the self address data is transmitted bit by bit (terminal signal) in the current mode for every cycle of the terminal data transmission processing.

More specifically, in step L17, the control stands by until the sync signal is received. If the sync signal is received, the control stands by for a predetermined period of time (e.g., 50 $\mu$s) in step L18. It is then checked in step L19 if an $\ell$th bit (terminal signal) of the terminal data is "1". If YES in step L19, a "1"-level current mode terminal signal is transmitted from the transmitter 38 onto the transmission lines 12 in step L20, and the flow advances to step L22. The current mode terminal signal is received by the central processing apparatus 10a (step D18 in Fig. 16), and is converted to a voltage mode signal (steps D19 through D22 in Fig. 16).

Meanwhile, if it is determined in step L19 that the $\ell$th-bit of the transmission data is "0", it is checked in step L21 if a pulse voltage of the transmission lines is inverted. When another terminal sends an $\ell$th-bit signal of its self address when the own self address is "0", this indicates that another terminal having a higher priority order is activated. Thus, the given terminal stops the transmission processing in step L23, and sets the retransmission flag. Thereafter, other operations described above are executed, and the flow returns to step L1.

If it is determined in step L21 that the pulse voltage is not inverted due to the current mode signal of another terminal, the flow advances to step L22.

In step L22, the control variable $\ell$ is incremented by one, and it is then checked in step L24 if transmission of all the bits of terminal data is completed. If NO in step L24, the flow returns to step L17, and the processing in steps L17 through L24 is repeated for the next bit (terminal signal).

However, if YES in step L24, the terminal itself is one having the highest priority order. In this case, monitor data transmission processing in steps L25 through L32 is executed.

In the monitor data transmission processing, monitor data is set as transmission data in step L25, and a control variable m is set to be 1 in step L26. Thereafter, in step L27, the control stands by until the sync signal is received. If the sync signal is received, the control stands by for a predetermined period of time (e.g., 50 $\mu$s) in step L28. It is checked in step L29 if an mth bit (transmission signal) of the transmission data, i.e., the monitor data is "1". If YES in step L29, a "1"-level current mode transmission signal is transmitted from the transmitter 38 onto the transmission lines 12, and the flow then advances to step L31. However, if NO in step L29, the flow skips step L30, and directly advances from step L29 to step L31.

In step L31, the control variable m is incremented by one, and it is checked in step L32 if transmission of all the bits of monitor data is completed. If NO in step L32, the flow returns to step L27, and the processing in steps L27 through L32 is repeated for the next bit (monitor data). On the other hand, if YES in step L32, the transmission processing is terminated, and other operations described above are executed. Thereafter, the flow returns to step L1.

Figs. 43A through 43C show processing after an activation terminal A having an 8-bit self address of "60H" and an activation terminal B having the address of "41H" perform terminal activation (steps L15 through L32 in Fig. 44-I) at the same timing in response to the normal mode start signal (step D15 in Fig. 16) from the central processing apparatus 10a.

The terminals A and B send current mode signals from the MSB in synchronism with the sync signal SYNC output from the central processing apparatus 10a by the processing in step D17 shown in Fig. 16 only when the corresponding bits from the upper bits are "1"s (steps L17 through L24 in Fig. 44-I).

When the central processing apparatus 10a detects a collision (step D18 in Fig. 16), it converts the current mode signals into voltage mode signals, and sends the voltage mode signals (steps D19 through D22 in Fig. 16).

Since both the second bit ($2^6$ bit) and the third bit ($2^5$ bit) are "1"s, the activation terminal A sends the current mode signals. However, the activation terminal B sends the current mode signal for the $2^6$ bit = "1" but does not send a current mode signal for the $2^5$ bit = "0" (step L19 in Fig. 44-I). When the terminal B detects on the basis of the voltage mode signals from the central processing apparatus 10a that the activation terminal A sent the current mode signals (step L21 in Fig. 44-I), it stops the following return operation (step L23 in Fig. 44-I). More specifically, the terminal B does not send the current mode signal even if the fourth (24 bit) and subsequent bits are "1"s. For example, although the eighth bit (20 bit) of the activation terminal B is "1", a current mode signal at this timing is not output, as shown in Fig. 43B.

Thus, the central processing apparatus 10a can receive monitor data from only the activation terminal A which has the highest priority order (steps L25 through L32 in Fig. 44-I).

In the activation terminal B which stops the transmission processing, the retransmission flag upon stopping is set (step L23 in Fig. 44-I). When the normal mode start signal is output from the central processing apparatus 10a for the next time, the terminal B serves as the activation terminal having the highest priority order, and can transmit data to the central processing apparatus 10a, as shown in Fig. 43C.

As described in the eighth embodiment, the activation terminal B which stopped data transmission due to activation collision is caused to output a status signal, and the central processing apparatus is set in the normal mode on the basis of the status signal prior to the own activation data. Thus, the central processing apparatus can efficiently load the address and data of the activation terminal B early.

(Tenth Embodiment)

In the above embodiment, in the normal mode (terminal activation mode), even if an activation terminal of an address "0" transmits data "0", a central processing apparatus does not detect a current mode signal at all. In the tenth embodiment, transmission data from a terminal includes a control signal having at least one "1" bit indicating the presence of a signal.

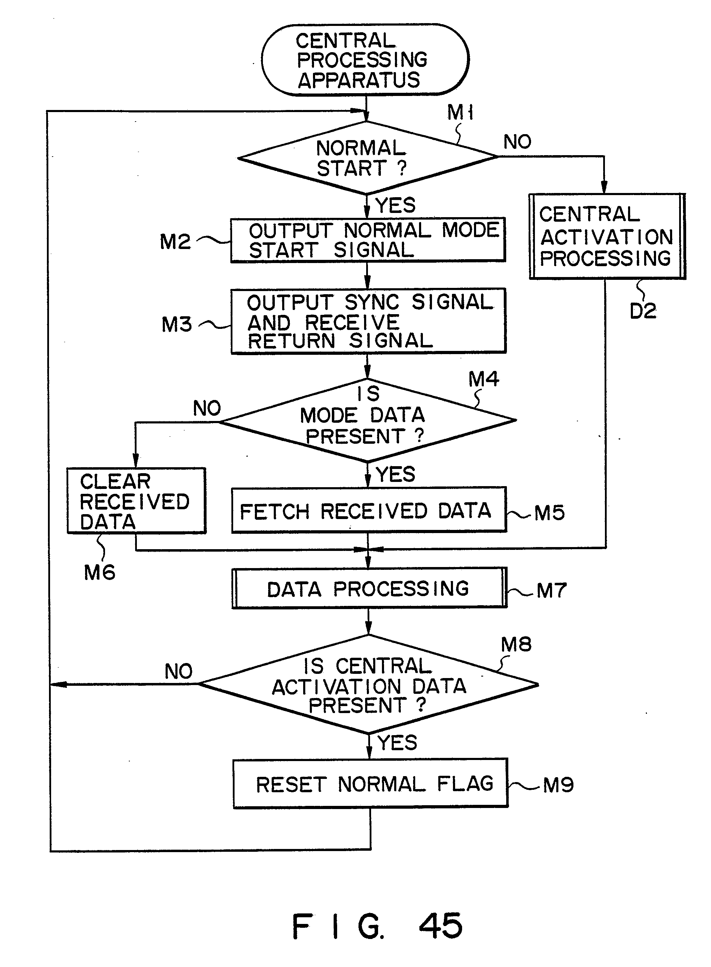

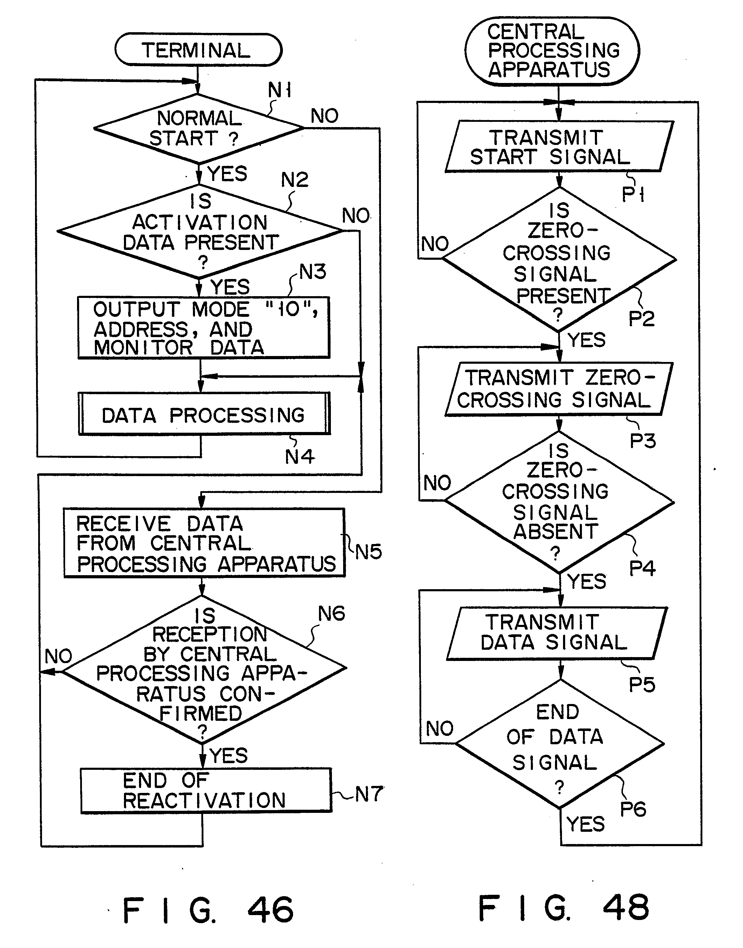

Figs. 45 and 46 are flow charts of the central processing apparatus 10 and each terminal 14 according to the tenth embodiment.

(10A. Operation of Central Processing Apparatus 10)

Referring to Fig. 45, the central processing apparatus 10 checks a normal mode flag in step M1. If the normal mode flag is set, normal mode processing in step M2 and the subsequent steps is executed. If the normal mode flag is reset, central activation processing (step D2 in Fig. 17) is executed.

(i) Normal Mode Processing

If the absence of activation data is determined in step M1, a normal mode start signal is transmitted in step M2. In step M3, a sync signal is transmitted, and current mode transmission data is received from a terminal in response to the sync signal. It is checked in step M4 if the received data includes mode data. If YES in step M4, received data is fetched in step M5, and the flow advances to step M7. However, if NO in step M4, the received data is cleared in step M6, and the flow then advances to step M7.

In step M7, a series of master station processing is executed. It is then checked in step M8 if central activation data is generated. If YES in step M8, the normal mode flag is reset in step M9, and the flow returns to step M1. If NO in step M8, the flow returns to step M1.

(10B. Operation of Terminal)

Referring to Fig. 46, the terminal 14 checks in step N1 if a normal mode start signal in a voltage mode is transmitted from the central processing apparatus 10. If the normal mode start signal is transmitted from the central processing apparatus 10 by the processing in step M2 in Fig. 45, the flow advances to step N2.

In step N2, the presence/absence of terminal activation data is checked. If NO in step N2, another processing is executed in step N4, and the flow returns to step N1.

If YES in step N2, a mode signal "10B" (binary data "10"), a self address, monitor data, and the like are transmitted in step N3, and processing in step N4 is executed. The flow returns to step N1.

If it is determined in step N1 that the normal mode start signal is not transmitted from the central processing apparatus 10, the flow advances to step N5. In step N5, data transmitted from the central processing apparatus in the voltage mode is received. In step N6, an acknowledge signal ACK is transmitted in a current mode, and whether or not the signal is normally transmitted is checked based on a voltage mode signal obtained by converting the current mode signal in the central processing apparatus. If YES in step N6, a retransmission flag is reset in step N7, and the flow returns to step N1. If NO in step N6, the flow advances to step N4 to execute the processing, and the flow then returns to step N1.

(Eleventh Embodiment)

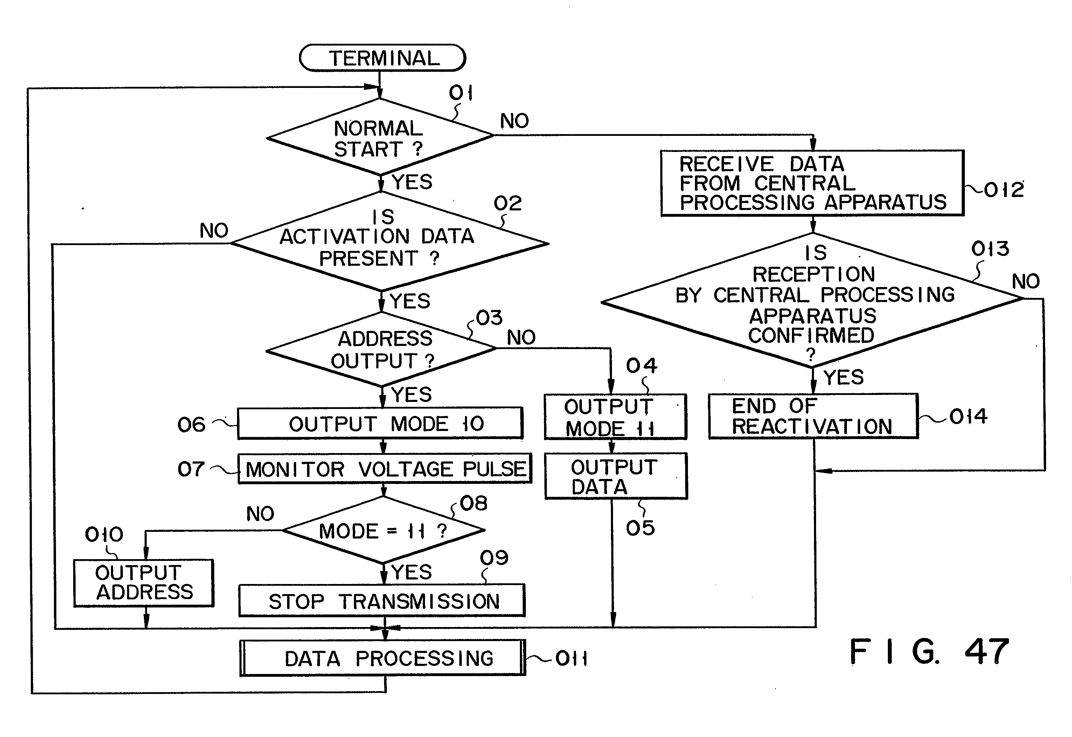

Fig. 47 is a flow chart of each terminal 14 according to an eleventh embodiment of the present invention. Note that the operation of a central processing apparatus is the same as that in the tenth embodiment, and a detailed description thereof will be omitted.

Referring to Fig. 47, the terminal 14 checks in step O1 if a normal mode start signal in a voltage mode is transmitted from the central processing apparatus 10. If the normal mode start signal is transmitted from the central processing apparatus 10 by the processing in step M2 in Fig. 45, the flow advances to step O2.

The presence/absence of terminal activation data is checked in step O2. If NO in step O2, processing in step O11 is executed, and the flow returns to step O1.

However, if YES in step O2, the presence/absence of an address output is checked in step O3. If NO in step O3, a mode signal "11B" is output in step O4, and terminal data is output in step O5. Thereafter, the processing in step O11 is executed, and the flow returns to step O1.

If YES in step O3, a mode signal "10B" is output in step O6. In step O7, a voltage pulse signal which is converted from a current mode signal by the central processing apparatus 10 and is output is monitored, and the mode signal is checked on the basis of the received voltage pulse in step O8. If the received mode signal is the mode signal "11B", since it is different from one transmitted in step O6, a transmission error is determined. Transmission is stopped in step O9, and the processing in step O11 is executed. The flow then returns to step O1.

If it is determined in step O8 that the received mode signal is not "11B", a self address is output in step O11, and the processing in step O11 is executed. Thereafter, the flow returns to step O1.

If it is determined in step O1 that no normal mode start signal is transmitted from the central processing apparatus 10, the flow advances to step O12. In step O12, data transmitted in the voltage mode from the central processing apparatus 10 is received. In step O13, the acknowledge signal ACK is transmitted in the current mode, and whether or not the signal is normally transmitted is checked on the basis of a voltage mode signal converted from the current mode signal in the central processing apparatus. If YES in step O13, the retransmission flag is reset in step O14; otherwise, the flow skips step O14. The flow then advances to step O11 to execute the processing, and the flow then returns to step O1.

(Twelfth Embodiment)

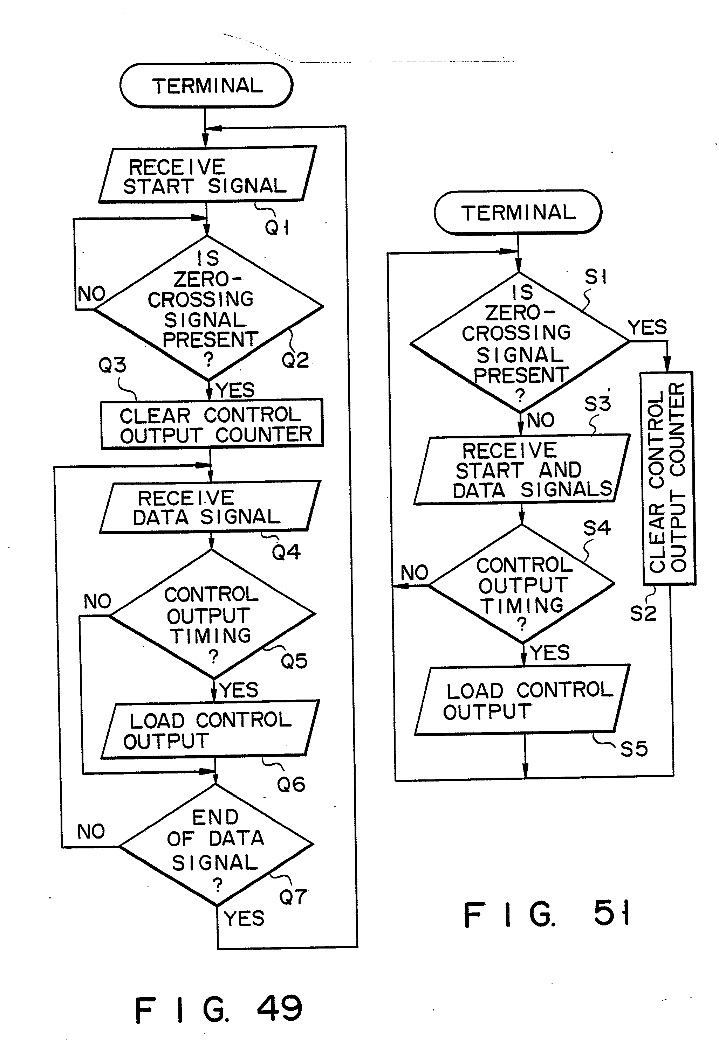

An operation of a system according to a twelfth embodiment of the present invention will now be described with reference to Figs. 1, 6, and 7, and flow charts shown in Figs. 48 and 49.

In a central processing apparatus 10 as a master station, a transmission signal generated by a sync signal generator 28 and the like is transmitted upon operation of a transmission switch (not shown) in step P1. After the lapse of a time (e.g., 1/3 or more of a transmission time band) long enough for each terminal 14 to recognize a start signal, an output from a zero-crossing detector 60 is checked in step P2. If YES in step P2, i.e., if a zero-crossing signal is detected, the zero-crossing signal is transmitted in step P3. It is then checked in step P4 if transmission of the zero-crossing signal is completed. If YES in step P4, a data signal including an address signal and a control signal is transmitted until it is determined in step P6 that transmission of the data signal is completed. Thereafter, the next data signal is transmitted. However, if another terminal is present, the flow returns to step P1.

When each terminal 14 receives a start signal in step Q1, the zero-crossing signal is detected by a zero-crossing signal detector 72 in step Q2. When the zero-crossing signal is detected, control data stored in a control output counter is temporarily cleared in step Q3 (the control output counter is not always necessary). After the data signal is received in step Q4, a control output timing is judged in step Q5 on the basis of the zero-crossing signal detected by the zero-crossing detector 60. If YES in step Q5, a control output signal according to the data signal is output to a monitor load in step Q6. In step Q7, end of the data signal is judged. If YES in step Q7, the flow returns to step Q1 to receive the start signal of the next data signal. However, if NO in step Q7, the flow returns to step Q4, and processing in steps Q4 through Q7 is repeated.

According to the twelfth embodiment, since the zero-crossing signal is generated during only the transmission time band of the start signal in the transmission signal, a transmission band of one transmission signal will not be prolonged.

(Thirteenth Embodiment)

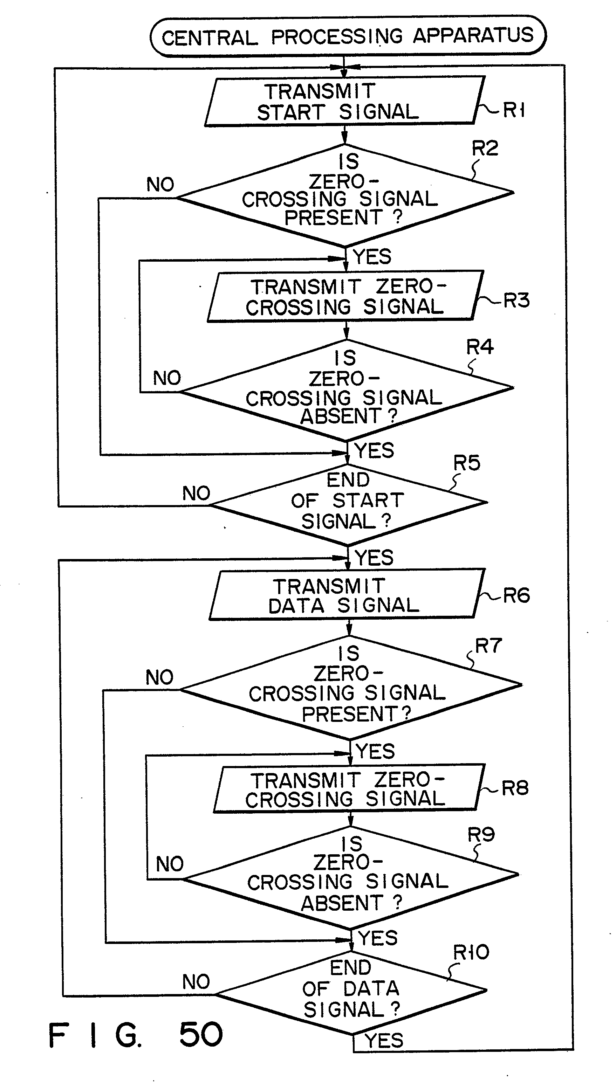

An operation of a system according to a thirteenth embodiment of the present invention will now be described with reference to Figs. 1, 6, and 7, and flow charts shown in Figs. 50 and 51.

In a central processing apparatus 10, when a start signal is output in step R1, the presence/absence of a zero-crossing signal is judged in step R2. If YES in step R2, the zero-crossing signal is transmitted in step R3. Thereafter, the presence/absence of the zero-crossing signal is judged in step R4. That is, the start signal is caused to temporarily stand by, and the zero-crossing signals are transmitted until YES is determined in step R4 (steps R1 through R4). If it is determined in step R5 that transmission of the start signal is completed, a data signal is transmitted in step R6. If it is determined in step R7 that the zero-crossing signal is present, the flow advances to step R8 to cause the data signal to temporarily stand by, and zero-crossing signals are transmitted until YES is determined in step R9 (steps R7 through R9). If YES in step R9, the flow advances to step R10 to check if transmission of the data signal is completed. If NO in step R10, the flow returns to step R6, and processing in steps R6 through R10 is repeated. If YES in step R10, the flow returns to step R1 to transmit the next start signal.

A terminal 14 judges the presence/absence of a zero-crossing signal in a transmission signal using a zero-crossing signal receiver 72 in step S1. If YES in step S1, the flow advances to step S2 to clear a control output counter.

If NO in step S1, a start data signal is received in step S3, and the flow then advances to step S4. In step S4, a control output timing is judged on the basis of zero-crossing signals detected by a zero-crossing detector 60. If YES in step S4, the flow advances to step S5, and a control output signal according to the data signal is output to a monitor load 82 up to the end of the data signal. The flow then returns to step S1 to detect a zero-crossing signal of the next data signal.

According to the thirteenth embodiment, zero-crossing signals are inserted every half wave of a commercial power source. A control output timing can be determined in accordance with the latest zero-crossing signal in a control output ready state after reception of a data signal is completed. Therefore, a control output timing can be more accurately determined than in the twelfth embodiment.

## Claims

1. A signal transmission system comprising a main processing apparatus for transmitting a transmission signal of predetermined bipolar pulses, which includes an address signal, a start signal, and a control signal, a pair of transmission lines connected to said main processing apparatus, and a plurality of terminals, connected to said transmission lines, for receiving the transmission signal from said main processing apparatus and returning a current mode signal to said main processing apparatus, characterized in that
said main processing apparatus (10) includes voltage inverting means for detecting a change in current mode signal output from said terminals ($14_1$, $14_2$, ...) and inverting the return request signal in the voltage mode every time the current mode signal changes.

2. A system according to claim 1, characterized by further comprising display means (16) for discriminating transmission signals from said terminals ($14_1$, $14_2$, ...) on the basis of the voltage mode on said transmission lines and displaying transmission contents.

3. A system according to claim 1, characterized in that each of said terminals ($14_1$, $14_2$, ...) transmits the current mode signal to be returned to said main processing apparatus (10) after a signal representing error data including a transmission error or non-transmission is added to an end portion of the current mode signal.

4. A system according to claim 1, characterized by further comprising load control means (82) which is coupled to each of said terminals ($14_1$, $14_2$, ...), and an output of which is controlled by the control signal included in the transmission signal, and characterized in that
said main processing apparatus (10) includes a zero-crossing signal detection unit (60) for detecting a zero-crossing signal from a power supply to be supplied, and a signal transmission unit (62) for transmitting the zero-crossing signal detected by said zero-crossing signal detection unit (60) onto said transmission lines (12) in synchronism with a predetermined timing of the transmission signal, and
each of said terminals ($14_1$, $14_2$, ...) includes a

zero-crossing signal reception unit (72) for receiving the zero-crossing signal included in the transmission signal, a control signal reception unit (36) for receiving the control signal, and a control signal output unit (38) for generating a load control signal on the basis of the control signal and the zero-crossing signal and outputting the load control signal to said load control means (82).

5. A system according to claim 1, characterized in that when return signals to said main processing apparatus (10) collide against each other due to a plurality of activation operations by said plurality of terminals (14₁, 14₂, ...) said main processing apparatus (10) detects the signal collision, and transmits a return request signal having a return period in which self addresses of the activation terminals (14₁, 14₂, ...) are returned in units of bits, and
each of the activation terminals (14₁, 14₂, ...) sequentially transmits the return signals during only the return period corresponding to a predetermined bit of "0" or "1" of a plurality of bits from a predetermined upper-bit or lower-bit direction of the self address, and detects activation of another terminal by detecting a return signal from said another terminal of said plurality of terminals (14₁, 14₂, ...) during a period in which the activation terminals (14₁, 14₂, ...) do not return the return signals.

6. A system according to claim 5, characterized in that when each of the activation terminals of said plurality of terminals (14₁, 14₂, ...) detects activation of said another terminal, the terminal stops a return operation of bits after the self address.

7. A system according to claim 5, characterized in that when each of the activation terminals of said plurality of terminals (14₁, 14₂, ...) does not detect activation of said another terminal after the return period for all the bits of the self address ends, the terminal returns monitor data for monitoring the terminal after the self address.

8. A system according to claim 6 or 7, characterized in that when each of the activation terminals of said plurality of terminals (14₁, 14₂, ...) detects activation of said another terminal and stops the return operation of bits after the self address, the terminal returns a status signal indicating that the terminal cannot normally perform the return operation as an end bit of return data including the self address.

9. A system according to claim 5, characterized in that each of the activation terminals of said plurality of terminals (14₁, 14₂, ...) has a mode signal accompanying signal transmission of at least one bit in the return signal.

10. A system according to claim 9, characterized in that said mode signal is provided at the beginning of the return signal.

11. A signal transmission system comprising a main processing apparatus for transmitting a transmission signal of predetermined bipolar pulses, which includes an address signal, a start signal, and a control signal, a pair of transmission lines connected to said main processing apparatus, and a plurality of terminals, connected to said transmission lines, for receiving the transmission signal from said main processing apparatus and returning a current mode signal to said main processing apparatus, characterized in that
said main processing apparatus (10) sends a return request signal to said terminals (14₁, 14₂, ...) in a voltage mode, sends at least one sync signal indicating a return timing during a signal return period from said terminals (14₁, 14₂, ...), detects a current mode signal which is returned in response to the return request signal and in synchronism with the sync signal, and inverts the return request signal in the voltage mode every time the current mode signal changes.

12. A system according to claim 11, characterized in that when said main processing apparatus (10) detects a change in current mode signal returned from said plurality of terminals (14₁, 14₂, ...), said main processing apparatus (10) inverts the output voltage mode to be delayed from the sync signal by a predetermined period of time.

13. A system according to claim 11, characterized in that when said main processing apparatus (10) detects a change in current mode signal returned from said plurality of terminals (14₁, 14₂, ...), said main processing apparatus (10) inverts the output voltage mode at a leading edge of the current mode signal.

14. A system according to claim 12, characterized in that said main processing apparatus (10) allows random responses from said plurality of terminals (14₁, 14₂, ...), and outputs, in the voltage mode, the return request signal and the sync signal taking a return timing when a terminal having a change in terminal monitor input following the return request signal returns a current mode signal.

15. A system according to claim 14, characterized in that said main processing apparatus (10) inverts the return request signal in the voltage mode every time transmission of the current mode signals returned from said plurality of terminals (14₁, 14₂, ...) is completed.

16. A signal transmission method for a signal transmission system constituted by connecting a main processing apparatus and a plurality of terminals to a pair of transmission lines, comprising the steps of transmitting, in a voltage mode, at least one sync signal representing a return timing during a return period of a return signal corresponding to a predetermined voltage mode transmission signal transmitted from said main processing apparatus and including an address signal, a start signal, and a control signal, detecting a current mode signal returned from said terminals in synchronism with the sync signal,
characterized by further comprising the step of: inverting a voltage mode output from said main processing apparatus (10) every time the current mode signal returned from said terminals ($14_1$, $14_2$, ...) changes.

17. A method according to claim 16, characterized in that the step of inverting the voltage mode includes the step of inverting the output voltage mode to be delayed from the sync signal by a predetermined period of time when a change in current mode signal returned from said plurality of terminals ($14_1$, $14_2$, ...) is detected.

18. A method according to claim 16, characterized in that the step of inverting the voltage mode includes the step of inverting the output voltage mode at a leading edge of the current mode when a change in current mode signal returned from said plurality of terminals ($14_1$, $14_2$, ...) is detected.

19. A method according to claim 17, characterized in that the step of transmitting the sync signal in the voltage mode includes the steps of allowing random responses from said plurality of terminals ($14_1$, $14_2$, ...), and outputting, in the voltage mode, the return request signal and the sync signal representing a return timing signal for causing a terminal having a change in terminal monitor input following the return request signal to return a current mode signal including a self address signal and a monitor signal.

20. A method according to claim 17, characterized in that the step of inverting the voltage mode includes the step of inverting the return request signal in the voltage mode after transmission of the current mode signals returned from said plurality of terminals ($14_1$, $14_2$, ...) is completed.

MONITOR
DISPLAY
PANEL ⌇ 16

10

CENTRAL
PROCESSING
APPARATUS

12

TERMINAL

TERMINAL

TERMINAL ---

14₁

14₂

14₃

# F I G. 1

32

10

12

18

SIGNAL
PROCESSOR

F/F ~30

DRIVER

22~

COLLISION
DETECTOR

DIFFERENTIATOR

CURRENT
DETECTOR

24

26

20

# F I G. 2

OV

ST

RTM

RPI

# F I G. 3A

OV

ST

RPV

ADR/CNT

RTM

# F I G. 3B

F I G. 4

F I G. 5

F I G. 6

TO TRANSMISSION LINES 12

DB10

R10

38

36

72

70

VDD    IN

OUT

IN

CPU

IN

OSC1  OSC2  GND

RESET

C10

74

SW10

82

TZ

TO LOAD

80

POWER SUPPLY

76

OUT

F I G. 7

EP 0 357 038 A2

TO TRANSMISSION
LINES 12

84

AC100V

POWER
SUPPLY

50

48

CPU

VDD

IN

OUT1

OUTx

OUTn

RESET

OSC1  OSC2  GND

86

C12

Tr 53₁

Tr 53x

Tr53n

LED 52₁

LED52x

LED52n

EP 0 357 038 A2

F I G. 8

FIG. 9

START

B1 — IS CENTRAL ACTIVATION SIGNAL PRESENT ?

NO

YES

B2 — RECEIVE DATA SIGNAL

B3 — END OF RECEPTION ?

NO

YES

B4 — TRANSMIT RETURN SIGNAL

B5 — TRANSMISSION DATA =VOLTAGE SIGNAL ?

NO

YES

B6 — END OF RETURN ?

NO

YES

B7 — IS ACTIVATION DATA PRESENT ?

NO

YES

B8 — TRANSMIT DATA

B9 — TRANSMISSION DATA =VOLTAGE SIGNAL ?

NO

YES

B10 — END OF TRANSMISSION ?

NO

YES

B11 — CANCEL ACTIVATION

F I G. 10

START

C1 — IS CENTRAL ACTIVATION SIGNAL PRESENT ? — NO

YES

C2 — DETECT SIGNAL FROM CENTRAL PROCESSING APPARATUS

C3 — DETECT RETURN SIGNAL FROM TERMINAL

C4 — ARE BOTH SIGNALS OK ? — NO

YES

C6 — TERMINAL ACTIVATION SIGNAL ? — NO

YES

C7 — DETECT TERMINAL TRANSMISSION SIGNAL

C8 — IS TERMINAL SIGNAL OK ? — NO

YES

C5 — DISPLAY CONTROL OUTPUT

F I G. 11

ST   RTM   ST

O

RPI

F I G. 12A

RPV

O

F I G. 12B

FIG. 13

FIG. 14

F I G. 15A

F I G. 15B

# F I G. 16

```
        CENTRAL PROCESSING
           APPARATUS
                │
                ▼
         ╱──────────╲  D1
    NO  ╱   NORMAL    ╲
◄──────╱    MODE ?     ╲
        ╲             ╱
         ╲───────────╱
                │ YES
                ▼
    ┌─────────────────────┐ D15
    │   OUTPUT NORMAL      │
    │  MODE START SIGNAL   │
    └─────────────────────┘
                │
                ▼
    ┌─────────────────────┐ D16
    │      m ◄── 1         │
    └─────────────────────┘
                │
                ▼
    ┌─────────────────────┐ D17
    │  OUTPUT mTH-BIT      │
    │   SYNC SIGNAL        │
    └─────────────────────┘
```

CENTRAL ACTIVATION PROCESSING — D2

D18 — RETURN SIGNAL ?  YES → D19 INVERT VOLTAGE PULSE → D20 JUDGE RETURN mTH-BIT = 1 → D21 IS RETURN SIGNAL ABSENT ?  NO / YES → D22 INVERT VOLTAGE PULSE

D18 NO → D23 RETURN TIME-UP ? NO → (loop back) / YES → D24 JUDGE RETURN mTH-BIT = 0

D25 m ◄── m + 1

D26 m = END OF ALL BITS ? NO → (loop) / YES

D27 OUTPUT SYNC SIGNAL

D28 IS DATA TO BE TRANSMITTED PRESENT ? YES → D29 SET NEW DATA → D30 RESET NORMAL FLAG / NO → D31 SET NORMAL FLAG

**CENTRAL ACTIVATION PROCESSING** — D2

**OUTPUT START, MODE, ADDRESS, AND CONTROL PULSES** — D3

$n \leftarrow 1$ — D4

**OUTPUT nTH-BIT SYNC SIGNAL** — D5

D6 — **IS RETURN SIGNAL PRESENT ?**
— YES → D7 **INVERT VOLTAGE PULSE**
— NO

D11 — **RETURN TIME-UP ?**
— NO
— YES → D12 **JUDGE RETURN nTH-BIT = 0**

D8 — **JUDGE RETURN nTH-BIT = 1**

D9 — **IS RETURN SIGNAL ABSENT ?**
— NO
— YES → D10 **INVERT VOLTAGE PULSE**

D13 — $n \leftarrow n + 1$

D14 — **n = END OF ALL BITS ?**
— NO
— YES

**RET**

# F I G. 17

TERMINAL

E1 — NORMAL MODE START SIGNAL ? — NO → E2 SIGNAL RETURN PROCESSING

YES

E12 — IS MONITOR INPUT CHANGED ? — NO

YES

E13 — SET SELF ADDRESS AND MONITOR DATA AS RETURN SIGNAL

E14 — $m \leftarrow 1$

E15 — IS SYNC SIGNAL RECEIVED ? — NO

YES

E16 — $m$TH-BIT RETURN SIGNAL = 1 ? — NO

YES

E17 — WAIT

E18 — OUTPUT RETURN SIGNAL

E19 — $m \leftarrow m + 1$

E20 — $m =$ END OF ALL BITS ? — NO

YES

F I G. 18

F I G. 19

**CENTRAL ACTIVATION PROCESSING**

OUTPUT TRANSMISSION DATA PULSES INCLUDING START SIGNAL, MODE SIGNAL, ADDRESS SIGNAL, AND CONTROL SIGNAL — D32

$n \leftarrow 1$ — D33

OUTPUT nTH-BIT SYNC SIGNAL — D34

D35 — IS RETURN SIGNAL PRESENT? — YES → D36

NO

D40 — RETURN TIME-UP? — NO

YES

D41 — JUDGE RETURN nTH-BIT = 0

D36 — INVERT VOLTAGE PULSE

D37 — JUDGE RETURN nTH-BIT = 1

D38 — IS RETURN SIGNAL ABSENT? — NO

YES

D39 — INVERT VOLTAGE PULSE

D42 — $n \leftarrow n+1$

D43 — n = END OF ALL BITS? — NO

YES

D44 — OUTPUT SYNC SIGNAL

D45 — nTH-BIT = 1? — YES

NO

D47 — RESET RETRANSMISSION FLAG

D46 — SET RETRANSMISSION FLAG

D48 — RETRANSMISSION? — NO → D49

YES

D50 — LEAVE PRESENT TRANSMISSION DATA

D49 — SET NEW TRANSMISSION DATA

**RET**

F I G. 20

SIGNAL RETURN PROCESSING

VOLTAGE PULSE

RECEPTION — E21

RECEPTION DATA ERROR ? — E22 — YES

NO

SELF ADDRESS ? — E23 — NO

YES — E24

SET RETURN nTH-BIT=1

SET RETURN nTH-BIT=0 — E31

n ← 1 — E25

CURRENT MODE

IS SYNC SIGNAL RECEIVED ? — E26 — NO

YES

nTH-BIT RETURN SIGNAL = 1 ? — E27 — NO

YES — E28

OUTPUT RETURN SIGNAL

n ← n + 1 — E29

n = END OF ALL BITS ? — E30 — NO

YES

RET

F I G. 21

F I G. 22

F I G. 23A

F I G. 23B

F I G. 24

F I G. 25A

F I G. 25B

START

IS CENTRAL ACTIVATION SIGNAL PRESENT ? — F1
— NO →

TRANSMIT TERMINAL ACTIVATION START AND SYNC SIGNALS — F11

YES ↓

TRANSMIT START AND DATA SIGNALS — F2

IS TERMINAL ACTIVATION PRESENT ? — F12 — NO

END OF TRANSMISSION ? — F3
NO

YES ↓

TRANSMIT SYNC SIGNAL — F4

F13 — TRANSMIT SYNC SIGNAL

RECEIVE RETURN SIGNAL — F5

F14 — RECEIVE TERMINAL DATA SIGNAL

IS RETURN SIGNAL PRESENT ? — F6
NO

NO — IS SIGNAL PRESENT ? — F15

YES ↓

F7 — INVERT TRANSMISSION VOLTAGE

YES ↓

INVERT TRANSMISSION VOLTAGE — F16

END OF RETURN ? — F8
NO

END OF SIGNAL RECEPTION ? — F17 — NO

YES ↓

IS RETURN DATA OK ? — F9
NO

YES ↓

CANCEL ACTIVATION — F10

YES

# F I G. 26

F I G. 27

SYNC PULSE

START

SLAVE TRANSMISSION PERIOD

18

ACTIVATION ENABLE

ZERO-CROSSING

START

# F I G. 28A

TRANSMISSION/RECEPTION
SWITCHING PERIOD

DESTINATION
ADDRESS

CONTROL
DATA

START

ACK

8

START

4    12    4    4    8    4

ZERO-
CROSSING

CONTROL    MODE    CHECK SUM

MODE    CH DESIGNATION

1    1

ERROR FLAG

RETURN FLAG

MASTER ACTIVATION

TRANSMISSION TIME

RETURN TIME

# F I G. 28B

EP 0 357 038 A2

START

ERROR FLAG
RETURN FLAG

MONITOR DATA
8

TRANSMISSION/RECEPTION
SWITCHING PERIOD

CHECK SUM
4

MONITOR CH
DESIGNATION
8

DUMMY
8

MASTER ACTIVATION

DESTINATION ADDRESS
12

MODE
4

TRANSMISSION TIME

START

ZERO-CROSSING

F I G. 28C

START

ERROR FLAG

RETURN FLAG
1

MONITOR DATA
8

TRANSMISSION/RECEPTION
SWITCHING PERIOD

CHECK SUM
4

CANCEL CH
DESIGNATION
8

DUMMY
8

MASTER ACTIVATION

DESTINATION ADDRESS
12

MODE
4

START

ZERO-CROSSING

F I G. 28D

START MODE DUMMY SELF ADDRESS START

2 4 12

ZERO-
CROSSING ACTIVATION
ENABLE

MODE CH DESIGNATION MONITOR DATA START

2 8 8

ZERO-
CROSSING ACTIVATION
ENABLE

EP 0 357 038 A2

F I G. 28E

F I G. 29A

600μs

100μs   50μs
200μs

F I G. 29B

50μs

F I G. 29C

100μs

100μs   300μs

500μs

F I G. 29D

50μs

F I G. 29E

100μs   400μs   200μs

EP 0 357 038 A2

F I G. 30

F I G. 3lA

F I G. 3lB

FIG.32

F I G. 33

F I G. 34

F I G. 35A

F I G. 35B

F I G. 35C

```
        ┌──────────────────────┐
        │  CENTRAL ACTIVATION  │
        │     PROCESSING       │
        └──────────┬───────────┘
                   │
        ┌──────────▼───────────┐
        │   OUTPUT START,      │
        │  MODE, ADDRESS,      │───D'3
        │  AND CONTROL PULSES  │
        └──────────┬───────────┘
                   │
           ┌───────▼────────┐
           │   n ◄── 1      │───D'4
           └───────┬────────┘
                   │
           ┌───────▼────────┐
           │ OUTPUT nTH-BIT │───D'5
           │  SYNC SIGNAL   │
           └───────┬────────┘
```

IS RETURN SIGNAL PRESENT ? — D'6   YES

JUDGE RETURN nTH-BIT=1 — D'8

NO

RETURN TIME-UP ? — D'11    NO

IS RETURN SIGNAL ABSENT ? — D'9    NO

YES

JUDGE RETURN nTH-BIT=0 — D'12

YES

INVERT VOLTAGE PULSE — D'10

n ◄── n+1 — D'13

n = END OF ALL BITS ? — D'14    NO

YES

RET

# F I G. 36

CENTRAL PROCESSING APPARATUS

J1 NORMAL MODE? — NO → CENTRAL ACTIVATION PROCESSING (D2)

YES

J2 OUTPUT NORMAL MODE START SIGNAL

J3 m ← 1

J4 IS RETURN SIGNAL PRESENT? — YES → J5 INVERT VOLTAGE PULSE

NO

J12 RETURN TIME-UP? — NO

YES

J6 JUDGE RETURN mTH-BIT = 1

J7 IS RETURN SIGNAL ABSENT? — NO

J13 JUDGE RETURN mTH-BIT = 0

YES

J14 m ← m+1

J8 IS COLLISION PRESENT? — NO → J10 RESET COLLISION FLAG

YES

J9 SET COLLISION FLAG

J15 m = END OF ALL BITS? — NO

YES

J11 INVERT VOLTAGE PULSE

J16 COLLISION FLAG = SET? — YES

NO

J17 FETCH RETURN DATA

J18 DATA PROCESSING

J20 SET RETURN REQUEST SIGNAL

J19 IS NEW TRANSMISSION DATA PRESENT? — YES → J21 RESET NORMAL FLAG

NO

J22 SET NORMAL FLAG

F I G. 37

TERMINAL

② ⟶ K1

NORMAL START? —— NO ⟶ ③

YES

K25 — IS MONITOR INPUT CHANGED? —— NO

YES

SET SELF ADDRESS RETURN DATA ~ K26

$\ell \leftarrow 1$ ~ K27

WAIT RETURN INTERVAL ~ K28

K29 — RETURN DATA = 1? —— NO

YES

K30 — RETURN

$\ell \leftarrow \ell + 1$ ~ K31

K32 — END OF OUTPUTTING OF $\ell$ BITS? —— NO

YES

SET MONITOR RETURN DATA ~ K33

②

① ⟶ ②

YES

END OF OUTPUTTING OF m BITS? —— NO

K38 — $m \leftarrow m + 1$ — K39

RETURN ~ K37

K36 — RETURN DATA = 1?

YES

NO

WAIT RETURN INTERVAL ~ K35

$m \leftarrow 1$ ~ K34

F I G. 38 - I

F I G. 38-II

```
                    ( 4 )
                      │
                      ▼
          ┌─────────────────────┐
          │   SET  MONITOR      │───── K16
          │   RETURN  DATA      │
          └─────────────────────┘
                      │
                      ▼
          ┌─────────────────────┐
          │       m ←── !       │───── K17
          └─────────────────────┘
                      │
                      ▼
   K18       ╱─────────────────╲
        ┌──╱       IS           ╲──── NO ──┐
        └─╲   SYNC  SIGNAL      ╱          │
            ╲   RECEIVED       ╱           │
             ╲      ?         ╱            │
              ╲─────────────╱              │
                     │ YES                 │
                     ▼                     │
   K19       ╱─────────────────╲           │
            ╱   IS  RETURN      ╲─ YES ─┐  │
            ╲    STOPPED        ╱       │  │
             ╲      ?          ╱        │  │
              ╲──────────────╱         │  │
                     │ NO              │  │
                     ▼                 │  │
          ┌─────────────────────┐      │  │
          │       WAIT          │─ K20 │  │
          └─────────────────────┘      │  │
                     │                 │  │
                     ▼                 │  │
                           K21         │  │
        ╱─────────────────╲            │  │
   NO ─╱    mTH - BIT = ! ? ╲          │  │
    │  ╲                    ╱          │  │
    │   ╲──────────────────╱           │  │
    │            │ YES                 │  │
    │            ▼                     │  │
    │   ┌─────────────────────┐        │  │
    │   │      RETURN         │─ K22   │  │
    │   └─────────────────────┘        │  │
    │            │                     │  │
    └────────────┼─────────────────────┘  │
                 ▼                         │
          ┌─────────────────────┐          │
          │     m ←── m + !     │─ K23     │
          └─────────────────────┘          │
                 │                         │
                 ▼     K24                 │
        ╱─────────────────╲                │
       ╱   m = END  OF     ╲── NO ─────────┘
       ╲    ALL  BITS ?    ╱
        ╲─────────────────╱
                 │ YES
                 ▼
               ( ! )
```

# F I G. 38 - III

F I G. 39A

SYNC SIGNAL

ADDRESS BIT DATA

F I G. 39 B

ADDRESS REQUEST MODE SIGNAL

STOP TRANSMISSION

BIT ⟶ $2^7$ $2^6$ $2^5$ $2^0$

MSB    LSB

SELF ADDRESS BIT RETURN PERIOD

F I G. 40

F I G. 41-I

EP 0 357 038 A2

F I G. 41-II

EP 0 357 038 A2

F I G. 42-I

F I G. 42-II

④

K16 —⟋ SET MONITOR
RETURN DATA

K17 —⟋ m ⟵ 1

K18 —⟋ IS
SYNC SIGNAL
RECEIVED
?  → NO

↓ YES

K19 —⟋ IS RETURN
STOPPED
?  → YES

↓ NO

WAIT —K20

K21
mTH-BIT = 1
?  NO

↓ YES

RETURN —K22

m ⟵ m + 1

K23

m = END OF
ALL BITS
?  → NO

↓ YES
K24

K41
STATUS
FLAG ?  NO

↓ YES

RESET
STATUS FLAG —K42

IS
SYNC SIGNAL
RECEIVED
?  → NO
K43

↓ YES

WAIT —K44

RETURN —K45

⑤

F I G. 42-Ⅲ

SYNC
SIGNAL

ADDRESS REQUEST MODE SIGNAL

# F I G. 43A

STATUS SET

ADDRESS
REQUEST
MODE

$2^7$  $2^6$  $2^5$  $2^0$  STATUS

ADDRESS BIT DATA

# F I G. 43B

ADDRESS
REQUEST
MODE

$2^7$  $2^6$  $2^5$  $2^0$  STATUS

# F I G. 43C

# F I G. 44-I

TERMINAL

NORMAL START ? — L1 — NO → ①

YES

IS MONITOR INPUT CHANGED ? — L14 — NO →

YES

SET SELF ADDRESS RETURN DATA — L15

$\ell \leftarrow 1$ — L16

IS SYNC SIGNAL RECEIVED ? — NO

YES — L17

WAIT — L18

$\ell$TH-BIT = 1 ? — NO

YES — L19

RETURN — L20

IS VOLTAGE PULSE INVERTED ? — L21 — NO

$\ell \leftarrow \ell + 1$ — L22

$\ell$ = ALL BITS ? — L24 — NO

YES — L23

STOP RETURN AND SET REACTIVATION FLAG

YES — L25

SET MONITOR RETURN DATA

$m \leftarrow 1$ — L26

IS SYNC SIGNAL RECEIVED ? — L27 — NO

YES

WAIT — L28

$m$TH-BIT = 1 ? — L29 — NO

YES

RETURN — L30

$m \leftarrow m + 1$ — L31

$m$ = ALL BITS ? — L32 — NO

YES → ②

① ──────

RECEIVE START, MODE,
ADDRESS, AND CONTROL DATA ~L2

INPUT ADDRESS =
SELF ADDRESS
? L3

NO

YES

SET RETURN DATA ~L4

$n \leftarrow 1$ ~L5

IS SYNC
SIGNAL RECEIVED
? L6

NO

YES

WAIT ~L7

$n$TH–BIT = 1 ? L8

NO

YES

RETURN ~L9

$n \leftarrow n + 1$ ~L10

$n$= ALL BITS ? L11

NO

YES

IS
RECEPTION BY
CENTRAL PROCESSING
APPARATUS
CONFIRMED
? L12

NO

YES

END OF
(RE) TRANSMISSION ~L13

②

F I G. 44-Ⅱ

F I G. 45

TERMINAL

NORMAL START ? — N1 — NO

↓ YES

IS ACTIVATION DATA PRESENT ? — N2 — NO

↓ YES

OUTPUT MODE "10", ADDRESS, AND MONITOR DATA — N3

DATA PROCESSING — N4

RECEIVE DATA FROM CENTRAL PROCESSING APPARATUS — N5

IS RECEPTION BY CENTRAL PROCESSING APPARATUS CONFIRMED ? — N6 — NO

↓ YES

END OF REACTIVATION — N7

F I G. 46

CENTRAL PROCESSING APPARATUS

TRANSMIT START SIGNAL

IS ZERO-CROSSING SIGNAL PRESENT ? — P1 / P2 — NO

↓ YES

TRANSMIT ZERO-CROSSING SIGNAL — P3

IS ZERO-CROSSING SIGNAL ABSENT ? — P4 — NO

↓ YES

TRANSMIT DATA SIGNAL — P5

END OF DATA SIGNAL ? — P6 — NO

↓ YES

F I G. 48

EP 0 357 038 A2

FIG. 47

TERMINAL

RECEIVE
START SIGNAL        Q1

IS
ZERO-
CROSSING
SIGNAL
PRESENT
?                   Q2

NO

Q3

YES

CLEAR CONTROL
OUTPUT COUNTER

RECEIVE
DATA SIGNAL         Q4

CONTROL
OUTPUT
TIMING
?                   Q5

NO

YES

LOAD CONTROL
OUTPUT              Q6

END
OF DATA
SIGNAL
?                   Q7

NO

YES

F I G. 49

TERMINAL

IS
ZERO-
CROSSING
SIGNAL
PRESENT
?                   S1

YES

NO

CLEAR CONTROL
OUTPUT COUNTER

S2

RECEIVE
START AND
DATA SIGNALS        S3

CONTROL
OUTPUT
TIMING
?                   S4

NO

YES

LOAD CONTROL
OUTPUT              S5

F I G. 51

( CENTRAL PROCESSING APPARATUS )

TRANSMIT
START SIGNAL — R1

IS
ZERO-
CROSSING SIGNAL
PRESENT ?  R2

NO

YES

TRANSMIT ZERO-
CROSSING SIGNAL — R3

IS
ZERO-
CROSSING SIGNAL
ABSENT ?  R4

NO

YES

END
OF START
SIGNAL ?  R5

NO

YES

TRANSMIT
DATA SIGNAL — R6

IS
ZERO-
CROSSING SIGNAL
PRESENT ?  R7

NO

YES

TRANSMIT ZERO-
CROSSING SIGNAL — R8

IS
ZERO-
CROSSING SIGNAL
ABSENT ?  R9

NO

YES

END
OF DATA
SIGNAL ?  R10

NO

YES

F I G.  50